# EUROPEAN PATENT APPLICATION

(11) **EP 4 712 376 A1**
(43) Date of publication of application: **18.03.2026**
(21) Application number: 24838650.0
(22) Date of filing: 02.07.2024
(51) Int. Cl.: H04L 1/00

(54) **MODULATION AND CODING SCHEME INDICATION METHOD AND CORRESPONDING APPARATUS**

(30) Priority: 07.07.2023 CN 202310838558
(71) Applicant: Huawei Technologies Co., Ltd., Shenzhen, Guangdong 518129 (CN)
(72) Inventor: YU, Jian, Shenzhen, Guangdong 518129 (CN); GONG, Bo, Shenzhen, Guangdong 518129 (CN); HU, Mengshi, Shenzhen, Guangdong 518129 (CN); GAN, Ming, Shenzhen, Guangdong 518129 (CN)
(74) Representative: Pfenning, Meinig & Partner mbB
(86) International application number: PCT/CN2024/103210
(87) International publication number: WO 2025/011395

(57) **Abstract**

Embodiments of this application disclose a modulation and coding scheme indication method and a corresponding apparatus. This application is applied to a wireless local area network system that supports one or more of a next-generation Wi-Fi protocol of IEEE 802.11ax (for example, 802.11be, Wi-Fi 7, or EHT), a next-generation Wi-Fi protocol of IEEE 802.11be (for example, 802.11bn, Wi-Fi 8, or UHR), Wi-Fi AI, a millimeter wave (mmWave), an ultra wideband (UWB), and sensing (sensing). The method includes: generating a trigger frame, where the trigger frame includes a first field and a second field, the first field indicates a first MCS group used by a PPDU sent by a first device, and the second field indicates a number of spatial streams corresponding to one or more MCSs in the first MCS group; and sending the trigger frame. This can reduce bit overheads.

## Description

This application claims priority to Chinese Patent Application No. 202310838558.6, filed with the China National Intellectual Property Administration on July 7, 2023 and entitled "MODULATION AND CODING SCHEME INDICATION METHOD AND CORRESPONDING APPARATUS", which is incorporated herein by reference in its entirety.

### TECHNICAL FIELD

This application relates to the communication field, and in particular, to a modulation and coding scheme indication method and a corresponding apparatus.

### BACKGROUND

A wireless local area network (wireless local area network, WLAN) starts from the 802.11a/b/g standard, and evolves from the 802.11n standard, the 802.11ac standard, the 802.11ax standard, to the 802.11be standard that is still under discussion. In the 802.11a/b/g standard, only a single spatial stream is supported, and multiple-input multiple-output (multiple-input multiple-output, MIMO) transmission is not supported. In the 802.11n standard, MIMO of a maximum of four space-time streams is supported. Each space-time stream may use a different modulation and coding scheme (modulation and coding scheme, MCS), to adapt to signal-to-noise ratios (signal-to-noise ratio, SNR) of different space-time streams. This manner is referred to as unequal (unequal) modulation (unequal modulation, UEQM). The space-time streams (space-time streams) consider both different spatial streams (spatial stream) and space-time block coding (space-time block coding, STBC) in a time dimension. When a transmitter does not use the STBC, the space-time stream may also be referred to as the spatial stream.

Nowadays, more and more terminals use two antennas or even four antennas. An access point (access point, AP) and a non-AP station (non-AP STA) may use more antennas to perform MIMO communication with a larger number of spatial streams, and the unequal modulation becomes more important. Compared with the 802.11n standard, a current standard considers more spatial streams and more modulation and coding schemes.

A manner used in the 802.11n standard to indicate both a spatial stream and an MCS corresponding to the spatial stream is applicable to a case in which there are a small number of spatial streams and a small number of MCS types. When a maximum number of spatial streams may be eight or more, and a maximum modulation scheme may be 4096 QAM or more, signaling overheads in this manner increase exponentially. Therefore, how to implement, by using a small number of bits (overheads), different MCSs used by a plurality of spatial streams needs to be studied.

### SUMMARY

Embodiments of this application disclose a modulation and coding scheme indication method and a corresponding apparatus, to implement, by using a small number of bits (overheads), different MCSs used by a plurality of spatial streams.

According to a first aspect, an embodiment of this application provides a modulation and coding scheme indication method. The method includes: generating a trigger frame, where the trigger frame is used to trigger a first device to send a physical layer protocol data unit (physical layer protocol data unit, PPDU), the trigger frame includes a first field and a second field, the first field indicates a first modulation and coding scheme (modulation and coding scheme, MCS) group used by the PPDU sent by the first device, and the second field indicates a number of spatial streams corresponding to one or more MCSs in the first MCS group; and sending the trigger frame.

In this embodiment of this application, the trigger frame includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

According to a second aspect, an embodiment of this application provides another modulation and coding scheme indication method. The method includes: receiving a trigger frame, where the trigger frame is used to trigger a first device to send a PPDU, the trigger frame includes a first field and a second field, the first field indicates a first MCS group used by the PPDU sent by the first device, and the second field indicates a number of spatial streams corresponding to one or more MCSs in the first MCS group; and sending the PPDU on a spatial stream of the first device, where indicated MCSs in the first MCS group are used on different spatial streams.

In this embodiment of this application, the trigger frame includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

In a possible implementation of the first aspect or the second aspect, the second field indicates a spatial stream boundary corresponding to any MCS in the first MCS group.

In this implementation, the second field indicates the spatial stream boundary corresponding to the any MCS in the first MCS group. Therefore, a number of spatial streams corresponding to the any MCS in the first MCS group may be indicated by using a small number of bits.

In a possible implementation of the first aspect or the second aspect, the second field further indicates a total number of spatial streams corresponding to the first MCS group.

In this implementation, the second field further indicates the total number of spatial streams corresponding to the first MCS group, and the total number of spatial streams corresponding to the first MCS group does not need to be indicated by using another field. This can reduce bit overheads.

In a possible implementation of the first aspect or the second aspect, a number of spatial streams that correspond to a same MCS and that are indicated by the second field is less than or equal to a first threshold, and the first threshold is a positive integer less than 8.

If the number of spatial streams corresponding to the same MCS exceeds the first threshold, EQM may be used, or two MCSs may be used for replacement. Therefore, the number of spatial streams corresponding to the same MCS needs to be limited to being less than or equal to the first threshold.

In a possible implementation of the first aspect or the second aspect, when a value indicated by the second field is a first index, the second field indicates a number of spatial streams corresponding to one MCS in the first MCS group; or when a value indicated by the second field is a second index, the second field indicates a number of spatial streams corresponding to a plurality of MCSs in the first MCS group.

When the second field indicates the number of spatial streams corresponding to the one MCS in the first MCS group, each spatial stream indicated by the second field uses the MCS. In other words, when the second field indicates the number of spatial streams corresponding to the one MCS in the first MCS group, the second field further implicitly indicates equal modulation (equal modulation, EQM). When the second field indicates the number of spatial streams corresponding to the plurality of MCSs in the first MCS group, at least two spatial streams indicated by the second field use different MCSs. In other words, when the second field indicates the number of spatial streams corresponding to the plurality of MCSs in the first MCS group, the second field further implicitly indicates unequal modulation (unequal modulation, UEQM). The unequal modulation may be referred to as modulating unequally. It may be understood that the second field may implicitly indicate the EQM, or may implicitly indicate the UEQM, and the PPDU does not need to carry a field indicating whether a user uses the EQM or the UEQM. This can reduce overheads.

In a possible implementation of the first aspect or the second aspect, the trigger frame further includes a third field, and the third field indicates that a modulation scheme of the PPDU is the unequal modulation or the equal modulation.

In this implementation, the trigger frame further includes the third field indicating the unequal modulation or the equal modulation, so that the first device parses the trigger frame in the corresponding manner based on the third field.

In a possible implementation of the first aspect or the second aspect, the trigger frame includes a first user field and a second user field, the first user field is associated with a first user, the second user field is associated with a second user, the first user field includes the first field and the second field, the second user field includes a fourth field and a fifth field, the fourth field indicates a number of spatial streams of the second user, the fifth field indicates a same MCS used by all spatial streams of the second user, and a length of the first user field is equal to a length of the second user field.

In this implementation, the trigger frame includes the first user field and the second user field, and the length of the first user field is equal to the length of the second user field. An operation of parsing a plurality of user fields with an equal length is simpler than an operation of parsing a plurality of user fields with unequal lengths. This can improve efficiency of parsing the user field.

According to a third aspect, an embodiment of this application provides another modulation and coding scheme indication method. The method includes: generating a trigger frame, where the trigger frame is used to trigger one or more first devices to send a PPDU, the trigger frame includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user; and sending the trigger frame. For example, the sixth field indicates the number of spatial streams used by the third user to send the PPDU triggered by the trigger frame, and the seventh field indicates the MCS used by each spatial stream of the third user when the third user sends the PPDU triggered by the trigger frame.

In this embodiment of this application, the seventh field indicates the MCS used by each spatial stream of the third user, and the MCS that is used by the spatial stream and that is indicated by the seventh field is related to the number of spatial streams of the third user. Signaling overheads are lower compared with those of indicating, by using one index, an MCS used by each spatial stream under different numbers of spatial streams.

According to a fourth aspect, an embodiment of this application provides another modulation and coding scheme indication method. The method includes: receiving a trigger frame, where the trigger frame is used to trigger one or more first devices to send a PPDU, the trigger frame includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user; and sending the PPDU, where the MCS used by the spatial stream of the third user is used when the PPDU is sent.

In this embodiment of this application, the seventh field indicates the MCS used by each spatial stream of the third user, and the MCS that is used by the spatial stream and that is indicated by the seventh field is related to the number of spatial streams of the third user. Signaling overheads are lower compared with those of indicating, by using one index, an MCS used by each spatial stream under different numbers of spatial streams.

In a possible implementation of the third aspect or the fourth aspect, a difference between a highest MCS index and a lowest MCS index that are used by the spatial stream and that are indicated by the seventh field is less than or equal to a second threshold, and the second threshold is a positive integer less than 10.

When the difference between the highest MCS index and the lowest MCS index that are used by the spatial stream and that are indicated by the seventh field is less than or equal to the second threshold, a throughput gain brought by a lowest MCS is not obvious. The difference between the highest MCS index and the lowest MCS index that are used by the spatial stream and that are indicated by the seventh field is limited to be less than or equal to the second threshold, so that implementation complexity of the first device can be reduced.

In a possible implementation of the third aspect or the fourth aspect, the MCS that is used by the spatial stream and that is indicated by the seventh field is a supported MCS under an equal modulation scheme.

In this implementation, the MCS that is used by the spatial stream and that is indicated by the seventh field is a supported MCS under the equal modulation scheme, so that implementation complexity of the second device and the first device can be reduced.

In a possible implementation of the third aspect or the fourth aspect, at least two spatial streams indicated by the seventh field indicates use different MCSs.

In this implementation, MCSs used by different spatial streams may be indicated by using a small number of bits.

In a possible implementation of the third aspect or the fourth aspect, when a value indicated by the seventh field is a third index, the seventh field indicates the same MCS used by all the spatial streams of the third user; or when a value indicated by the seventh field is a fourth index, the at least two spatial streams indicated by the seventh field use different MCSs.

In this implementation, the seventh field may indicate UEQM, or may indicate EQM. The trigger frame does not need to carry a field indicating whether a user uses the EQM or the UEQM. This can reduce overheads.

In a possible implementation of the third aspect or the fourth aspect, the trigger frame further includes an eighth field, and the eighth field indicates the unequal modulation or the equal modulation.

In this implementation, the trigger frame further includes the eighth field indicating the unequal modulation or the equal modulation, so that the first device parses the trigger frame in the corresponding manner based on the eighth field.

In a possible implementation of the third aspect or the fourth aspect, the trigger frame includes a third user field and a fourth user field, the third user field is associated with the third user, the fourth user field is associated with a fourth user, the seventh field included in the third user field indicates that the at least two spatial streams of the third user use different MCSs, a seventh field included in the fourth user field indicates that all spatial streams of the fourth user use a same MCS, and a length of the third user field is equal to a length of the fourth user field.

In this implementation, the trigger frame includes the third user field and the fourth user field, and the length of the third user field is equal to the length of the fourth user field. An operation of parsing a plurality of user fields with an equal length is simpler than an operation of parsing a plurality of user fields with unequal lengths. This can improve efficiency of parsing the user field.

According to a fifth aspect, an embodiment of this application provides another modulation and coding scheme indication method. The method includes: generating a trigger frame, where the trigger frame is used to trigger one or more first devices to send a PPDU, the trigger frame includes a ninth field, and the ninth field indicates a number of spatial streams of a fifth user and an MCS used by each spatial stream of the fifth user; and sending the trigger frame. For example, the ninth field indicates the number of spatial streams used by the fifth user to send the PPDU triggered by the trigger frame and the MCS used by each spatial stream of the fifth user when the fifth user sends the PPDU triggered by the trigger frame.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

According to a sixth aspect, an embodiment of this application provides another modulation and coding scheme indication method. The method includes: receiving a trigger frame, where the trigger frame is used to trigger one or more first devices to send a PPDU, the trigger frame includes a ninth field, and the ninth field indicates a number of spatial streams of a fifth user and an MCS used by each spatial stream of the fifth user; and sending the PPDU, where the MCS used by each spatial stream of the fifth user is used when the PPDU is sent.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

In a possible implementation of the fifth aspect or the sixth aspect, when a value indicated by the ninth field is a fifth index, the ninth field indicates the number of spatial streams of the fifth user and a same MCS used by all the spatial streams of the fifth user; or when a value indicated by the ninth field is a sixth index, the ninth field indicates the number of spatial streams of the fifth user and the MCS used by each spatial stream of the fifth user, where MCSs used by at least two spatial streams indicated by the ninth field are different.

In this implementation, the ninth field may indicate UEQM, or may indicate EQM. The trigger frame does not need to carry a field indicating whether a user uses the EQM or the UEQM. This can reduce overheads.

In a possible implementation of the fifth aspect or the sixth aspect, the trigger frame includes a fifth user field and a sixth user field, the fifth user field is associated with the fifth user, the sixth user field is associated with a sixth user, the ninth field included in the fifth user field indicates the number of spatial streams of the fifth user and the same MCS used by all the spatial streams of the fifth user, a ninth field included in the sixth user field indicates a number of spatial streams of the sixth user and an MCS used by each spatial stream of the sixth user, MCSs used by at least two spatial streams indicated by the ninth field included in the sixth user field are different, and a length of the fifth user field is equal to a length of the sixth user field.

In this implementation, the trigger frame includes the fifth user field and the sixth user field, and the length of the fifth user field is equal to the length of the sixth user field. An operation of parsing a plurality of user fields with an equal length is simpler than an operation of parsing a plurality of user fields with unequal lengths. This can improve efficiency of parsing the user field.

According to a seventh aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a trigger frame, where the trigger frame is used to trigger a first device to send a PPDU, the trigger frame includes a first field and a second field, the first field indicates a first MCS group used by the PPDU sent by the first device, and the second field indicates a number of spatial streams corresponding to one or more MCSs in the first MCS group. The transceiver module is configured to send the trigger frame.

In this embodiment of this application, the trigger frame includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

For possible implementations of the communication apparatus in the seventh aspect, refer to the possible implementations of the first aspect.

For technical effects brought by the possible implementations of the seventh aspect, refer to the descriptions of the technical effects of the first aspect or the possible implementations of the first aspect.

According to an eighth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a trigger frame, where the trigger frame is used to trigger a first device to send a PPDU, the trigger frame includes a first field and a second field, the first field indicates a first MCS group used by the PPDU sent by the first device, and the second field indicates a number of spatial streams corresponding to one or more MCSs in the first MCS group. The processing module is configured to generate the PPDU. The transceiver module is further configured to send the PPDU on a spatial stream of the first device, where indicated MCSs in the first MCS group are used on different spatial streams.

In this embodiment of this application, the trigger frame includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

For possible implementations of the communication apparatus in the eighth aspect, refer to the possible implementations of the second aspect.

For technical effects brought by the possible implementations of the eighth aspect, refer to the descriptions of the technical effects of the second aspect or the possible implementations of the second aspect.

According to a ninth aspect, an embodiment of this application provides a communication apparatus. The communication apparatus has a function of implementing behavior in the method embodiment in the third aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a trigger frame, where the trigger frame is used to trigger one or more first devices to send a PPDU, the trigger frame includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user. The transceiver module is configured to send the trigger frame.

In this embodiment of this application, the seventh field indicates the MCS used by each spatial stream of the third user, and the MCS that is used by the spatial stream and that is indicated by the seventh field is related to the number of spatial streams of the third user. Signaling overheads are lower compared with those of indicating, by using one index, an MCS used by each spatial stream under different numbers of spatial streams.

For possible implementations of the communication apparatus in the ninth aspect, refer to the possible implementations of the third aspect.

For technical effects brought by the possible implementations of the ninth aspect, refer to the descriptions of the technical effects of the third aspect or the possible implementations of the third aspect.

According to a tenth aspect, an embodiment of this application provides a communication apparatus. The communication apparatus has a function of implementing behavior in the method embodiment in the fourth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a trigger frame, where the trigger frame is used to trigger one or more first devices to send a PPDU, the trigger frame includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user. The processing module is configured to generate the PPDU. The transceiver module is further configured to send the PPDU, where the MCS used by the spatial stream of the third user is used when the PPDU is sent.

For possible implementations of the communication apparatus in the tenth aspect, refer to the possible implementations of the fourth aspect.

For technical effects brought by the possible implementations of the tenth aspect, refer to the descriptions of the technical effects of the fourth aspect or the possible implementations of the fourth aspect.

According to an eleventh aspect, an embodiment of this application provides a communication apparatus. The communication apparatus has a function of implementing behavior in the method embodiment in the fifth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a trigger frame, where the trigger frame is used to trigger one or more first devices to send a PPDU, the trigger frame includes a ninth field, and the ninth field indicates a number of spatial streams of a fifth user and an MCS used by each spatial stream of the fifth user. The transceiver module is configured to send the trigger frame.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

For possible implementations of the communication apparatus in the eleventh aspect, refer to the possible implementations of the fifth aspect.

For technical effects brought by the possible implementations of the eleventh aspect, refer to the descriptions of the technical effects of the fifth aspect or the possible implementations of the fifth aspect.

According to a twelfth aspect, an embodiment of this application provides a communication apparatus. The communication apparatus has a function of implementing behavior in the method embodiment in the sixth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a trigger frame, where the trigger frame is used to trigger one or more first devices to send a PPDU, the trigger frame includes a ninth field, and the ninth field indicates a number of spatial streams of a fifth user and an MCS used by each spatial stream of the fifth user. The processing module is configured to generate the PPDU. The transceiver module is further configured to send the PPDU, where the MCS used by each spatial stream of the fifth user is used when the PPDU is sent.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

For possible implementations of the communication apparatus in the twelfth aspect, refer to the possible implementations of the sixth aspect.

For technical effects brought by the possible implementations of the twelfth aspect, refer to the descriptions of the technical effects of the sixth aspect or the possible implementations of the sixth aspect.

According to a thirteenth aspect, an embodiment of this application provides another communication apparatus. The communication apparatus includes a processor, the processor is coupled to a memory, the memory stores computer program instructions, and the processor is configured to execute the computer program instructions, so that the communication apparatus performs the method according to any one of the first aspect to the sixth aspect. For example, the communication apparatus may be a chip, the processor is a processing unit in the chip, and the memory is a random access memory or a cache in the chip.

In this embodiment of this application, in a process of performing the method, a process of sending information (or a signal) in the method may be understood as a process of outputting information according to instructions of the processor. When the information is output, the processor outputs the information to a transceiver, so that the transceiver transmits the information. After the information is output by the processor, other processing may need to be performed on the information, and then processed information reaches the transceiver. Similarly, when the processor receives input information, the transceiver receives the information, and inputs the information into the processor. Further, after the transceiver receives the information, other processing may need to be performed on the information, and then processed information is input into the processor.

An operation such as sending and/or receiving related to the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor, that executes computer instructions in the memory to perform these methods. For example, the processor may be further configured to execute a program stored in the memory. When the program is executed, the communication apparatus is enabled to perform the method shown in any one of the first aspect or the possible implementation of the first aspect.

In a possible implementation, the memory is located outside the communication apparatus. In a possible implementation, the memory is located in the communication apparatus.

In a possible implementation, the processor and the memory may be alternatively integrated into one component. In other words, the processor and the memory may be alternatively integrated together.

In a possible implementation, the communication apparatus further includes the transceiver. The transceiver is configured to: receive a signal, send a signal, or the like.

According to a fourteenth aspect, an embodiment of this application provides another communication apparatus. The communication apparatus includes a processing circuit and an interface circuit. The interface circuit is configured to obtain data or output data, and the processing circuit is configured to perform the method according to any one of the first aspect to the sixth aspect.

According to a fifteenth aspect, an embodiment of this application provides a computer-readable storage medium. The computer-readable storage medium stores a computer program, and the computer program includes program instructions. When the program instructions are executed, a computer is enabled to perform the method according to any one of the first aspect to the sixth aspect.

According to a sixteenth aspect, an embodiment of this application provides a computer program product. The computer program product includes a computer program, and the computer program includes program instructions. When the program instructions are executed, a computer is enabled to perform the method according to any one of the first aspect to the sixth aspect.

According to a seventeenth aspect, an embodiment of this application provides a communication system, including the communication apparatus according to any one of the seventh aspect or the possible implementations of the seventh aspect and the communication apparatus according to any one of the eighth aspect or the possible implementations of the eighth aspect.

According to an eighteenth aspect, an embodiment of this application provides a communication system, including the communication apparatus according to any one of the ninth aspect or the possible implementations of the ninth aspect and the communication apparatus according to any one of the tenth aspect or the possible implementations of the tenth aspect.

According to a nineteenth aspect, an embodiment of this application provides a communication system, including the communication apparatus according to any one of the eleventh aspect or the possible implementations of the eleventh aspect and the communication apparatus according to any one of the twelfth aspect or the possible implementations of the twelfth aspect.

According to a twentieth aspect, an embodiment of this application provides a chip, including a processor and a communication interface. The processor reads, through the communication interface, instructions stored in a memory, to perform the method shown in any one of the first aspect to the sixth aspect.

### BRIEF DESCRIPTION OF DRAWINGS

To describe technical solutions in embodiments of this application or in the background more clearly, the following briefly describes accompanying drawings for describing embodiments of this application or the background.
FIG. 1 is an example of a wireless communication system to which the technical solutions provided in this application are applicable;
FIG. 2 is an interaction flowchart of a modulation and coding scheme indication method according to an embodiment of this application;
FIG. 3 is an example of a format of a user information field in a trigger frame according to an embodiment of this application;
FIG. 4 is an example of a format of a user information list field in a trigger frame according to an embodiment of this application;
FIG. 5 is another example of a format of a user information list field in a trigger frame according to an embodiment of this application;
FIG. 6 is another example of a format of a user information list field in a trigger frame according to an embodiment of this application;
FIG. 7A and FIG. 7B are an example of a format of a trigger frame according to an embodiment of this application;
FIG. 8 is an example of a format of a PPDU according to an embodiment of this application;
FIG. 9 is an example of a format of another PPDU according to an embodiment of this application;
FIG. 10 is an example of a correspondence between an MCS and a spatial stream according to an embodiment of this application;
FIG. 11 is another example of a correspondence between an MCS and a spatial stream according to an embodiment of this application;
FIG. 12 is another example of a correspondence between an MCS and a spatial stream according to an embodiment of this application;
FIG. 13 is another example of a format of a user information list field in a trigger frame according to an embodiment of this application;
FIG. 14 is another example of a format of a user information list field in a trigger frame according to an embodiment of this application;
FIG. 15 is an interaction flowchart of another modulation and coding scheme indication method according to an embodiment of this application;
FIG. 16 is an example of a format of a user information field in a trigger frame according to an embodiment of this application;
FIG. 17 is another example of a format of a user information list field in a trigger frame according to an embodiment of this application;
FIG. 18 is another example of a format of a user information list field in a trigger frame according to an embodiment of this application;
FIG. 19 is another example of a format of a user information list field in a trigger frame according to an embodiment of this application;
FIG. 20 is another example of a format of a user information list field in a trigger frame according to an embodiment of this application;
FIG. 21A and FIG. 21B are an example of a format of a trigger frame according to an embodiment of this application;
FIG. 22 is a diagram of interaction between a second device and a plurality of first devices according to an embodiment of this application;
FIG. 23 is an example of a format of a user information field in a trigger frame according to an embodiment of this application;
FIG. 24 is a diagram of a structure of a communication apparatus 2400 according to an embodiment of this application;
FIG. 25 is a diagram of a structure of another communication apparatus 250 according to an embodiment of this application; and
FIG. 26 is a diagram of a structure of another communication apparatus 260 according to an embodiment of this application.

### DESCRIPTION OF EMBODIMENTS

In the specification, claims, and accompanying drawings of this application, terms "first", "second", and the like are merely intended to distinguish between different objects but do not indicate a particular order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described in this specification may be combined with other embodiments.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should further be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A. However, it should further be understood that determining (or generating) B based on (or according to) A does not mean that B is determined (or generated) only based on (or according to) A, and B may be determined (or generated) based on (or according to) A and/or other information.

As described in the background, currently, how to implement, by using a small number of bits (overheads), different MCSs used by a plurality of spatial streams needs to be studied. This application provides the technical solutions in which different MCSs used by the plurality of spatial streams are implemented by using the small number of bits. The following first describes a communication system to which the technical solutions provided in this application are applicable.

The technical solutions of this application are mainly applicable to a wireless communication system. The wireless communication system may comply with a wireless communication standard of the 3rd generation partnership project (3rd generation partnership project, 3GPP), or may comply with another wireless communication standard, for example, a wireless communication standard in the 802 family (for example, 802.11, 802.15, or 802.20) of the institute of electrical and electronics engineers (institute of electrical and electronics engineers, IEEE). The technical solutions of this application are further applicable to a wireless local area network system, for example, an internet of things (internet of things, IoT) network, an ultra wideband (ultra wideband, UWB) system, or a vehicle-to-everything (Vehicle to X, V2X) network. Certainly, the technical solutions of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

Embodiments of this application are mainly described by using a network in which a WLAN system or a UWB system is deployed, and in particular, a network to which the IEEE 802.11 standard is applied, as an example. A person skilled in the art easily understands that aspects of this application may be extended to other networks using various standards or protocols, for example, Bluetooth (Bluetooth), a high-performance radio LAN (high-performance radio LAN, HIPERLAN) (a wireless standard similar to the IEEE 802.11 standard, mainly used in Europe), a wide area network (WAN), a personal area network (personal area network, PAN), or another network currently known or later developed. Therefore, regardless of used coverage and a used wireless access protocol, various aspects provided in this application are applicable to any appropriate wireless network.

The communication system to which this application is applicable is merely an example for description, and is not limited thereto. Unified descriptions are provided herein, and are not described below again.

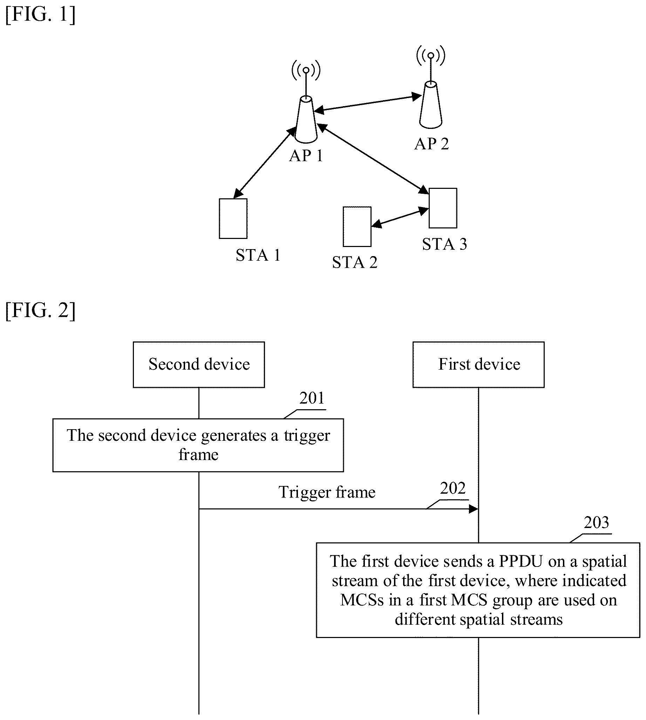

The technical solutions of this application are applicable to data communication between an access point (access point, AP) and one or more stations (Station, STA), and are also applicable to communication between APs, and are further applicable to communication between STAs. FIG. 1 is an example of a wireless communication system to which the technical solutions provided in this application are applicable. The communication system includes one or more APs (only an AP 1 and an AP 2 are shown) and one or more STAs (only a STA 1, a STA 2, and a STA 3 are shown). Both the access point and the STA support a WLAN protocol. The WLAN protocol may include IEEE 802.11be (or referred to as Wi-Fi 7 or the EHT protocol), and may further include protocols such as IEEE 802.15ab, IEEE 802.11ax, and IEEE 802.11ac. Certainly, with continuous evolution and development of communication technologies, the WLAN protocol may further include an ultra high reliability (ultra high reliability, UHR) protocol, an integrated millimeter wave (integrated millimeter wave, IMMW) protocol, IEEE 802.11bn, protocols of subsequent generations, and the like. A WLAN is used as an example. An apparatus for implementing a method in this application may be an access point or a STA in the WLAN, or a chip or a processing system installed in the access point or the STA.

The access point is an apparatus having a wireless communication function, supports communication according to the WLAN protocol, and has a function of communicating with another device (for example, a station or another access point) in the WLAN network. Certainly, the access point may further have a function of communicating with another device. A WLAN system includes one or more access point stations and one or more non-access point stations (non-access point station, non-AP STA). For ease of description, in this specification, the access point station is referred to as an access point (AP), and the non-access point station is referred to as a station (STA).

The access point may be an entire device, or may be a chip, a processing system, or the like installed in the entire device. The device in which the chip or the processing system is installed may implement the method and the function in embodiments of this application under control of the chip or the processing system (that is, the AP). The AP in embodiments of this application is an apparatus that provides a service for a station (Station, STA), and may support 802.11 series protocols, for example, 802.15ab, 802.11ac, 802.11n, 802.11g, 802.11b, 802.11a, 802.11be, 802.11bn, or a next generation of 802.11bn. For example, the AP may be a communication entity like a communication server, a router, a switch, a bridge, or a computer. The AP may include a macro base station, a micro base station (also referred to as a small cell), a pico base station, a femto base station, a relay station, an access point, a gNB, a transmission reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in these devices in various forms, to implement the method and the function in embodiments of this application.

The station is an apparatus having a wireless communication function, supports communication according to the WLAN protocol, and has a capability of communicating with another station or access point in the WLAN network. For example, the STA is any communication apparatus that allows a user to communicate with the AP and further communicate with the WLAN. The communication apparatus may be an entire device, or may be a chip, a processing system, or the like installed in the entire device. The device in which the chip or the processing system is installed may implement the method and the function in embodiments of this application under control of the chip or the processing system (that is, the station). The STA may include a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The station may include various handheld devices, vehicle-mounted devices, wearable devices, or computing devices that have a wireless communication function, or other processing devices connected to a wireless modem. Optionally, the station may be a handheld device (handset), a vehicle-mounted device, a wearable device, a terminal in an internet of things or an internet of vehicles network, a terminal in any form in 5G and a communication system evolved after 5G, or the like that has a wireless communication function. This is not limited in this application. The station may support 802.11 series protocols, for example, a plurality of WLAN standards such as 802.15ab, 802.11ac, 802.11n, 802.11g, 802.11b, 802.11a, 802.11ac (Wi-Fi 5), 802.11ax (Wi-Fi 6), 802.11be (Wi-Fi 7), UHR/802.11bn (Wi-Fi 8), IMMW, or a next-generation standard of Wi-Fi 8, or subsequent generations of standards.

The technical solutions provided in this application are applied to a trigger based transmission procedure, and the transmission procedure may be used for uplink multi-user transmission or uplink single-user transmission. A trigger frame-based scheduled uplink transmission method is introduced starting from the 802.11ax standard, and the trigger frame-based scheduled uplink transmission method is inherited in 802.11be. The trigger based scheduled uplink transmission method is used in the technical solutions provided in this application. The following uses uplink single-user transmission as an example to describe the trigger based scheduled uplink transmission method used in the technical solutions provided in this application.

In an uplink single-user transmission procedure, an AP sends a trigger frame to a station. The trigger frame includes other parameters (such as an association identifier and a modulation and coding scheme) and resource scheduling information used by a user (the station) to send uplink data. The resource scheduling information used to send the uplink data includes information indicating a resource unit (resource unit, RU) allocated to the station. Each RU supports a plurality of spatial streams; and these spatial streams may be used for transmission (corresponding to a non-MU-MIMO transmission mode) to one user, or may be used for transmission to a plurality of users (corresponding to a MU-MIMO transmission mode). Each spatial stream corresponds to one MCS. The trigger frame needs to indicate an MCS corresponding to each spatial stream supported by the RU of the station. After receiving the trigger frame, the station sends a PPDU on each spatial stream supported by the RU of the station, and uses corresponding MCSs on different spatial streams.

It can be learned from the foregoing descriptions that, in a trigger based transmission procedure, the trigger frame needs to indicate the MCS corresponding to each spatial stream supported by the RU of the station. This application provides a technical solution in which MCSs corresponding to spatial streams are indicated by using a small number of bits (overheads), and may be applied to the trigger based transmission procedure.

According to the method for indicating the MCSs corresponding to the spatial streams provided in this application, information indicating an MCS group and indicating a number of spatial streams corresponding to one or more MCSs in the MCS group is carried in a trigger frame, to indicate MCSs used by the trigger frame on different spatial streams. In this application, one MCS group includes a plurality of MCSs, and one MCS is a combination of one QAM and one coding rate. In the MCS group, coding rates of the plurality of MCSs are the same, in other words, coding rates in the plurality of MCSs are the same. The MCS group may be named as an MCS set, or may be named as an MCS group. A name of the MCS group is not limited in this application. In this application, that an MCS corresponds to a number of spatial streams is equivalent to that the number of spatial streams corresponds to the MCS. In this application, there are two understandings of a number of spatial streams corresponding to an MCS. One understanding is a sequence number (or an identifier) of a spatial stream corresponding to the MCS, for example, a 2^{nd} spatial stream or a spatial stream ②. The other understanding is a number of spatial streams corresponding to the MCS.

In a technical solution provided in this application, the trigger frame includes a first field and a second field. The first field is used to carry information indicating a first MCS group, and the second field is used to carry information indicating the number of spatial streams corresponding to the one or more MCSs in the first MCS group. A station may learn of, based on the two fields, an MCS corresponding to each spatial stream of the station. For example, that the second field is used to carry the information indicating the number of spatial streams corresponding to the one or more MCSs in the MCS group may be replaced with as follows: The second field is used to carry information indicating the MCS corresponding to each spatial stream of the station. For example, that the second field is used to carry the information indicating the number of spatial streams corresponding to the one or more MCSs in the MCS group may be replaced with as follows: The second field indicates information about the number of spatial streams corresponding to the one or more MCSs in the MCS group.

The following first describes the technical solutions provided in this application with reference to FIG. 2. FIG. 2 is an interaction flowchart of a modulation and coding scheme indication method according to an embodiment of this application. As shown in FIG. 2, the method includes the following steps.

201: A second device generates a trigger frame.

For example, the second device is one of an AP and a station, and a first device is the other of the AP and the station. For example, the second device is the AP, and the first device is the station. For another example, the second device is the station, and the first device is the AP. For example, both the first device and the second device are APs or stations. There may be one or more first devices. This is not limited in embodiments of this application. In embodiments of this application, one first device is used as an example for description.

The trigger frame is used to trigger one or more devices to send a PPDU. The following uses an example in which the trigger frame is used to trigger the first device for description. The trigger frame may include a first field and a second field. The first field indicates a first MCS group used by the PPDU sent by the first device, that is, the first MCS group used by the first device to send the PPDU triggered by the trigger frame. For example, the first field indicates the first MCS group used by the first device to send the PPDU triggered by the trigger frame. The first field may be referred to as an uplink unequal (unequal) modulation (unequal modulation, UEQM) MCS group field (that is, an uplink UEQM MCS group field), or may be referred to as a UEQM MCS group indication field. A name of a field in this application may be another different name, provided that functions essentially indicated are the same. The name of the field is not limited in this application. In this application, one MCS is a combination of one QAM and one coding rate. One MCS group includes a plurality of MCSs, and coding rates of the plurality of MCSs are the same. The first MCS group includes a plurality of MCSs. The plurality of MCSs included in the first MCS group are not limited in embodiments of this application. The following describes some examples of the first MCS group. For example, the first MCS group includes combinations of BPSK, QPSK, 16-QAM, and 64-QAM and a same coding rate (for example, a coding rate of 1/2). For example, the first MCS group includes combinations of 64-QAM, 256-QAM, 1024-QAM, 4096-QAM and a same coding rate. For example, the first MCS group may include a combination of 16,384 QAM (16K QAM for short) and a coding rate, or may include a combination of 65,536 QAM (64K QAM for short) and a coding rate, or may include a combination of a higher QAM and a coding rate. The second field indicates a number of spatial streams corresponding to one or more MCSs in the first MCS group. The second field may be referred to as a spatial streams grouping (spatial streams grouping) field, or may be referred to as an NSS combination indication field.

It may be understood that, a person skilled in the art knows that the spatial stream is a virtual existence. Therefore, there may be the following two understandings of a number of spatial streams corresponding to an MCS, and both may finally indicate MCSs used by different spatial streams.

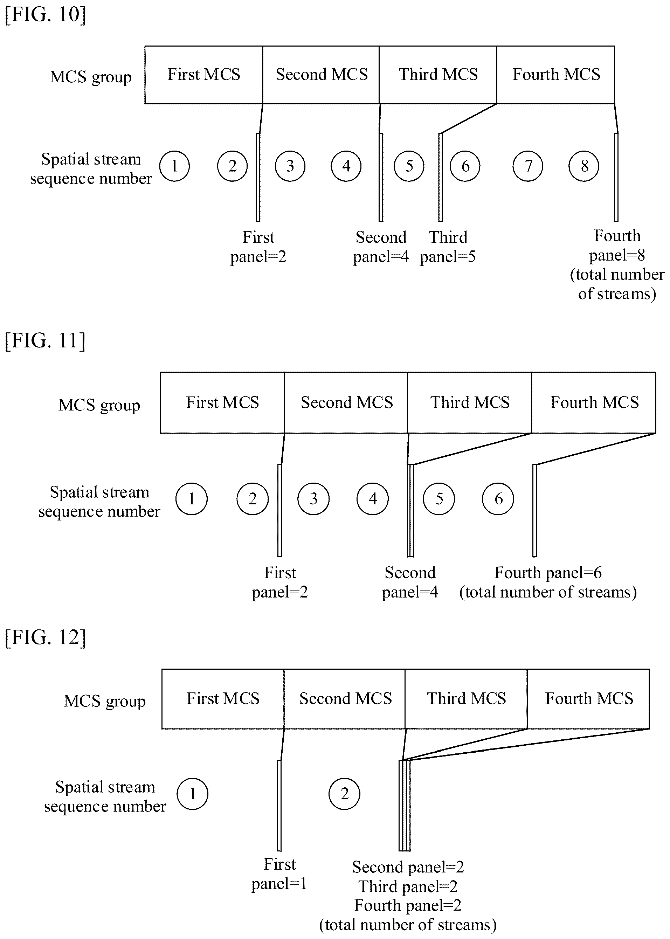

In a possible implementation, that the second field indicates the number of spatial streams corresponding to the one or more MCSs in the first MCS group may be that the second field indicates a spatial stream corresponding to the one or more MCSs in the first MCS group. In other words, the second field indicates MCSs respectively corresponding to a plurality of spatial streams corresponding to the first MCS group. In this implementation, the number of spatial streams may be understood as a sequence number of the spatial stream. For example, the second field indicates that one MCS in the first MCS group corresponds to a 2^{nd} spatial stream (or a spatial stream ②). For example, the first MCS group includes a first MCS, a second MCS, a third MCS, and a fourth MCS, and the second field indicates that the first MCS corresponds to a spatial stream ① and a spatial stream ②, the second MCS corresponds to a spatial stream ③ and a spatial stream ④, the third MCS corresponds to a spatial stream ⑤, and the fourth MCS corresponds to a spatial stream ⑥, a spatial stream ⑦, and a spatial stream ⑧. The spatial stream ① to the spatial stream ⑧ are a plurality of spatial streams corresponding to the first MCS group, that is, spatial streams of any user. That an MCS corresponds to one or more spatial streams may be understood as that the one or more spatial streams use (or correspond to) the MCS. For example, that the first MCS corresponds to the spatial stream ① and the spatial stream ② may be understood as that the spatial stream ① and the spatial stream ② use the first MCS. For example, the first MCS group includes a first MCS, a second MCS, a third MCS, and a fourth MCS, and the second field indicates that the first MCS corresponds to a spatial stream ① and a spatial stream ②, the second MCS corresponds to a spatial stream ③ and a spatial stream ④, and the fourth MCS corresponds to a spatial stream ⑤ and a spatial stream ⑥. The spatial stream ① to the spatial stream ⑥ are a plurality of spatial streams corresponding to the first MCS group, that is, spatial streams of any user. With reference to FIG. 10 to FIG. 12, the following describes a manner in which the second field indicates the spatial stream corresponding to the one or more MCSs in the first MCS group.

In another possible implementation, that the second field indicates the number of spatial streams corresponding to the one or more MCSs in the first MCS group may be that the second field indicates a number of spatial streams corresponding to the one or more MCSs in the first MCS group. It should be noted that the number of spatial streams is a total number of spatial streams, rather than a sequence number of a specific spatial stream. For example, an MCS corresponds to a 1^{st} spatial stream and a 2^{nd} spatial stream, and a number of spatial streams corresponding to the MCS is 2. For another example, if a number of spatial streams of the first device is 8, it indicates that a total number of spatial streams of the first device is 8, rather than an 8^{th} spatial stream. For example, the first MCS group includes a first MCS, a second MCS, a third MCS, and a fourth MCS, and the second field indicates that the first MCS corresponds to two spatial streams (in other words, a number of spatial streams corresponding to the first MCS is 2), the second MCS corresponds to two spatial streams, the third MCS corresponds to one spatial stream (in other words, a number of spatial streams corresponding to the third MCS is 1), and the fourth MCS corresponds to three spatial streams. In this case, a total number of spatial streams corresponding to the MCSs in the first MCS group (that is, a total number of spatial streams corresponding to the first MCS group) is 8. For example, the first MCS group includes a first MCS, a second MCS, a third MCS, and a fourth MCS, and the second field indicates that the first MCS corresponds to two spatial streams (in other words, a number of spatial streams corresponding to the first MCS is 2), the second MCS corresponds to two spatial streams, the third MCS corresponds to zero spatial streams (in other words, a number of spatial streams corresponding to the third MCS is 0), and the fourth MCS corresponds to two spatial streams. In this case, a total number of spatial streams corresponding to the MCSs in the first MCS group is 6. With reference to FIG. 10 to FIG. 12, the following describes a manner in which the second field indicates the number of spatial streams corresponding to the one or more MCSs in the first MCS group.

In a possible implementation, the trigger frame includes one or more user information fields (or referred to as user fields), and the at least one user information field includes the first field and the second field. For example, one user information field in the trigger frame is associated with one user (for example, a station), the user information field includes information that needs to be read by the user associated with the user information field, and another user does not need to read the user information field. For example, a user information field in the trigger frame is associated with a user #1, the user information field includes an identifier of the user #1, the user #1 determines, based on the identifier that is of the user #1 and that is included in the user information field, that the user information field includes information that needs to be read by the user #1, and another user (for example, a station) disregards (disregard) the user information field when the identifier included in the user information field is not an identifier of the another user.

The following describes a case in which the PPDU includes one user field and a case in which the PPDU includes a plurality of user fields.

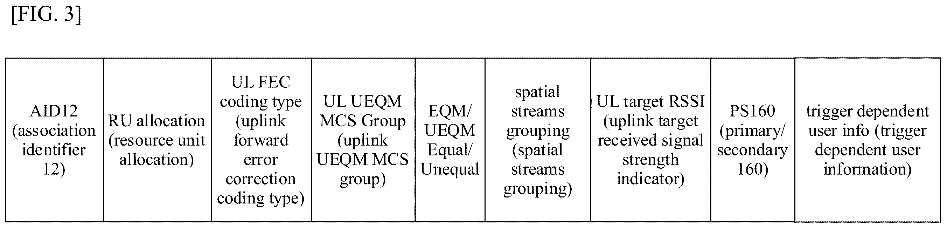

In a possible implementation, the trigger frame includes one user information field, and the user information field includes the first field, the second field, and a third field (optional). The user information field is associated with one user, and the first field indicates a first MCS group used by the user to send a PPDU triggered by the trigger frame. The third field indicates equal modulation (equal modulation, EQM) or UEQM. The third field may be referred to as an EQM/UEQM indication field or an EQM/UEQM field. For example, when a value of the EQM/UEQM field is 0, the EQM/UEQM field indicates the EQM; or when a value of the EQM/UEQM field is 1, the EQM/UEQM field indicates the UEQM. FIG. 3 is an example of a format of a user information field in the trigger frame according to an embodiment of this application. As shown in FIG. 3, the user information field in the trigger frame includes: an association identifier 12 (association identifier 12, AID12, 12 low-order bits of an AID) field, a resource unit (resource unit, RU) allocation (allocation) field, an uplink (uplink, UL) forward error correction (forward error correction, FEC) coding type (UL FEC coding type) field, an uplink UEQM MCS group field (that is, the first field), an EQM/UEQM field (that is, the third field), a spatial streams grouping (spatial streams grouping, that is, the second field) field, an uplink target received signal strength indicator field, a primary/secondary 160 field, and a trigger dependent user information (trigger dependent user info) field. The association identifier 12 field indicates an association identifier of a STA (user). The resource unit allocation field and the primary/secondary 160 field jointly indicate a location of a specific RU or multiple resource unit (multiple resource unit, MRU) allocated to the user (a user corresponding to the AID12 field). The uplink UEQM MCS group field indicates a first MCS group used by the user to send a PPDU triggered by the trigger frame. The uplink forward error correction coding type field indicates a type of forward error correction coding for uplink transmission. The uplink target received signal strength indicator field indicates target received signal strength for uplink transmission. The trigger dependent user information field may carry station information related to a trigger frame type. RA is short for random access (random access).

The user information field shown in FIG. 3 is only an example of one user information field in the trigger frame. The user information field in the trigger frame may include more or fewer fields than those in the user information field shown in FIG. 3. For example, the user information field in the trigger frame includes: the association identifier 12 field, the resource unit allocation field, the uplink forward error correction coding type field, the uplink UEQM MCS group field (that is, the first field), the spatial streams grouping field (that is, the second field), the uplink target received signal strength indicator field, the primary/secondary 160 field, and the trigger dependent user information field. A length and a location of each field in the user information field in the trigger frame are not limited in embodiments of this application. For example, a length of the first field may be 3 bits (bits), 4 bits, 5 bits, or 6 bits. For example, a length of the second field may be 5 bits, 6 bits, 7 bits, 8 bits, or 9 bits. For example, in the user information field in the trigger frame, a length of the EQM/UEQM field is 1 bit (bit), a length of the uplink UEQM MCS group field is 4 bits, and a length of the spatial streams grouping field is 6 bits. For example, in the user information field in the trigger frame, a length of the EQM/UEQM field is 1 bit (bit), a length of the uplink UEQM MCS group field is 4 bits, and a length of the spatial streams grouping field is 5 bits.

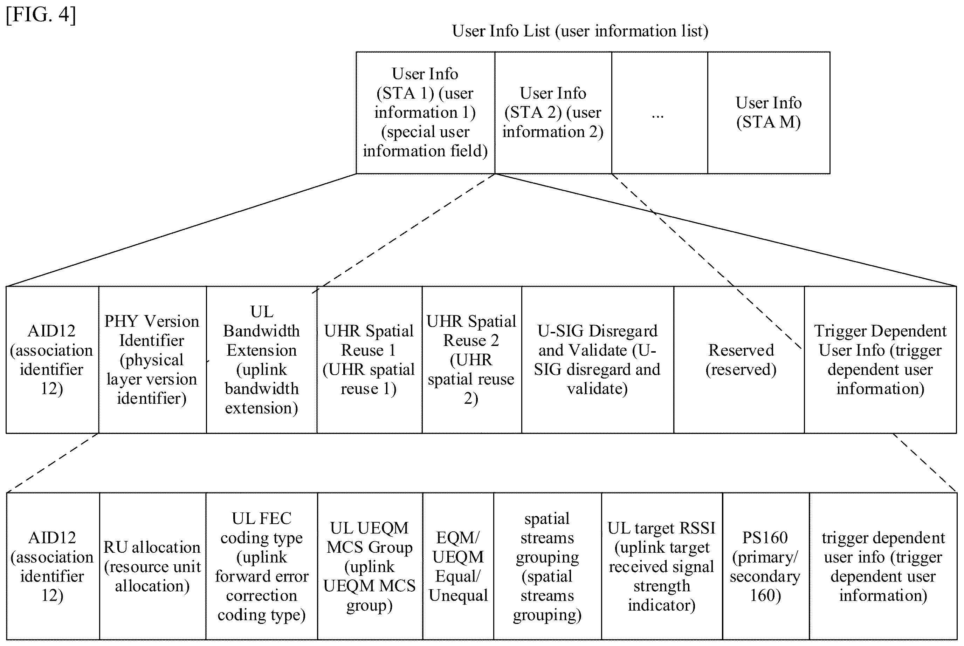

A format of the trigger frame is not limited in embodiments of this application. A possible format of the trigger frame is as follows: The trigger frame includes a user information list (user info list) field, and the user information list field includes the user information field. In a possible implementation, the user information list field includes two or more user information fields. A 1^{st} user information field is a special user information field, an association identifier field in the special user information field indicates 2007, and some common information is carried after the association identifier field in the special user information field. Although the 1^{st} user information field is a user information field, the 1^{st} user information field carries the common information. Therefore, the 1^{st} user information field may be referred to as the special user information field. Starting from a 2^{nd} user information field, one user information field includes information that needs to be read by one user. If the user information field in this specification is not described, the user information field is not a special user information field. FIG. 4 is an example of a format of a user information list field in the trigger frame according to an embodiment of this application. As shown in FIG. 4, the user information list field includes M (greater than or equal to 2) user information fields, a 1^{st} user information field is a special user information field, some common information is carried after an association identifier field in the special user information field, and a format of a 2^{nd} user information field is the same as the format of the user information field shown in FIG. 3. Meanings of fields in the special user information field are as follows: An association identifier 12 field indicates 2007, to indicate that the user information field is the special user information field; a physical layer version identifier field indicates a physical layer version of a triggered PPDU; an uplink bandwidth extension field and an uplink bandwidth field are combined to indicate a bandwidth of the triggered PPDU; a UHR spatial reuse 1 field and a UHR spatial reuse 2 field are used to carry parameters related to spatial reuse; and a U-SIG disregard and validate field indicates disregard and validate values in a U-SIG field in the triggered PPDU. A format of the special user information field in FIG. 4 is merely an example. The format of the special user information field is not limited in embodiments of this application. When the trigger frame is used to trigger one user to transmit a PPDU, the user information list field in the trigger frame includes two user information fields (in other words, M is 2), that is, a format of the user information list field is for single-user transmission. When the trigger frame is used to trigger a plurality of users to transmit PPDUs, the user information list field in the trigger frame includes three or more user information fields (in other words, M is greater than or equal to 3), that is, a format of the user information list field is for orthogonal frequency division multiple access (orthogonal frequency division multiple access, OFDMA) transmission.

In a possible implementation, the second device may send a trigger frame (referred to as a trigger frame #1 below) including the first field and the second field. For example, one user information field in the trigger frame #1 includes the first field and the second field, the user information field in the trigger frame #1 is associated with a user #1, and the second field indicates the number of spatial streams corresponding to the one or more MCSs in the first MCS group. A number of spatial streams corresponding to an MCS in the first MCS group is a number of spatial streams that use the MCS in spatial streams of the user #1 when the user #1 sends a PPDU triggered by the trigger frame. Alternatively, the second device may send a trigger frame (referred to as a trigger frame #2 below) including an MCS field (which may be referred to as an MCS indication field, an UL UHR-MCS field, or another field) and a number of spatial streams (number of spatial streams, NSS) field. For example, a user information field in the trigger frame #2 includes the MCS field and the NSS field, the user information field in the trigger frame #2 is associated with a user #2, the NSS field indicates a total number of spatial streams of the user #2, and the MCS field indicates a same MCS used by all the spatial streams of the user #2 when the user #2 sends a PPDU triggered by the trigger frame. In other words, the second device may send trigger frames including user information fields in different formats, for example, the trigger frame #1 and the trigger frame #2.

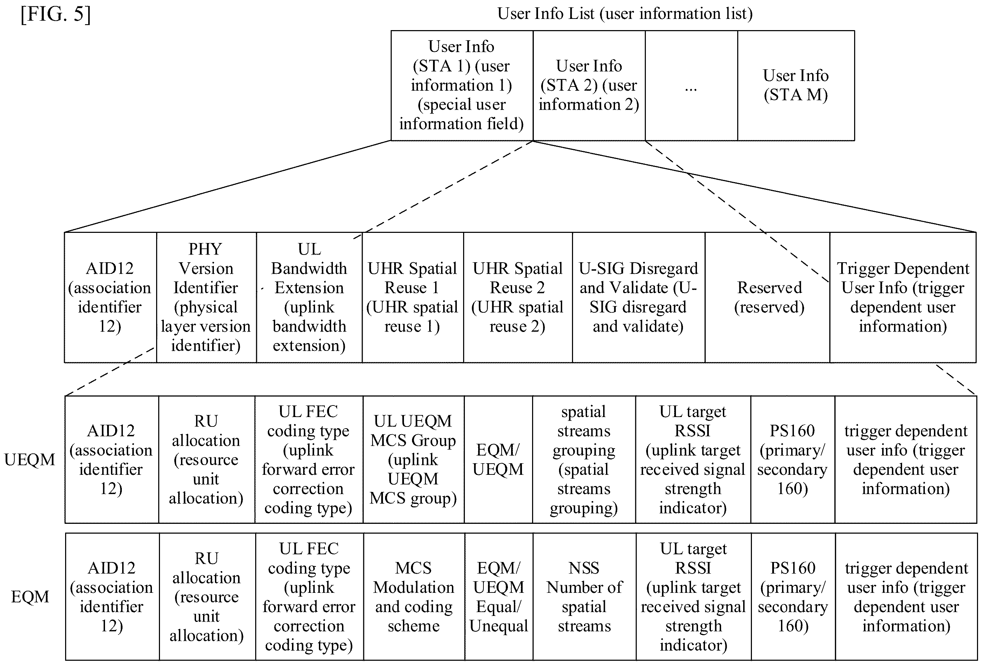

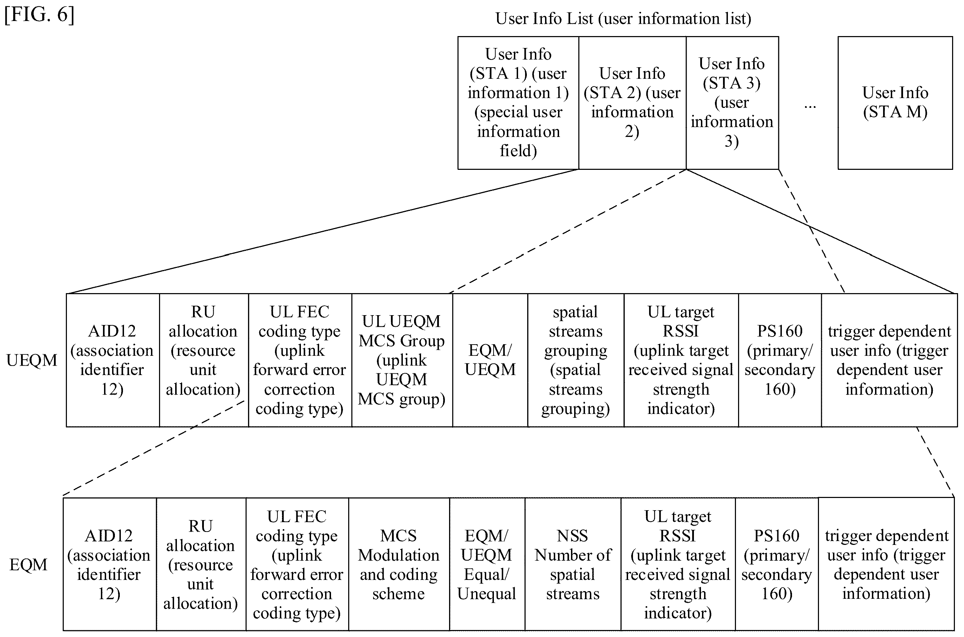

When a spatial stream of a user uses the UEQM, a user information field in the trigger frame sent by the second device includes the first field and the second field, to indicate an MCS used by each spatial stream of the user when the user sends a PPDU triggered by the trigger frame. When a spatial stream of a user uses the EQM, a user information field in the trigger frame sent by the second device includes the MCS field and the NSS field, to indicate a same MCS used by all spatial streams of the user when the user sends a PPDU triggered by the trigger frame. Specifically, when a spatial stream of a user uses the EQM, a user information field in the trigger frame sent by the second device includes the MCS field, the NSS field, and the third field (that is, the EQM/UEQM field), and the third field indicates the EQM. In a possible implementation, the user information list field in the trigger frame sent by the second device includes the user information field, and the user information field includes the MCS field, the NSS, and the third field (that is, the EQM/UEQM field). FIG. 5 is another example of a format of a user information list field in the trigger frame according to an embodiment of this application. For descriptions of fields in the user information list field shown in FIG. 5, refer to the descriptions of the fields in the user information list field shown in FIG. 4. Details are not described herein again. A format of a first SIG field (including one user field) shown in FIG. 5 is for single-user transmission. A format of a first SIG field (including a plurality of user fields) shown in FIG. 6 is for OFDMA transmission.

Refer to FIG. 5. A user information field in the user information list field in the trigger frame has two possible formats. One user information field (corresponding to the UEQM) includes an association identifier 12 field, a resource unit allocation field, an uplink forward error correction coding type field, an uplink UEQM MCS group field (that is, the first field), an EQM/UEQM field, a spatial streams grouping field (that is, the second field), an uplink target received signal strength indicator field, a primary/secondary 160 field, and a trigger dependent user information field. The other user information field (corresponding to the EQM) includes an association identifier 12 field, a resource unit allocation field, an uplink forward error correction coding type field, an MCS field, an EQM/UEQM field, an NSS field, an uplink target received signal strength indicator field, a primary/secondary 160 field, and a trigger dependent user information field. The user information field in FIG. 5 corresponds to the UEQM, and this indicates that a spatial stream of a user associated with the user information field uses the UEQM. The user information field in FIG. 5 corresponds to the EQM, and this indicates that a spatial stream of a user associated with the user information field uses the EQM. Lengths of the user information fields in two formats shown in FIG. 5 may be equal or may not be equal. In a possible manner, some bits (that is, a reserved field) are reserved in the user information field, so that the lengths of the user information fields in two formats shown in FIG. 5 are equal. In this way, complexity of parsing the user information fields can be reduced. A location and a length of the reserved field in the user information field may be flexibly configured based on a requirement, so that the lengths of the two user information fields are equal. In another possible manner, bits that are used to make the lengths of the user information fields in two formats equal (or aligned) are not reserved in the user information field. In this way, bit overheads can be reduced. The following describes some examples in which the lengths of the user fields in two formats shown in FIG. 5 are equal. For example, a sum of a length of the uplink UEQM MCS group field (that is, the first field) and a length of the spatial streams grouping field (that is, the second field) is equal to a sum of a length of the MCS field and a length of the NSS field. For example, the user information field corresponding to the EQM includes one or more reserved fields, and a sum of a length of the uplink UEQM MCS group field (that is, the first field) in the user information field corresponding to the UEQM and a length of the spatial streams grouping (that is, the second field) is equal to a sum of the length of the MCS field in the user information field corresponding to the EQM, a length of the NSS, and a length of the one or more reserved fields (optional). A location and a length of the reserved field in the user information field may be flexibly configured based on a requirement, so that the lengths of the two user information fields are equal. For example, in the one user information field, the length of the uplink UEQM MCS group field is 4 bits, and the length of the spatial streams grouping field is 6 bits; and in the other user information field, the length of the MCS field is 4 bits, the length of the NSS field is 2 bits, and the length of the reserved field is 4 bits. For another example, in the one user information field, the length of the uplink UEQM MCS group field is 4 bits, and the length of the spatial streams grouping field is 8 bits; and in the other user information field, the length of the MCS field is 4 bits, the length of the NSS field is 2 bits, and the length of the reserved field is 6 bits. In this application, a location and a length of each field in the user information field are not limited. In addition, the user information field in this application may include more or fewer fields than those in the user information field shown in FIG. 5.

In a possible implementation, the trigger frame includes a plurality of user information fields, p user information fields in the plurality of user information fields include the first field and the second field, q user information fields in the plurality of user information fields include a fourth field and a fifth field, the fourth field indicates a number of spatial streams used when a user (a user associated with the user information field) sends a PPDU triggered by the trigger frame, the fifth field indicates a same MCS used by all spatial streams of the user when the user sends the PPDU triggered by the trigger frame, lengths of the user information fields in the trigger frame are equal or unequal, p is an integer greater than 0, and q is an integer greater than or equal to 0. In other words, the trigger frame may include user information fields in two different formats. For example, the fourth field is the NSS field in FIG. 5, and the fifth field is the MCS field in FIG. 5.

The following uses an example in which the trigger frame includes a first user information field (including the first field and the second field) and a second user information field (including the fourth field and the fifth field) to describe the trigger frame including the user information fields in two different formats. For example, the trigger frame includes the first user information field and the second user information field, the first user information field is associated with a first user, the second user information field is associated with a second user, the first user information field includes the first field and the second field, the second user information field includes the fourth field and the fifth field, the fourth field indicates a number of spatial streams of the second user, the fifth field indicates a same MCS used by all the spatial streams of the second user, a length of the first user information field is equal to a length of the second user information field. For example, the first user information field is the user information field corresponding to the UEQM shown in FIG. 5, and the second user information field is the user information field corresponding to the EQM shown in FIG. 5.

There may be user information fields in two formats in the trigger frame, for example, the first user information field and the second user information field. Any user information field may indicate, by using the EQM/UEQM field included in the user information field, a type of the user information field. Further, content of subfields in user information fields in different formats is different. Preferably, the user information fields in different formats in the trigger frame have an equal length (in other words, lengths of the user information fields in different formats are equal). This can reduce decoding and parsing complexity of the first device. The spatial streams grouping field (that is, the second field) needs to indicate a number of spatial streams corresponding to one or more MCSs in an MCS group. Therefore, overheads are high. To enable the first user information field and the second user information field to have the equal length or nearly the equal length, one manner is to reduce the overheads of the spatial streams grouping field as much as possible to achieve a tradeoff between the overheads and flexibility; and the other manner is to introduce some reserved bits (or a reserved field) into the user information field corresponding to the EQM (that is, the second user information field). A location and a length of the reserved field in the second user information field are not limited. In other words, the location and the length of the reserved field (or the reserved bits) in the second user information field may be flexibly configured based on a requirement. For example, the second user information field includes a plurality of reserved fields, a part of the reserved fields in the second user information field are used to align with the first user information field, and the other part of the reserved fields in the second user information field are not used to align with the first user information field, but are introduced for another consideration. For example, before some reserved bits are introduced into the second user information field, the second user information field includes one or more reserved fields. After some reserved bits are introduced into the second user information field, the length of the second user information field is equal to the length of the first user information field. The first user information field may include one or more reserved fields, or may not include a reserved field. FIG. 5 shows an example in which the length of the first user information field (corresponding to the UEQM) is equal to the length of the second user information field (corresponding to the EQM), to be specific, the length of the spatial streams grouping field is equal to a length of the number of spatial streams field, and the length of the uplink UEQM MCS group field is equal to the length of the MCS field. The format of the first user information field and the format of the second user information field shown in FIG. 5 are merely possible examples. A length and a location of each field in the first user information field and a length and a location of each field in the second user information field are not limited in embodiments of this application.

The following describes some examples in which the length of the second user information field is equal to the length of the first user information field. For example, the sum of the length of the MCS field and the length of the NSS field is S, a sum of the length of the uplink UEQM MCS group field and the length of the number of spatial streams field is T, the length of the reserved field in the second user information field is greater than or equal to (T-S), and (T-S) reserved bits in the second user field are used to align the length of the second user field with the length of the first user field, where both S and T are integers greater than 0, and S is less than T. For example, in the first user information field, the length of the uplink UEQM MCS group field is 4 bits, and the length of the spatial streams grouping field is 6 bits; and in the second user information field, the length of the MCS field is 4 bits, the length of the NSS field is 3 bits, and the length of the reserved field is 3 bits. For another example, in the first user information field, the length of the uplink UEQM MCS group field is 4 bits, and the length of the spatial streams grouping field is 8 bits; and in the second user information field, the length of the MCS field is 4 bits, the length of the NSS field is 4 bits, and the length of the reserved field is 4 bits. In this embodiment of this application, the EQM and the UEQM may be implemented by using user information fields in different formats with an equal length. An operation of parsing a plurality of user fields with an equal length is simpler than an operation of parsing a plurality of user fields with unequal lengths. This can improve efficiency of parsing the user field.

Another possible format of the trigger frame is as follows: A user information list field in the trigger frame includes the first user information field and the second user information field, and a format of the user information list field in the trigger frame is for OFDMA transmission. FIG. 6 is another example of a format of a user information list field in the trigger frame according to an embodiment of this application. As shown in FIG. 6, the user information list field includes a special user field (user information 1), user information 2 (a user information field corresponding to the UEQM), and user information 3 (a user information field corresponding to the EQM). The user information 2 in FIG. 6 may be an example of the first user information field, and the user information 3 in FIG. 6 may be an example of the second user information field. In the user information list field shown in FIG. 6, a format of the user information 2 is the same as a format of the user information field corresponding to the UEQM in FIG. 5, and a format of the user information 3 is the same as a format of the user information field corresponding to the EQM in FIG. 5. For example, lengths of the user information fields (including or excluding the special user information field) in the trigger frame shown in FIG. 6 are equal. It should be noted that the user information field provided in this application supports a non-MU-MIMO transmission format, to be specific, one RU is allocated to one user. For example, when the user information field in the trigger frame supports a MU-MIMO transmission format, the PPDU may use the modulation scheme EQM.

Another possible format of the trigger frame is as follows: A user information list field in the trigger frame includes a plurality of user information fields, a format of one or more user information fields is the same as the format of the first user information field, and the format of the user information list field in the trigger frame is for OFDMA transmission.

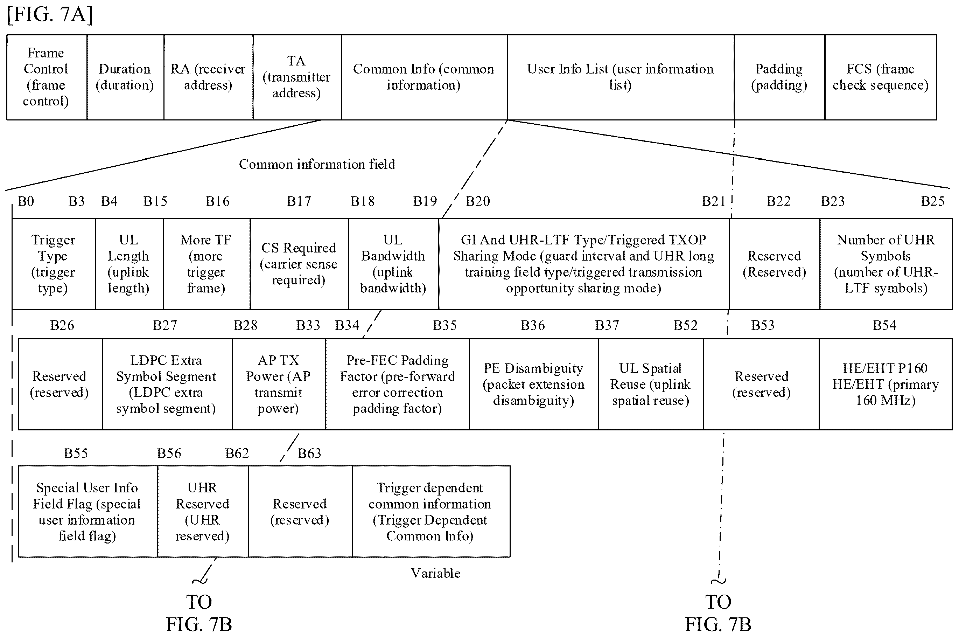

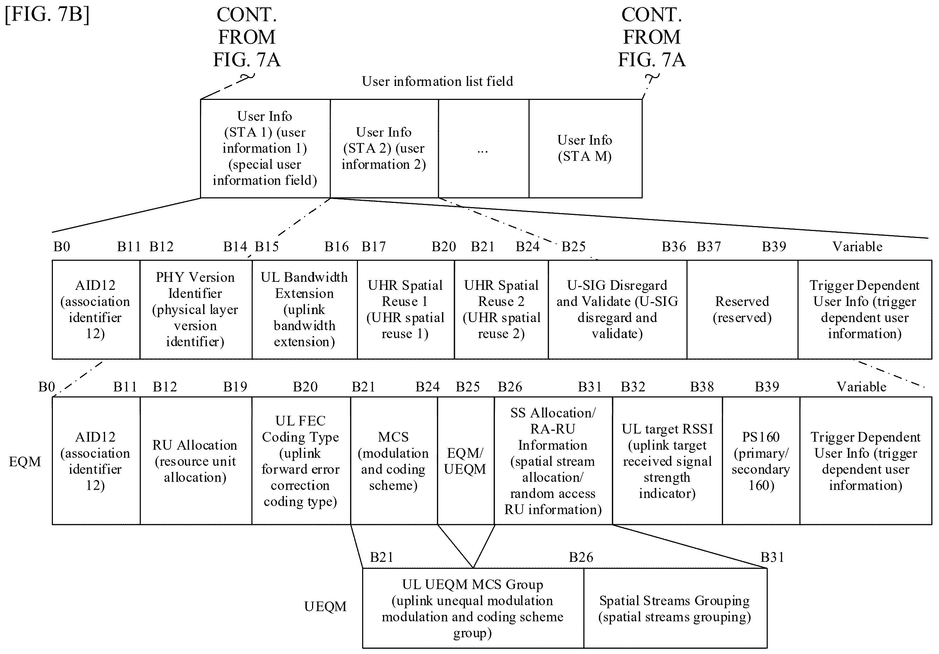

A format of the trigger frame is not limited in this application. Any field in the trigger frame may include the first field, the second field, and the third field (optional). An example of the trigger frame is shown in FIG. 7A and FIG. 7B. FIG. 7A and FIG. 7B are an example of a format of a trigger frame according to an embodiment of this application. As shown in FIG. 7A and FIG. 7B, the trigger frame includes: a frame control (frame control) field, a duration (duration) field, a receiver address (receiver address, RD) field, a transmitter address (transmitter address, TD) field, a common information field, a user information list field, a padding (padding) field, and a frame check sequence (frame check sequence, FCS) field. User information 2 (a user information field) in the user information list field has two possible formats. One format is the same as the format of the user information field corresponding to the UEQM shown in FIG. 5, and the other format includes: an association identifier 12 field, a resource unit allocation field, an uplink forward error correction coding type field, an MCS field, an EQM/UEQM field, a spatial stream allocation (spatial stream allocation)/random access RU information field, an uplink target received signal strength indicator field, a primary/secondary 160 field, and a trigger dependent user information field. In FIG. 7A and FIG. 7B, Bn represents an n^{th} bit of one field in the trigger frame, where n is an integer greater than or equal to 0. For example, B0 represents a 1^{st} bit in the user information 2, and B21 represents a 22^{nd} bit in the user information 2. Meanings or functions of some fields in the trigger frame shown in FIG. 7A and FIG. 7B are as follows: A trigger type field indicates a type of the trigger frame; an uplink length field indicates a length of an L-SIG field in a TB PPDU; a more trigger frame field indicates that more trigger frames are to be sent subsequently; an uplink bandwidth field indicates bandwidth of the TB PPDU; and a UHR reserved field indicates a reserved value in a U-SIG field in the TB PPDU. The trigger frame shown in FIG. 7A and FIG. 7B is merely an example. For a meaning of fields in the trigger frame shown in FIG. 7A and FIG. 7B, refer to a related standard. Details are not described herein again.

202: The second device sends the trigger frame.

Correspondingly, the first device receives the trigger frame. The trigger frame is used to trigger the one or more devices (for example, a communication device) to send the PPDU. For example, when the trigger frame is for single-user transmission, to be specific, the trigger frame is used to trigger the first device (one device) to send the PPDU, the first device (that is, a single user to which the trigger frame is directed) receives the trigger frame, and parses the trigger frame. For example, when the trigger frame is for multi-user transmission, to be specific, the trigger frame is used to trigger the plurality of devices (including the first device) to send PPDUs, the plurality of devices (that is, users to which the trigger frame is directed) receive the trigger frame, and parse the trigger frame. The following uses the first device as an example to describe operations performed by the plurality of devices after receiving the trigger frame.

203: The first device sends the PPDU on a spatial stream of the first device, where indicated MCSs in the first MCS group are used on different spatial streams.

The PPDU sent by the first device may be triggered by the trigger frame. In other words, the first device sends, on the spatial stream of the first device, the PPDU triggered by the trigger frame. The first field and the second field in the trigger frame may indicate the MCSs in the first MCS group used on different spatial streams when the first device sends the PPDU (triggered by the trigger frame) on the spatial stream of the first device. The first device may learn of, based on the first field and the second field in the trigger frame, the MCSs used on different spatial streams of the first device when the first device sends, on the spatial stream of the first device, the PPDU triggered by the trigger frame. In a possible implementation, before performing step 203, the first device performs the following operation: The first device learns of, based on the trigger frame, the MCSs in the first MCS group used on different spatial streams of the first device when the first device sends the PPDU triggered by the trigger frame, that is, the indicated MCSs in the first MCS group on different spatial streams.

The following describes several possible examples of step 203 based on the format of the trigger frame.

In a possible implementation, the trigger frame includes one user information field, in other words, the trigger frame is for single-user transmission, the user information field is associated with a first device #1, the user information field includes the first field and the second field, the first field indicates the first MCS group used by the first device #1 to send a PPDU triggered by the trigger frame, the second field indicates a spatial stream corresponding to one or more MCSs in the first MCS group, a spatial stream corresponding to an MCS in the first MCS group is a spatial stream of this MCS used when the first device #1 sends the PPDU triggered by the trigger frame. For example, the number of spatial streams corresponding to the one or more MCSs in the first MCS group is the spatial stream corresponding to the one or more MCSs in the first MCS group. The first device #1 may learn of, based on the number of spatial streams corresponding to the one or more MCSs in the first MCS group, an MCS used by each spatial stream of the first device #1 when the first device #1 sends the PPDU triggered by the trigger frame. An example of step 203 is as follows: The first device #1 sends, on a spatial stream of the first device #1, the PPDU triggered by the trigger frame. When the first device #1 sends the PPDU, a spatial stream ① and a spatial stream ② of the first device #1 use a first MCS, a spatial stream ③ and a spatial stream ④ of the first device #1 use a second MCS, and a spatial stream ⑤ and a spatial stream ⑥ of the first device #1 use a fourth MCS. In this example, the first MCS corresponds to the spatial stream ① and the spatial stream ②, the second MCS corresponds to the spatial stream ③ and the spatial stream ④, and the fourth MCS corresponds to the spatial stream ⑤ and the spatial stream ⑥.

In a possible implementation, the trigger frame includes one user information field, in other words, the trigger frame is for single-user transmission, the user information field is associated with a first device #1, the user information field includes the first field and the second field, the first field indicates the first MCS group used by the first device #1 to send a PPDU triggered by the trigger frame, the second field indicates the number of spatial streams corresponding to the one or more MCSs in the first MCS group, and a number of spatial streams corresponding to an MCS in the first MCS group is a number of spatial streams of this MCS used when the first device #1 sends the PPDU triggered by the trigger frame. For example, the number of spatial streams corresponding to the one or more MCSs in the first MCS group is the number of spatial streams corresponding to the one or more MCSs in the first MCS group. The first device #1 may learn of, based on the number of spatial streams corresponding to the one or more MCSs in the first MCS group, a number of spatial streams of each MCS used by the first device #1 when the first device #1 sends the PPDU triggered by the trigger frame. An example of step 203 is as follows: The first device #1 sends, on a spatial stream of the first device #1, the PPDU triggered by the trigger frame. When the first device #1 sends the PPDU, two spatial streams use a first MCS, two spatial streams use a second MCS, one spatial stream uses a third MCS, and three spatial streams use a fourth MCS. A number of spatial streams corresponding to the first MCS is 2, a number of spatial streams corresponding to the second MCS is 2, a number of spatial streams corresponding to the third MCS is 1, and a number of spatial streams corresponding to the fourth MCS is 3.

In a possible implementation, the trigger frame includes the first user information field and the second user information field, in other words, the trigger frame is for multi-user transmission, the first user information field is associated with the first user (a first device #1), the second user information field is associated with the second user (a first device #2), the first user information field includes the first field and the second field, the second user information field includes the fourth field and the fifth field, the fourth field indicates a number of spatial streams when the second user sends the PPDU triggered by the trigger frame, and the fifth field indicates a same MCS used by all the spatial streams of the second user when the second user sends the PPDU triggered by the trigger frame. For example, the first device #1 reads content of the first user information field in the trigger frame and disregards content of the second user information field in the trigger frame, and the first device #2 reads the content of the second user information field in the trigger frame and disregards the content of the first user information field in the trigger frame. An example of step 203 is as follows: The first device #1 sends a PPDU #1 on a spatial stream of the first device #1. When the first device #1 sends the PPDU #1, a spatial stream ① and a spatial stream ② of the first device #1 use a first MCS, a spatial stream ③ and a spatial stream ④ of the first device #1 use a second MCS, and a spatial stream ⑤ and a spatial stream ⑥ of the first device #1 use a fourth MCS. Another example of step 203 is as follows: The first device #1 sends a PPDU #1 on a spatial stream of the first device #1. When the first device #1 sends the PPDU #1, two spatial streams use a first MCS, two spatial streams use a second MCS, one spatial stream uses a third MCS, and three spatial streams use a fourth MCS. Another example of step 203 is as follows: The first device #2 sends a PPDU #2 on a spatial stream of the first device #2. When the first device #2 sends the PPDU #2, each spatial stream of the first device #2 uses a first MCS.

In a possible implementation, after receiving the PPDU from the first device, the second device sends an acknowledgment frame for the PPDU to the first device.

A format of the PPDU is not limited in embodiments of this application. The PPDU may be any PPDU that may include the user field. The following describes two examples of the PPDU.

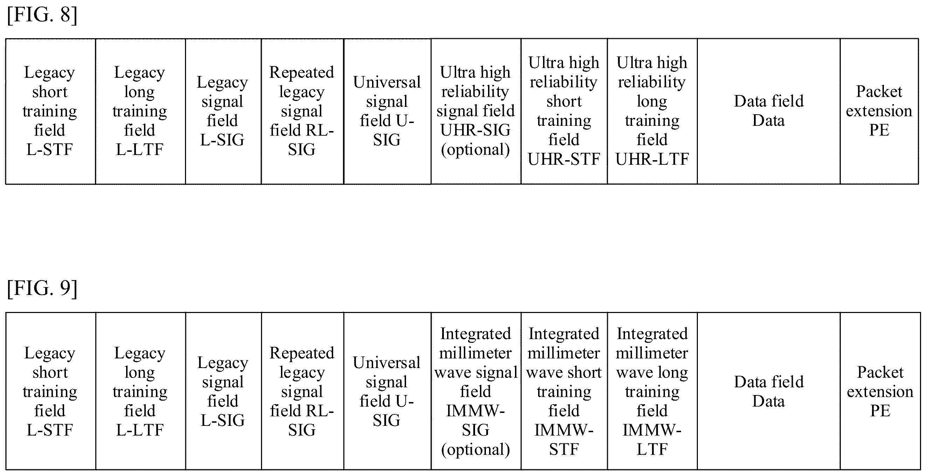

For example, the PPDU is a UHR PPDU, or may be referred to as a UHR TB PPDU, where TB represents trigger based (trigger based). An example of the PPDU is shown in FIG. 8. FIG. 8 is an example of a format of a PPDU according to an embodiment of this application. As shown in FIG. 8, the UHR PPDU includes: a legacy short training field (legacy short training field, L-STF), a legacy long training field (legacy long training field, L-LTF), a legacy signal field (legacy signal field, L-SIG), a repeated legacy signal field (repeated L-SIG, RL-SIG), a universal signal field (universal SIG, U-SIG), an ultra high reliability signal field (ultra high reliability signal field, UHR-SIG), an ultra high reliability short training field (ultra high reliability short training field, UHR-STF), an ultra high reliability long training field (ultra high reliability long training field, UHR-LTF), a data (data) field, and a packet extension (packet extension, PE) field. Table 1 shows meanings of the fields in the UHR PPDU.

**Table 1**

| **English acronyms and abbreviations** | **Complete English expression** | **Chinese expression** | Function |
|---|---|---|---|
| L-STF | Legacy Short Training Field | Legacy short training field | Used for PPDU discovery, coarse synchronization, and automatic gain control |
| L-LTF | Legacy Long Training Field | Legacy long training field | Used for precise synchronization and channel estimation |
| L-SIG | Legacy Signal Field A | Legacy signal field | Used for carrying signaling information related to a PPDU length, to ensure coexistence, where the repetition of the two fields is also used for automatic detection of a receiver |
| RL-SIG | Repeated L-SIG | Repeated legacy signal field | |
| U-SIG | Universal SIG | Universal signal field | Universal signal field, carrying signaling for demodulating subsequent data, where for 802.11be and later standards, a unified signal field is used |
| UHR-SIG | Ultra High Reliability Signal Field | Ultra high reliability signal field | Used for carrying signaling for demodulating subsequent data, where the ultra high reliability signal field is presented in different forms in different standards |
| UHR-STF | Ultra High Reliability Short Training Field | Ultra high reliability short training field | Used for automatic gain control of a subsequent field |
| UHR-LTF | Ultra High Reliability Long Training Field | Ultra high reliability long training field | Used for channel estimation |
| Data | | Data | Carry data information |
| PE | Packet Extension | Packet extension | Used for prolonging processing time of the receiver |

Because the trigger frame already carries corresponding scheduling information, the UHR TB PPDU may alternatively not have a UHR-SIG field.

For example, the PPDU is an IMMW PPDU, and the PPDU may support an IMMW standard. An example of the PPDU is shown in FIG. 9. FIG. 9 is an example of a format of another PPDU according to an embodiment of this application. As shown in FIG. 9, the IMMW PPDU includes: a legacy short training field, a legacy long training field, a legacy signal field, a repeated legacy signal field, a universal signal field, an integrated millimeter wave signal field (IMMW signal field, IMMW-SIG) (optional), an integrated millimeter wave short training field (IMMW short training field, IMMW-STF), an integrated millimeter wave long training field (IMMW long training field, IMMW-LTF), a data (data) field, and a packet extension (packet extension, PE) field. Because the trigger frame already carries corresponding scheduling information, the IMMW PPDU may not have the IMMW-SIG field.

In this embodiment of this application, the trigger frame includes the first field and the second field, the first field indicates the first MCS group, and the second field indicates the number of spatial streams corresponding to the one or more MCSs in the first MCS group. Signaling overheads are lower compared with those of indicating, by using one index, an MCS used by each spatial stream under different numbers of spatial streams.

With reference to Table 2 and Table 4, the following describes a manner in which the first field indicates the first MCS group.

In a possible implementation, a value of the first field is an index, and the index indicates an MCS group, that is, the first MCS group. The index indicated by the value of the first field may be any index in a basic MCS indication table, and one index that has been defined in the basic MCS indication table indicates one MCS group. The basic MCS indication table may be referred to as an MCS group indication table, or may be referred to as another table. This is not limited in this application. An index in the basic MCS indication table indicates a QAM combination at a specific coding rate, that is, an MCS group. Table 2 is an example of the basic MCS indication table.

**Table 2**

| Index | Modulation (Modulation) | Coding rate (Rate) |
|---|---|---|
| 0 | BPSK, QPSK, 16-QAM, and 64-QAM | 1/2 |
| 1 | QPSK, 16-QAM, 64-QAM, and 256-QAM | 1/2 |
| 2 | | 3/4 |
| 3 | 16-QAM, 64-QAM, 256-QAM, and 1024-QAM | 1/2 |
| 4 | | 3/4 |
| 5 | 64-QAM, 256-QAM, 1024-QAM, and 4096-QAM | 2/3 |
| 6 | | 3/4 |
| 7 | | 5/6 |
| 8 | BPSK-DCM, BPSK, QPSK, and 16-QAM | 1/2 |
| 9 to 15 | Reserved | |

Refer to Table 2. When the value of the first field is the index 0, the first MCS group is a combination of a first QAM combination and the coding rate of 1/2, and the first QAM combination includes BPSK, QPSK, 16-QAM, and 64-QAM. When the value of the first field is the index 1, the first MCS group is a combination of a second QAM combination and the coding rate of 1/2, and the second QAM combination includes QPSK, 16-QAM, 64-QAM, and 256-QAM. When the value of the first field is the index 2, the first MCS group is a combination of the second QAM combination and the coding rate of 3/4, and the second QAM combination includes QPSK, 16-QAM, 64-QAM, and 256-QAM. The rest may be deduced by analogy. It should be noted that Table 2 is an example of the basic MCS indication table. Compared with Table 2, the basic MCS indication table may include more or fewer correspondences between indexes and MCS groups. In addition, a correspondence between the index and the MCS group in Table 2 is not limited. In other words, a table obtained by adding, deleting, transforming, or modifying a correspondence between an index and an MCS group based on Table 2 belongs to basic MCS indication tables protected in this application.

In a possible implementation, a meaning of the index in the basic MCS indication table may correspond to a meaning of an index in an MCS indication table under the EQM modulation. Table 3 is an example of the MCS indication table under the EQM modulation.

**Table 3**

| Index | Modulation (modulation) | Coding rate (rate) |
|---|---|---|
| 0 | BPSK | 1/2 |
| 1 | QPSK | 1/2 |
| 2 | | 3/4 |
| 3 | 16-QAM | 1/2 |
| 4 | | 3/4 |
| 5 | 64-QAM | 2/3 |
| 6 | | 3/4 |
| 7 | | 5/6 |
| 8 | 256-QAM | 3/4 |
| 9 | | 5/6 |
| 10 | 1024-QAM | 3/4 |
| 11 | | 5/6 |
| 12 | 4096-QAM | 3/4 |
| 13 | | 5/6 |
| 14 | UHR duplicate (UHR duplicate, UHR DUP) | 1/2 |
| 15 | Dual carrier modulation (BPSK-dual carrier modulation, BPSK-DCM) | 1/2 |

Table 4 is another example of the basic MCS indication table.

**Table 4**

| Index | Modulation (modulation) | | Coding rate (rate) |
|---|---|---|---|
| | Meaning under the EQM (same as Table 3) | Meaning under the UEQM | |
| 0 | BPSK | BPSK, QPSK, 16-QAM, and 64-QAM | 1/2 |
| 1 | QPSK | QPSK, 16-QAM, 64-QAM, and 256-QAM | 1/2 |
| 2 | | | 3/4 |
| 3 | 16-QAM | 16-QAM, 64-QAM, 256-QAM, and 1024-QAM | 1/2 |
| 4 | | | 3/4 |
| 5 | 64-QAM | 64-QAM, 256-QAM, 1024-QAM, and 4096-QAM | 2/3 |
| 6 | | | 3/4 |
| 7 | | | 5/6 |
| 8 | 256-QAM | Reserved | 3/4 |
| 9 | | Reserved | 5/6 |
| 10 | 1024-QAM | Reserved | 3/4 |
| 11 | | Reserved | 5/6 |
| 12 | 4096-QAM | Reserved | 3/4 |
| 13 | | Reserved | 5/6 |
| 14 | UHR duplicate (UHR duplicate, UHR DUP) | Reserved | 1/2 |
| 15 | Dual carrier modulation (BPSK-dual carrier modulation, BPSK-DCM) | BPSK-DCM, BPSK, QPSK, and 16-QAM | 1/2 |

Refer to Table 4. The meaning of the index in the basic MCS indication table corresponds to the meaning of the index in the MCS indication table under the EQM modulation. Alternatively, Table 4 shows the meaning of the index under the EQM and the meaning of the index under the UEQM. Table 4 may be obtained by combining Table 2 and Table 3. For example, the index 0 indicates a combination of BPSK and 1/2 and the first MCS group, the first MCS group is the combination of the first QAM combination and the coding rate of 1/2, and the first QAM combination includes BPSK, QPSK, 16-QAM, and 64-QAM. Table 4 may be used as an MCS indication table under the EQM modulation, and may also be used as a basic MCS indication table. The first device may learn of, based on an EQM/UEQM field, whether an index in Table 4 indicates an MCS (meaning under the EQM) or an MCS group (meaning under the UEQM). For example, when a value of the EQM/UEQM field is 0, the first device learns that the index in Table 4 indicates an MCS; or when a value of the EQM/UEQM field is 1, the first device learns that the index in Table 4 indicates an MCS group. For example, when the EQM/UEQM field in a user information field indicates the EQM, if a value of a field (for example, an MCS field) in the user information field is the index 0, the field indicates the combination of BPSK and 1/2; or when the EQM/UEQM field in a user information field indicates the UEQM, if a value of a field (for example, an uplink UEQM MCS group field) in the user information field is the index 0, the field indicates the first MCS group, where the first MCS group is the combination of the first QAM combination and the coding rate of 1/2. It should be noted that Table 4 is an example of the basic MCS indication table. Compared with Table 4, the basic MCS indication table may include more or fewer correspondences between indexes and MCS groups. In addition, a correspondence between the index and the MCS group in Table 4 is not limited. In other words, a table obtained by adding, deleting, transforming, or modifying a correspondence between an index and an MCS group based on Table 4 belongs to the basic MCS indication tables protected in this application.

The foregoing describes the manner in which the first field indicates the first MCS group. The following describes a possible manner in which the second field indicates the number of spatial streams corresponding to the one or more MCSs in the first MCS group.

In a possible implementation, the second field indicates the spatial stream corresponding to the one or more MCSs in the first MCS group. In other words, the second field indicates which spatial streams of a user (for example, a first device) correspond to which MCSs in the first MCS group. In a possible implementation, the second field indicates a spatial stream boundary corresponding to any MCS in the first MCS group. In other words, the second field indicates a boundary of a spatial stream of the any MCS in the first MCS group. A spatial stream boundary corresponding to an MCS may indicate a maximum sequence number (or a maximum index) of a spatial stream using the MCS. A spatial stream corresponding to an MCS may be a spatial stream between a spatial stream boundary corresponding to the MCS (including a spatial stream corresponding to a sequence number indicated by the spatial stream boundary corresponding to the MCS) and a spatial stream boundary corresponding to a previous MCS of the MCS (excluding a spatial stream corresponding to a sequence number indicated by the spatial stream boundary corresponding to the previous MCS). For example, sequence numbers of the plurality of spatial streams corresponding to the first MCS group are successively ①, ②, ③, ...; a spatial stream whose sequence number is less than or equal to a sequence number indicated by a spatial stream boundary corresponding to the first MCS uses the first MCS; a spatial stream whose sequence number is greater than the sequence number indicated by the spatial stream boundary corresponding to the first MCS and less than or equal to a sequence number indicated by a spatial stream boundary corresponding to the second MCS uses the second MCS; a spatial stream whose sequence number is greater than the spatial stream boundary corresponding to the second MCS and is less than or equal to a sequence number indicated by a spatial stream boundary corresponding to the third MCS uses the third MCS; and the rest may be deduced by analogy. A number of spatial streams corresponding to the first MCS group is not limited in embodiments of this application.

For example, if the first MCS group includes the first MCS, the second MCS, the third MCS, and the fourth MCS, the second field indicates a spatial stream boundary corresponding to the first MCS, a spatial stream boundary corresponding to the second MCS, a spatial stream boundary corresponding to the third MCS, and a spatial stream boundary corresponding to the fourth MCS. For example, a value of the second field represents an index 175 in Table 5. Four spatial stream boundaries indicated by the index 175 are represented by 2 4 5 8, where 2 represents the spatial stream boundary corresponding to the first MCS (that is, represents that a maximum sequence number of a spatial stream using the first MCS is ②), 4 represents the spatial stream boundary corresponding to the second MCS, 5 represents the spatial stream boundary corresponding to the third MCS, and 8 represents the spatial stream boundary corresponding to the fourth MCS. The four spatial stream boundaries indicate that the first MCS corresponds to the spatial stream ① and the spatial stream ②, the second MCS corresponds to the spatial stream 0 and the spatial stream ④, the third MCS corresponds to the spatial stream ⑤, and the fourth MCS corresponds to the spatial stream ⑥, the spatial stream ⑦, and the spatial stream ⑧. For ease of understanding, the four spatial stream boundaries indicated by the second field may be understood as locations of four panels for segmenting the plurality of spatial streams corresponding to the first MCS group. The four panels correspond to four MCSs. A spatial stream whose sequence number is less than or equal to a first panel uses the first MCS. A spatial stream whose sequence number is greater than the first panel and less than or equal to a second panel uses the second MCS. A spatial stream whose sequence number is greater than the second panel and less than or equal to a third panel uses the third MCS. A spatial stream whose sequence number is greater than the third panel and less than or equal to a fourth panel uses the fourth MCS. The sequence numbers of the plurality of spatial streams corresponding to the first MCS group are successively ①, ②, ③, .... A number of spatial streams corresponding to the first MCS group is not limited.

In a possible implementation, the second field further indicates the total number of spatial streams corresponding to the first MCS group. For example, the first MCS group includes g MCSs, the value of the second field represents one index (for example, an index in Table 5), g spatial stream boundaries indicated by the index are represented by G 1 G2 ... Gg (for example, 2 4 5 8), and Gg is the total number of spatial streams corresponding to the first MCS group, where g is an integer greater than 0, G 1 represents a spatial stream boundary corresponding to a first MCS, G2 represents a spatial stream boundary corresponding to a second MCS, ..., and Gg represents a spatial stream boundary of a g^{th} MCS. G1, G2, ..., and Gg are all integers greater than 0, and G is an integer greater than 1. For example, the first MCS group includes four MCSs, the value of the second field represents one index, a spatial stream boundary corresponding to a fourth MCS indicated by the index is represented by H, the second field further indicates that the total number of spatial streams corresponding to the first MCS group is H, and H is an integer greater than 0.

FIG. 10 is an example of a correspondence between an MCS and a spatial stream according to an embodiment of this application. For example, the value of the second field represents the index 175 in Table 5, the four spatial stream boundaries indicated by the index 175 are represented by 2 4 5 8, and locations of four panels in FIG. 10 represent four spatial stream boundaries indicated by the second field. The four spatial stream boundaries indicated by the second field indicate the spatial stream corresponding to the one or more MCSs in the first MCS group. As shown in FIG. 10, a first panel is equal to 2, a second panel is equal to 4, a third panel is equal to 5, and a fourth panel is equal to 8. A first MCS corresponds to a spatial stream ① and a spatial stream ② (in other words, the spatial stream ① and the spatial stream ② use the first MCS), a second MCS corresponds to a spatial stream ③ and a spatial stream ④, a third MCS corresponds to a spatial stream ⑤, and a fourth MCS corresponds to a spatial stream ⑥, a spatial stream ⑦, and a spatial stream ⑧. Refer to FIG. 10. The total number of spatial streams corresponding to the first MCS group may be obtained based on a location of the fourth panel, in other words, the total number of spatial streams is 8.

In the panels for segmenting the plurality of spatial streams corresponding to the first MCS group, locations of more than one panel may overlap. If two panels overlap, it indicates that no spatial stream uses an MCS corresponding to the middle of the two panels. In addition, the location of the fourth panel implicitly indicates the total number of spatial streams. FIG. 11 is another example of a correspondence between an MCS and a spatial stream according to an embodiment of this application. For example, the value of the second field represents an index 169 (for example, the value of the second field is 169) in Table 5, four spatial stream boundaries indicated by the index 169 in Table 5 are represented by 2 4 4 6, and locations of four panels in FIG. 11 represent four spatial stream boundaries indicated by the second field. As shown in FIG. 11, a first panel is equal to 2, a second panel is equal to 4, a third panel is equal to 4, and a fourth panel is equal to 6. A first MCS corresponds to a spatial stream ① and a spatial stream ② (in other words, the spatial stream ① and the spatial stream ② use the first MCS), a second MCS corresponds to a spatial stream ③ and a spatial stream ④, a fourth MCS corresponds to a spatial stream ⑤ and a spatial stream ⑥, and a total number of spatial streams is 6. Refer to FIG. 11. The total number of spatial streams corresponding to the first MCS group may be obtained based on a location of the fourth panel, in other words, the total number of spatial streams is 6.

FIG. 12 is another example of a correspondence between an MCS and a spatial stream according to an embodiment of this application. For example, the value of the second field represents an index 35 in Table 5, four spatial stream boundaries indicated by the index 35 in Table 5 are represented by 1 2 2 2, and locations of four panels in FIG. 12 represent four spatial stream boundaries indicated by the second field. The four spatial stream boundaries indicated by the second field indicate the spatial stream corresponding to the one or more MCSs in the first MCS group. As shown in FIG. 12, a first panel is equal to 1, a second panel is equal to 2, a third panel is equal to 2, and a fourth panel is equal to 2. A first MCS corresponds to a spatial stream ① (in other words, the spatial stream ① uses the first MCS), a second MCS corresponds to a spatial stream ②, and a total number of spatial streams is 2. Refer to FIG. 12. The total number of spatial streams corresponding to the first MCS group may be obtained based on a location of the fourth panel, in other words, the total number of spatial streams is 2.

In a possible implementation, the second field indicates the number of spatial streams corresponding to the one or more MCSs in the first MCS group. An example in which the second field indicates the number of spatial streams corresponding to the one or more MCSs in the first MCS group is as follows: The second field indicates the spatial stream boundary corresponding to the any MCS in the first MCS group. In other words, the second field indicates a boundary of a spatial stream of the any MCS in the first MCS group. A spatial stream boundary corresponding to an MCS may be an integer. The spatial stream boundary corresponding to the first MCS in the first MCS group indicates the number of spatial streams corresponding to the first MCS. A difference between a spatial stream boundary corresponding to an m^{th} MCS and a spatial stream boundary corresponding to an (m-1)^{th} MCS in the first MCS group is a number of spatial streams corresponding to the m^{th} MCS, where m is an integer greater than or equal to 2. For example, the value of the second field represents the index 175 in Table 5. The four spatial stream boundaries indicated by the index 175 are represented by 2 4 5 8, where 2 represents the spatial stream boundary corresponding to the first MCS, 4 represents the spatial stream boundary corresponding to the second MCS, 5 represents the spatial stream boundary corresponding to the third MCS, and 8 represents the spatial stream boundary corresponding to the fourth MCS. The four spatial stream boundaries indicate that the first MCS corresponds to two spatial streams (in other words, the two spatial streams use the first MCS), the second MCS corresponds to two spatial streams, the third MCS corresponds to one spatial stream, and the fourth MCS corresponds to three spatial streams. For ease of understanding, the four spatial stream boundaries indicated by the second field may be understood as the locations of the four panels for segmenting the plurality of spatial streams corresponding to the first MCS group. The four panels correspond to the four MCSs, that is, the first MCS for case of less than or equal to the number of streams of the first panel, the second MCS for case of greater than the number of streams of the first panel and less than or equal to the number of streams of the second panel, the third MCS for case of greater than the number of streams of the second panel and less than or equal to the number of streams of the third panel, and the fourth MCS for case of greater than the number of streams of the third panel and less than or equal to the number of streams of the fourth panel.

FIG. 10 is reused. The value of the second field represents the index 175 in Table 5. The four spatial stream boundaries (that is, the four spatial stream boundaries indicated by the second field) indicated by the index 175 in Table 5 are represented by 2 4 5 8. The locations of the four panels in FIG. 10 represent the four spatial stream boundaries indicated by the second field. As shown in FIG. 10, the first panel is equal to 2, the second panel is equal to 4, the third panel is equal to 5, and the fourth panel is equal to 8, the first MCS corresponds to two spatial streams, the second MCS corresponds to two spatial streams, the third MCS corresponds to one spatial stream, and the fourth MCS corresponds to three spatial streams. FIG. 11 is reused. The value of the second field represents the index 169 in Table 5. The four spatial stream boundaries (that is, the four spatial stream boundaries indicated by the second field) indicated by the index 169 in Table 5 are represented by 2 4 4 6. The first panel is equal to 2, the second panel is equal to 4, the third panel is equal to 4, and the fourth panel is equal to 6. The first MCS corresponds to two spatial streams, the second MCS corresponds to two spatial streams, and the third MCS corresponds to zero spatial streams, the fourth MCS corresponds to two spatial streams, and the total number of spatial streams is 6.

An example in which the second field indicates the number of spatial streams corresponding to the one or more MCSs in the first MCS group is as follows: The second field indicates a number of spatial streams corresponding to each MCS in the first MCS group. In this example, the second field further indicates the total number of spatial streams corresponding to the first MCS group, and the total number of spatial streams corresponding to the first MCS group is a sum of the numbers of spatial streams corresponding to all the MCSs in the first MCS group. For example, the first MCS group includes the g MCSs, the value of the second field represents one index, and the index indicates G1 G2 ... Gg, where G1 represents a number of spatial streams corresponding to the first MCS, G2 represents a number of spatial streams corresponding to the second MCS, ..., and Gg represents a number of spatial streams corresponding to the g^{th} MCS. G1, G2, ..., and Gg are all integers greater than 0, and G is an integer greater than 1. g is an integer greater than 0. The first device may determine, based on the number of spatial streams corresponding to each MCS in the first MCS group, the MCS corresponding to each spatial stream of the first device. For example, G1=2 indicates that spatial streams corresponding to the first MCS are a 1^{st} spatial stream and a 2^{nd} spatial stream. G2=2 indicates two spatial streams (that is, a 3^{rd} spatial stream and a 4^{th} spatial stream) that correspond to the second MCS and that increase by using the last spatial stream corresponding to G1 (the 2^{nd} spatial stream) as a start point. G3=0 indicates 0 spatial streams that correspond to the third MCS and that increase by using the last spatial stream corresponding to G2 (the 4^{th} spatial stream) as a start point. G4=2 indicates two spatial streams (that is, a 5^{th} spatial stream and a 6^{th} spatial stream) that correspond to the fourth MCS and that increase by using the last spatial stream corresponding to G3 (the 4^{th} spatial stream) as a start point. In conclusion, an i^{th} MCS in the first MCS group sequentially corresponds to spatial streams represented by Gi, and the spatial streams represented by Gi corresponding to the i^{th} MCS are Gi spatial streams that increase by using the last spatial stream corresponding to (Gi-1)^{th} as a start point, where i is an integer greater than or equal to 1, and Gi is greater than or equal to 2. Spatial streams represented by G1 corresponding to the first MCS are the 1^{st} spatial stream to a G1^{th} spatial stream.

In the foregoing embodiment, one MCS group includes four MCSs, and the four spatial stream boundaries (which may be considered as the four panels) indicated by the second field indicate the spatial stream corresponding to the one or more MCSs in the first MCS group. It should be noted that in embodiments of this application, one MCS group may be extended to include M MCSs, and the second field indicates M spatial stream boundaries, to indicate a case in which the maximum number of spatial streams is N. Values of M and N are not limited in embodiments of this application. M is an integer greater than 0, and N is an integer greater than 0.

The following describes an implementation in which the second field indicates a plurality of spatial stream boundaries.

In a possible implementation, the value of the second field is an index, and the index is any index in a spatial stream grouping index table. The spatial stream grouping index table may be referred to as a UEQM spatial stream grouping index table, and a name of the spatial stream grouping index table is not limited. Any index (defined) in the spatial stream grouping index table indicates the M spatial stream boundaries. The spatial stream grouping index table includes correspondences between a plurality of indexes and a spatial stream boundary. Different spatial stream grouping index tables correspond to different maximum numbers of spatial streams. The following illustrates several spatial stream grouping index tables. Table 5 is an example of the spatial stream grouping index table provided in embodiments of this application. In Table 5, a maximum number of supported spatial streams under the UEQM is 8, in other words, one index in Table 5 corresponds to a maximum of eight spatial streams. Spatial stream grouping index tables (including Table 5) shown in this specification are merely a part of examples. For example, a spatial stream grouping index table may include only a part of the entries in Table 5. In addition, a correspondence between an index in the spatial stream grouping index table and a spatial stream boundary is not limited. Refer to Table 5. 1 1 1 2 corresponding to an index 0 represents four spatial stream boundaries. In some possible spatial stream grouping index tables, the index 1 corresponds to four spatial stream boundaries represented by 1 1 1 3. It is uniformly noted herein that tables obtained by adding, deleting, transforming, or modifying correspondences between indexes and spatial stream boundaries based on spatial stream grouping index tables (for example, Table 5 to Table 10) shown in this specification belong to spatial stream grouping index tables protected in this application.

An example of a variation of the spatial stream grouping index table (for example, Table 5 to Table 10) is as follows: A first column and a second column in the spatial stream grouping index table remain unchanged, a value of each row in a third column is changed to the value of each row in the third column minus a value of a corresponding row in the second column, a value of each row in a fourth column is changed to the value of each row in the fourth column minus a value of a corresponding row in the third column, and the rest may be deduced by analogy. In a transformed spatial stream grouping index table, a value in a column in which the m^{th} MCS is located is the number of spatial streams corresponding to the m^{th} MCS, where m is an integer greater than 0. For example, 2 4 5 8 indicated by the index 175 in Table 5 is transformed into 2 2 1 3, and 2 2 1 3 sequentially represents the number of spatial streams corresponding to the first MCS, the number of spatial streams corresponding to the second MCS, the number of spatial streams corresponding to the third MCS, and a number of spatial streams corresponding to the fourth MCS. For another example, 2 4 4 6 indicated by the index 169 in Table 5 is transformed into 2 2 0 2. Herein, only an example of the variation of the spatial stream grouping index table (for example, Table 5 to Table 10) is shown, and the spatial stream grouping index table may have another form of variation. Both the transformed spatial stream grouping index table and the untransformed spatial stream grouping index table may be used to determine an MCS corresponding to a spatial stream. Therefore, the transformed spatial stream grouping index table and the untransformed spatial stream grouping index table may be considered equivalent.

**Table 5**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 1 | 5 |
| 4 | 1 | 1 | 1 | 6 |
| 5 | 1 | 1 | 1 | 7 |
| 6 | 1 | 1 | 1 | 8 |
| 7 | 1 | 1 | 2 | 2 |
| 8 | 1 | 1 | 2 | 3 |
| 9 | 1 | 1 | 2 | 4 |
| 10 | 1 | 1 | 2 | 5 |
| 11 | 1 | 1 | 2 | 6 |
| 12 | 1 | 1 | 2 | 7 |
| 13 | 1 | 1 | 2 | 8 |
| 14 | 1 | 1 | 3 | 3 |
| 15 | 1 | 1 | 3 | 4 |
| 16 | 1 | 1 | 3 | 5 |
| 17 | 1 | 1 | 3 | 6 |
| 18 | 1 | 1 | 3 | 7 |
| 19 | 1 | 1 | 3 | 8 |
| 20 | 1 | 1 | 4 | 4 |
| 21 | 1 | 1 | 4 | 5 |
| 22 | 1 | 1 | 4 | 6 |
| 23 | 1 | 1 | 4 | 7 |
| 24 | 1 | 1 | 4 | 8 |
| 25 | 1 | 1 | 5 | 5 |
| 26 | 1 | 1 | 5 | 6 |
| 27 | 1 | 1 | 5 | 7 |
| 28 | 1 | 1 | 5 | 8 |
| 29 | 1 | 1 | 6 | 6 |
| 30 | 1 | 1 | 6 | 7 |
| 31 | 1 | 1 | 6 | 8 |
| 32 | 1 | 1 | 7 | 7 |
| 33 | 1 | 1 | 7 | 8 |
| 34 | 1 | 1 | 8 | 8 |
| 35 | 1 | 2 | 2 | 2 |
| 36 | 1 | 2 | 2 | 3 |
| 37 | 1 | 2 | 2 | 4 |
| 38 | 1 | 2 | 2 | 5 |
| 39 | 1 | 2 | 2 | 6 |
| 40 | 1 | 2 | 2 | 7 |
| 41 | 1 | 2 | 2 | 8 |
| 42 | 1 | 2 | 3 | 3 |
| 43 | 1 | 2 | 3 | 4 |
| 44 | 1 | 2 | 3 | 5 |
| 45 | 1 | 2 | 3 | 6 |
| 46 | 1 | 2 | 3 | 7 |
| 47 | 1 | 2 | 3 | 8 |
| 48 | 1 | 2 | 4 | 4 |
| 49 | 1 | 2 | 4 | 5 |
| 50 | 1 | 2 | 4 | 6 |
| 51 | 1 | 2 | 4 | 7 |
| 52 | 1 | 2 | 4 | 8 |
| 53 | 1 | 2 | 5 | 5 |
| 54 | 1 | 2 | 5 | 6 |
| 55 | 1 | 2 | 5 | 7 |
| 56 | 1 | 2 | 5 | 8 |
| 57 | 1 | 2 | 6 | 6 |
| 58 | 1 | 2 | 6 | 7 |
| 59 | 1 | 2 | 6 | 8 |
| 60 | 1 | 2 | 7 | 7 |
| 61 | 1 | 2 | 7 | 8 |
| 62 | 1 | 2 | 8 | 8 |
| 63 | 1 | 3 | 3 | 3 |
| 64 | 1 | 3 | 3 | 4 |
| 65 | 1 | 3 | 3 | 5 |
| 66 | 1 | 3 | 3 | 6 |
| 67 | 1 | 3 | 3 | 7 |
| 68 | 1 | 3 | 3 | 8 |
| 69 | 1 | 3 | 4 | 4 |
| 70 | 1 | 3 | 4 | 5 |
| 71 | 1 | 3 | 4 | 6 |
| 72 | 1 | 3 | 4 | 7 |
| 73 | 1 | 3 | 4 | 8 |
| 74 | 1 | 3 | 5 | 5 |
| 75 | 1 | 3 | 5 | 6 |
| 76 | 1 | 3 | 5 | 7 |
| 77 | 1 | 3 | 5 | 8 |
| 78 | 1 | 3 | 6 | 6 |
| 79 | 1 | 3 | 6 | 7 |
| 80 | 1 | 3 | 6 | 8 |
| 81 | 1 | 3 | 7 | 7 |
| 82 | 1 | 3 | 7 | 8 |
| 83 | 1 | 3 | 8 | 8 |
| 84 | 1 | 4 | 4 | 4 |
| 85 | 1 | 4 | 4 | 5 |
| 86 | 1 | 4 | 4 | 6 |
| 87 | 1 | 4 | 4 | 7 |
| 88 | 1 | 4 | 4 | 8 |
| 89 | 1 | 4 | 5 | 5 |
| 90 | 1 | 4 | 5 | 6 |
| 91 | 1 | 4 | 5 | 7 |
| 92 | 1 | 4 | 5 | 8 |
| 93 | 1 | 4 | 6 | 6 |
| 94 | 1 | 4 | 6 | 7 |
| 95 | 1 | 4 | 6 | 8 |
| 96 | 1 | 4 | 7 | 7 |
| 97 | 1 | 4 | 7 | 8 |
| 98 | 1 | 4 | 8 | 8 |
| 99 | 1 | 5 | 5 | 5 |
| 100 | 1 | 5 | 5 | 6 |
| 101 | 1 | 5 | 5 | 7 |
| 102 | 1 | 5 | 5 | 8 |
| 103 | 1 | 5 | 6 | 6 |
| 104 | 1 | 5 | 6 | 7 |
| 105 | 1 | 5 | 6 | 8 |
| 106 | 1 | 5 | 7 | 7 |
| 107 | 1 | 5 | 7 | 8 |
| 108 | 1 | 5 | 8 | 8 |
| 109 | 1 | 6 | 6 | 6 |
| 110 | 1 | 6 | 6 | 7 |
| 111 | 1 | 6 | 6 | 8 |
| 112 | 1 | 6 | 7 | 7 |
| 113 | 1 | 6 | 7 | 8 |
| 114 | 1 | 6 | 8 | 8 |
| 115 | 1 | 7 | 7 | 7 |
| 116 | 1 | 7 | 7 | 8 |
| 117 | 1 | 7 | 8 | 8 |
| 118 | 1 | 8 | 8 | 8 |
| 119 | 2 | 2 | 2 | 3 |
| 120 | 2 | 2 | 2 | 4 |
| 121 | 2 | 2 | 2 | 5 |
| 122 | 2 | 2 | 2 | 6 |
| 123 | 2 | 2 | 2 | 7 |
| 124 | 2 | 2 | 2 | 8 |
| 125 | 2 | 2 | 3 | 3 |
| 126 | 2 | 2 | 3 | 4 |
| 127 | 2 | 2 | 3 | 5 |
| 128 | 2 | 2 | 3 | 6 |
| 129 | 2 | 2 | 3 | 7 |
| 130 | 2 | 2 | 3 | 8 |
| 131 | 2 | 2 | 4 | 4 |
| 132 | 2 | 2 | 4 | 5 |
| 133 | 2 | 2 | 4 | 6 |
| 134 | 2 | 2 | 4 | 7 |
| 135 | 2 | 2 | 4 | 8 |
| 136 | 2 | 2 | 5 | 5 |
| 137 | 2 | 2 | 5 | 6 |
| 138 | 2 | 2 | 5 | 7 |
| 139 | 2 | 2 | 5 | 8 |
| 140 | 2 | 2 | 6 | 6 |
| 141 | 2 | 2 | 6 | 7 |
| 142 | 2 | 2 | 6 | 8 |
| 143 | 2 | 2 | 7 | 7 |
| 144 | 2 | 2 | 7 | 8 |
| 145 | 2 | 2 | 8 | 8 |
| 146 | 2 | 3 | 3 | 3 |
| 147 | 2 | 3 | 3 | 4 |
| 148 | 2 | 3 | 3 | 5 |
| 149 | 2 | 3 | 3 | 6 |
| 150 | 2 | 3 | 3 | 7 |
| 151 | 2 | 3 | 3 | 8 |
| 152 | 2 | 3 | 4 | 4 |
| 153 | 2 | 3 | 4 | 5 |
| 154 | 2 | 3 | 4 | 6 |
| 155 | 2 | 3 | 4 | 7 |
| 156 | 2 | 3 | 4 | 8 |
| 157 | 2 | 3 | 5 | 5 |
| 158 | 2 | 3 | 5 | 6 |
| 159 | 2 | 3 | 5 | 7 |
| 160 | 2 | 3 | 5 | 8 |
| 161 | 2 | 3 | 6 | 6 |
| 162 | 2 | 3 | 6 | 7 |
| 163 | 2 | 3 | 6 | 8 |
| 164 | 2 | 3 | 7 | 7 |
| 165 | 2 | 3 | 7 | 8 |
| 166 | 2 | 3 | 8 | 8 |
| 167 | 2 | 4 | 4 | 4 |
| 168 | 2 | 4 | 4 | 5 |
| 169 | 2 | 4 | 4 | 6 |
| 170 | 2 | 4 | 4 | 7 |
| 171 | 2 | 4 | 4 | 8 |
| 172 | 2 | 4 | 5 | 5 |
| 173 | 2 | 4 | 5 | 6 |
| 174 | 2 | 4 | 5 | 7 |
| 175 | 2 | 4 | 5 | 8 |
| 176 | 2 | 4 | 6 | 6 |
| 177 | 2 | 4 | 6 | 7 |
| 178 | 2 | 4 | 6 | 8 |
| 179 | 2 | 4 | 7 | 7 |
| 180 | 2 | 4 | 7 | 8 |
| 181 | 2 | 4 | 8 | 8 |
| 182 | 2 | 5 | 5 | 5 |
| 183 | 2 | 5 | 5 | 6 |
| 184 | 2 | 5 | 5 | 7 |
| 185 | 2 | 5 | 5 | 8 |
| 186 | 2 | 5 | 6 | 6 |
| 187 | 2 | 5 | 6 | 7 |
| 188 | 2 | 5 | 6 | 8 |
| 189 | 2 | 5 | 7 | 7 |
| 190 | 2 | 5 | 7 | 8 |
| 191 | 2 | 5 | 8 | 8 |
| 192 | 2 | 6 | 6 | 6 |
| 193 | 2 | 6 | 6 | 7 |
| 194 | 2 | 6 | 6 | 8 |
| 195 | 2 | 6 | 7 | 7 |
| 196 | 2 | 6 | 7 | 8 |
| 197 | 2 | 6 | 8 | 8 |
| 198 | 2 | 7 | 7 | 7 |
| 199 | 2 | 7 | 7 | 8 |
| 200 | 2 | 7 | 8 | 8 |
| 201 | 2 | 8 | 8 | 8 |
| 202 | 3 | 3 | 3 | 4 |
| 203 | 3 | 3 | 3 | 5 |
| 204 | 3 | 3 | 3 | 6 |
| 205 | 3 | 3 | 3 | 7 |
| 206 | 3 | 3 | 3 | 8 |
| 207 | 3 | 3 | 4 | 4 |
| 208 | 3 | 3 | 4 | 5 |
| 209 | 3 | 3 | 4 | 6 |
| 210 | 3 | 3 | 4 | 7 |
| 211 | 3 | 3 | 4 | 8 |
| 212 | 3 | 3 | 5 | 5 |
| 213 | 3 | 3 | 5 | 6 |
| 214 | 3 | 3 | 5 | 7 |
| 215 | 3 | 3 | 5 | 8 |
| 216 | 3 | 3 | 6 | 6 |
| 217 | 3 | 3 | 6 | 7 |
| 218 | 3 | 3 | 6 | 8 |
| 219 | 3 | 3 | 7 | 7 |
| 220 | 3 | 3 | 7 | 8 |
| 221 | 3 | 3 | 8 | 8 |
| 222 | 3 | 4 | 4 | 4 |
| 223 | 3 | 4 | 4 | 5 |
| 224 | 3 | 4 | 4 | 6 |
| 225 | 3 | 4 | 4 | 7 |
| 226 | 3 | 4 | 4 | 8 |
| 227 | 3 | 4 | 5 | 5 |
| 228 | 3 | 4 | 5 | 6 |
| 229 | 3 | 4 | 5 | 7 |
| 230 | 3 | 4 | 5 | 8 |
| 231 | 3 | 4 | 6 | 6 |
| 232 | 3 | 4 | 6 | 7 |
| 233 | 3 | 4 | 6 | 8 |
| 234 | 3 | 4 | 7 | 7 |
| 235 | 3 | 4 | 7 | 8 |
| 236 | 3 | 4 | 8 | 8 |
| 237 | 3 | 5 | 5 | 5 |
| 238 | 3 | 5 | 5 | 6 |
| 239 | 3 | 5 | 5 | 7 |
| 240 | 3 | 5 | 5 | 8 |
| 241 | 3 | 5 | 6 | 6 |
| 242 | 3 | 5 | 6 | 7 |
| 243 | 3 | 5 | 6 | 8 |
| 244 | 3 | 5 | 7 | 7 |
| 245 | 3 | 5 | 7 | 8 |
| 246 | 3 | 5 | 8 | 8 |
| 247 | 3 | 6 | 6 | 6 |
| 248 | 3 | 6 | 6 | 7 |
| 249 | 3 | 6 | 6 | 8 |
| 250 | 3 | 6 | 7 | 7 |
| 251 | 3 | 6 | 7 | 8 |
| 252 | 3 | 6 | 8 | 8 |
| 253 | 3 | 7 | 7 | 7 |
| 254 | 3 | 7 | 7 | 8 |
| 255 | 3 | 7 | 8 | 8 |
| 256 | 3 | 8 | 8 | 8 |
| 257 | 4 | 4 | 4 | 5 |
| 258 | 4 | 4 | 4 | 6 |
| 259 | 4 | 4 | 4 | 7 |
| 260 | 4 | 4 | 4 | 8 |
| 261 | 4 | 4 | 5 | 5 |
| 262 | 4 | 4 | 5 | 6 |
| 263 | 4 | 4 | 5 | 7 |
| 264 | 4 | 4 | 5 | 8 |
| 265 | 4 | 4 | 6 | 6 |
| 266 | 4 | 4 | 6 | 7 |
| 267 | 4 | 4 | 6 | 8 |
| 268 | 4 | 4 | 7 | 7 |
| 269 | 4 | 4 | 7 | 8 |
| 270 | 4 | 4 | 8 | 8 |
| 271 | 4 | 5 | 5 | 5 |
| 272 | 4 | 5 | 5 | 6 |
| 273 | 4 | 5 | 5 | 7 |
| 274 | 4 | 5 | 5 | 8 |
| 275 | 4 | 5 | 6 | 6 |
| 276 | 4 | 5 | 6 | 7 |
| 277 | 4 | 5 | 6 | 8 |
| 278 | 4 | 5 | 7 | 7 |
| 279 | 4 | 5 | 7 | 8 |
| 280 | 4 | 5 | 8 | 8 |
| 281 | 4 | 6 | 6 | 6 |
| 282 | 4 | 6 | 6 | 7 |
| 283 | 4 | 6 | 6 | 8 |
| 284 | 4 | 6 | 7 | 7 |
| 285 | 4 | 6 | 7 | 8 |
| 286 | 4 | 6 | 8 | 8 |
| 287 | 4 | 7 | 7 | 7 |
| 288 | 4 | 7 | 7 | 8 |
| 289 | 4 | 7 | 8 | 8 |
| 290 | 4 | 8 | 8 | 8 |
| 291 | 5 | 5 | 5 | 6 |
| 292 | 5 | 5 | 5 | 7 |
| 293 | 5 | 5 | 5 | 8 |
| 294 | 5 | 5 | 6 | 6 |
| 295 | 5 | 5 | 6 | 7 |
| 296 | 5 | 5 | 6 | 8 |
| 297 | 5 | 5 | 7 | 7 |
| 298 | 5 | 5 | 7 | 8 |
| 299 | 5 | 5 | 8 | 8 |
| 300 | 5 | 6 | 6 | 6 |
| 301 | 5 | 6 | 6 | 7 |
| 302 | 5 | 6 | 6 | 8 |
| 303 | 5 | 6 | 7 | 7 |
| 304 | 5 | 6 | 7 | 8 |
| 305 | 5 | 6 | 8 | 8 |
| 306 | 5 | 7 | 7 | 7 |
| 307 | 5 | 7 | 7 | 8 |
| 308 | 5 | 7 | 8 | 8 |
| 309 | 5 | 8 | 8 | 8 |
| 310 | 6 | 6 | 6 | 7 |
| 311 | 6 | 6 | 6 | 8 |
| 312 | 6 | 6 | 7 | 7 |
| 313 | 6 | 6 | 7 | 8 |
| 314 | 6 | 6 | 8 | 8 |
| 315 | 6 | 7 | 7 | 7 |
| 316 | 6 | 7 | 7 | 8 |
| 317 | 6 | 7 | 8 | 8 |
| 318 | 6 | 8 | 8 | 8 |
| 319 | 7 | 7 | 7 | 8 |
| 320 | 7 | 7 | 8 | 8 |
| 321 | 7 | 8 | 8 | 8 |
| 322 to END (for example, END=511 ) | Reserved | | | |

The index 175 in Table 5 is used as an example. The four spatial stream boundaries indicated by the index 175 are respectively represented by 2 4 5 8. To be specific, the spatial stream boundary corresponding to the first MCS is 2, the spatial stream boundary corresponding to the second MCS is 4, the spatial stream boundary corresponding to the third MCS is 5, and the spatial stream boundary corresponding to the fourth MCS is 8. The spatial streams that correspond to the one or more MCSs in the first MCS group and that are indicated by the four spatial stream boundaries indicated by the index 175 are shown in FIG. 10. Details are not described herein again. The index 169 in Table 5 is used as an example. The four spatial stream boundaries indicated by the index 169 are respectively represented by 2 4 4 6. To be specific, the spatial stream boundary corresponding to the first MCS is 2, the spatial stream boundary corresponding to the second MCS is 4, the spatial stream boundary corresponding to the third MCS is 4, and the spatial stream boundary corresponding to the fourth MCS is 6. The spatial streams that correspond to the one or more MCSs in the first MCS group and that are indicated by the four spatial stream boundaries indicated by the index 169 are shown in FIG. 11. Details are not described herein again. The index 35 in Table 5 is used as an example. The four spatial stream boundaries indicated by the index 35 are respectively represented by 1 2 2 2. To be specific, the spatial stream boundary corresponding to the first MCS is 1, the spatial stream boundary corresponding to the second MCS is 2, the spatial stream boundary corresponding to the third MCS is 2, and the spatial stream boundary corresponding to the fourth MCS is 2. The spatial streams that correspond to the one or more MCSs in the first MCS group and that are indicated by the four spatial stream boundaries indicated by the index 35 are shown in FIG. 12. Details are not described herein again.

Table 6 is an example of another spatial stream grouping index table provided in embodiments of this application. In Table 6, a maximum number of supported spatial streams under the UEQM is 4, in other words, one index in Table 6 corresponds to a maximum of four spatial streams.

**Table 6**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 2 | 2 |
| 4 | 1 | 1 | 2 | 3 |
| 5 | 1 | 1 | 2 | 4 |
| 6 | 1 | 1 | 3 | 3 |
| 7 | 1 | 1 | 3 | 4 |
| 8 | 1 | 1 | 4 | 4 |
| 9 | 1 | 2 | 2 | 2 |
| 10 | 1 | 2 | 2 | 3 |
| 11 | 1 | 2 | 2 | 4 |
| 12 | 1 | 2 | 3 | 3 |
| 13 | 1 | 2 | 3 | 4 |
| 14 | 1 | 2 | 4 | 4 |
| 15 | 1 | 3 | 3 | 3 |
| 16 | 1 | 3 | 3 | 4 |
| 17 | 1 | 3 | 4 | 4 |
| 18 | 1 | 4 | 4 | 4 |
| 19 | 2 | 2 | 2 | 3 |
| 20 | 2 | 2 | 2 | 4 |
| 21 | 2 | 2 | 3 | 3 |
| 22 | 2 | 2 | 3 | 4 |
| 23 | 2 | 2 | 4 | 4 |
| 24 | 2 | 3 | 3 | 3 |
| 25 | 2 | 3 | 3 | 4 |
| 26 | 2 | 3 | 4 | 4 |
| 27 | 2 | 4 | 4 | 4 |
| 28 | 3 | 3 | 3 | 4 |
| 29 | 3 | 3 | 4 | 4 |
| 30 | 3 | 4 | 4 | 4 |
| 31 to END (for example, END=31, only one line) | Reserved | | | |

The index 9 in Table 6 is used as an example. Four spatial stream boundaries indicated by the index 9 are respectively represented by 1 2 2 2. To be specific, the spatial stream boundary corresponding to the first MCS is 1, the spatial stream boundary corresponding to the second MCS is 2, the spatial stream boundary corresponding to the third MCS is 2, and the spatial stream boundary corresponding to the fourth MCS is 2. The spatial streams that correspond to the one or more MCSs in the first MCS group and that are indicated by the four spatial stream boundaries indicated by the index 9 are shown in FIG. 12. Details are not described herein again.

When it is assumed that the maximum number of supported spatial streams under the UEQM is 4, the second field may occupy 5 bits. Compared with an MCS indication (4 bits) under the EQM modulation, only additional 1 bit needs to be provided, to ensure an approximately same length. For example, by using a reserved bit or a beamformed bit, user information fields under the EQM and the UEQM can be easily equal in length.

To further reduce a number of entries in the spatial stream grouping index table, a number of spatial streams that correspond to a same MCS and that are indicated by one index in the spatial stream grouping index table may be limited to being less than or equal to a first threshold. In a possible implementation, the number of spatial streams that correspond to the same MCS and that are indicated by the second field is less than or equal to the first threshold, and the first threshold is a positive integer less than 8. For example, the first threshold is any one of 4, 5, 6, and 7. Because if a number of streams (that is, a number of spatial streams) corresponding to one MCS exceeds the first threshold, the EQM may be used, or two MCSs may be used for replacement. Table 7 is an example of another spatial stream grouping index table provided in embodiments of this application. In Table 7, a maximum number of supported spatial streams under the UEQM is 8. A number of spatial streams that correspond to a same MCS and that are indicated by each index in Table 7 is less than or equal to 4. Table 7 may be understood as being obtained by optimizing Table 5 in an optimization manner 1. Optimizing Table 5 in the optimization manner 1 means removing (deleting) one or more indexes in Table 5, where a number of spatial streams that correspond to a same MCS and that are indicated by the one or more indexes is greater than the first threshold.

**Table 7**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 1 | 5 |
| 4 | 1 | 1 | 2 | 2 |
| 5 | 1 | 1 | 2 | 3 |
| 6 | 1 | 1 | 2 | 4 |
| 7 | 1 | 1 | 2 | 5 |
| 8 | 1 | 1 | 2 | 6 |
| 9 | 1 | 1 | 3 | 3 |
| 10 | 1 | 1 | 3 | 4 |
| 11 | 1 | 1 | 3 | 5 |
| 12 | 1 | 1 | 3 | 6 |
| 13 | 1 | 1 | 3 | 7 |
| 14 | 1 | 1 | 4 | 4 |
| 15 | 1 | 1 | 4 | 5 |
| 16 | 1 | 1 | 4 | 6 |
| 17 | 1 | 1 | 4 | 7 |
| 18 | 1 | 1 | 4 | 8 |
| 19 | 1 | 1 | 5 | 5 |
| 20 | 1 | 1 | 5 | 6 |
| 21 | 1 | 1 | 5 | 7 |
| 22 | 1 | 1 | 5 | 8 |
| 23 | 1 | 2 | 2 | 2 |
| 24 | 1 | 2 | 2 | 3 |
| 25 | 1 | 2 | 2 | 4 |
| 26 | 1 | 2 | 2 | 5 |
| 27 | 1 | 2 | 2 | 6 |
| 28 | 1 | 2 | 3 | 3 |
| 29 | 1 | 2 | 3 | 4 |
| 30 | 1 | 2 | 3 | 5 |
| 31 | 1 | 2 | 3 | 6 |
| 32 | 1 | 2 | 3 | 7 |
| 33 | 1 | 2 | 4 | 4 |
| 34 | 1 | 2 | 4 | 5 |
| 35 | 1 | 2 | 4 | 6 |
| 36 | 1 | 2 | 4 | 7 |
| 37 | 1 | 2 | 4 | 8 |
| 38 | 1 | 2 | 5 | 5 |
| 39 | 1 | 2 | 5 | 6 |
| 40 | 1 | 2 | 5 | 7 |
| 41 | 1 | 2 | 5 | 8 |
| 42 | 1 | 2 | 6 | 6 |
| 43 | 1 | 2 | 6 | 7 |
| 44 | 1 | 2 | 6 | 8 |
| 45 | 1 | 3 | 3 | 3 |
| 46 | 1 | 3 | 3 | 4 |
| 47 | 1 | 3 | 3 | 5 |
| 48 | 1 | 3 | 3 | 6 |
| 49 | 1 | 3 | 3 | 7 |
| *50* | 1 | 3 | 4 | 4 |
| 51 | 1 | 3 | 4 | 5 |
| 52 | 1 | 3 | 4 | 6 |
| 53 | 1 | 3 | 4 | 7 |
| 54 | 1 | 3 | 4 | 8 |
| 55 | 1 | 3 | 5 | 5 |
| 56 | 1 | 3 | 5 | 6 |
| 57 | 1 | 3 | 5 | 7 |
| 58 | 1 | 3 | 5 | 8 |
| 59 | 1 | 3 | 6 | 6 |
| 60 | 1 | 3 | 6 | 7 |
| 61 | 1 | 3 | 6 | 8 |
| 62 | 1 | 3 | 7 | 7 |
| 63 | 1 | 3 | 7 | 8 |
| 64 | 1 | 4 | 4 | 4 |
| 65 | 1 | 4 | 4 | 5 |
| 66 | 1 | 4 | 4 | 6 |
| 67 | 1 | 4 | 4 | 7 |
| 68 | 1 | 4 | 4 | 8 |
| 69 | 1 | 4 | 5 | 5 |
| 70 | 1 | 4 | 5 | 6 |
| 71 | 1 | 4 | 5 | 7 |
| 72 | 1 | 4 | 5 | 8 |
| 73 | 1 | 4 | 6 | 6 |
| 74 | 1 | 4 | 6 | 7 |
| 75 | 1 | 4 | 6 | 8 |
| 76 | 1 | 4 | 7 | 7 |
| 77 | 1 | 4 | 7 | 8 |
| 78 | 1 | 4 | 8 | 8 |
| 79 | 1 | 5 | 5 | 5 |
| 80 | 1 | 5 | 5 | 6 |
| 81 | 1 | 5 | 5 | 7 |
| 82 | 1 | 5 | 5 | 8 |
| 83 | 1 | 5 | 6 | 6 |
| 84 | 1 | 5 | 6 | 7 |
| 85 | 1 | 5 | 6 | 8 |
| 86 | 1 | 5 | 7 | 7 |
| 87 | 1 | 5 | 7 | 8 |
| 88 | 1 | 5 | 8 | 8 |
| 89 | 2 | 2 | 2 | 3 |
| 90 | 2 | 2 | 2 | 4 |
| 91 | 2 | 2 | 2 | 5 |
| 92 | 2 | 2 | 2 | 6 |
| 93 | 2 | 2 | 3 | 3 |
| 94 | 2 | 2 | 3 | 4 |
| 95 | 2 | 2 | 3 | 5 |
| 96 | 2 | 2 | 3 | 6 |
| 97 | 2 | 2 | 3 | 7 |
| 98 | 2 | 2 | 4 | 4 |
| 99 | 2 | 2 | 4 | 5 |
| 100 | 2 | 2 | 4 | 6 |
| 101 | 2 | 2 | 4 | 7 |
| 102 | 2 | 2 | 4 | 8 |
| 103 | 2 | 2 | 5 | 5 |
| 104 | 2 | 2 | 5 | 6 |
| *105* | 2 | 2 | 5 | 7 |
| 106 | 2 | 2 | 5 | 8 |
| 107 | 2 | 2 | 6 | 6 |
| 108 | 2 | 2 | 6 | 7 |
| 109 | 2 | 2 | 6 | 8 |
| 110 | 2 | 3 | 3 | 3 |
| 111 | 2 | 3 | 3 | 4 |
| 112 | 2 | 3 | 3 | 5 |
| 113 | 2 | 3 | 3 | 6 |
| 114 | 2 | 3 | 3 | 7 |
| 115 | 2 | 3 | 4 | 4 |
| 116 | 2 | 3 | 4 | 5 |
| 117 | 2 | 3 | 4 | 6 |
| 118 | 2 | 3 | 4 | 7 |
| 119 | 2 | 3 | 4 | 8 |
| 120 | 2 | 3 | 5 | 5 |
| 121 | 2 | 3 | 5 | 6 |
| 122 | 2 | 3 | 5 | 7 |
| 123 | 2 | 3 | 5 | 8 |
| 124 | 2 | 3 | 6 | 6 |
| 125 | 2 | 3 | 6 | 7 |
| 126 | 2 | 3 | 6 | 8 |
| 127 | 2 | 3 | 7 | 7 |
| 128 | 2 | 3 | 7 | 8 |
| 129 | 2 | 4 | 4 | 4 |
| 130 | 2 | 4 | 4 | 5 |
| 131 | 2 | 4 | 4 | 6 |
| 132 | 2 | 4 | 4 | 7 |
| 133 | 2 | 4 | 4 | 8 |
| 134 | 2 | 4 | 5 | 5 |
| 135 | 2 | 4 | 5 | 6 |
| 136 | 2 | 4 | 5 | 7 |
| 137 | 2 | 4 | 5 | 8 |
| 138 | 2 | 4 | 6 | 6 |
| 139 | 2 | 4 | 6 | 7 |
| 140 | 2 | 4 | 6 | 8 |
| 141 | 2 | 4 | 7 | 7 |
| 142 | 2 | 4 | 7 | 8 |
| 143 | 2 | 4 | 8 | 8 |
| 144 | 2 | 5 | 5 | 5 |
| 145 | 2 | 5 | 5 | 6 |
| 146 | 2 | 5 | 5 | 7 |
| 147 | 2 | 5 | 5 | 8 |
| 148 | 2 | 5 | 6 | 6 |
| 149 | 2 | 5 | 6 | 7 |
| 150 | 2 | 5 | 6 | 8 |
| 151 | 2 | 5 | 7 | 7 |
| 152 | 2 | 5 | 7 | 8 |
| 153 | 2 | 5 | 8 | 8 |
| 154 | 2 | 6 | 6 | 6 |
| 155 | 2 | 6 | 6 | 7 |
| 156 | 2 | 6 | 6 | 8 |
| 157 | 2 | 6 | 7 | 7 |
| 158 | 2 | 6 | 7 | 8 |
| 159 | 2 | 6 | 8 | 8 |
| 160 | 3 | 3 | 3 | 4 |
| 161 | 3 | 3 | 3 | 5 |
| 162 | 3 | 3 | 3 | 6 |
| 163 | 3 | 3 | 3 | 7 |
| 164 | 3 | 3 | 4 | 4 |
| 165 | 3 | 3 | 4 | 5 |
| 166 | 3 | 3 | 4 | 6 |
| 167 | 3 | 3 | 4 | 7 |
| 168 | 3 | 3 | 4 | 8 |
| 169 | 3 | 3 | 5 | 5 |
| 170 | 3 | 3 | 5 | 6 |
| 171 | 3 | 3 | 5 | 7 |
| 172 | 3 | 3 | 5 | 8 |
| 173 | 3 | 3 | 6 | 6 |
| 174 | 3 | 3 | 6 | 7 |
| 175 | 3 | 3 | 6 | 8 |
| 176 | 3 | 3 | 7 | 7 |
| 177 | 3 | 3 | 7 | 8 |
| 178 | 3 | 4 | 4 | 4 |
| 179 | 3 | 4 | 4 | 5 |
| 180 | 3 | 4 | 4 | 6 |
| 181 | 3 | 4 | 4 | 7 |
| 182 | 3 | 4 | 4 | 8 |
| 183 | 3 | 4 | 5 | 5 |
| 184 | 3 | 4 | 5 | 6 |
| 185 | 3 | 4 | 5 | 7 |
| 186 | 3 | 4 | 5 | 8 |
| 187 | 3 | 4 | 6 | 6 |
| 188 | 3 | 4 | 6 | 7 |
| 189 | 3 | 4 | 6 | 8 |
| 190 | 3 | 4 | 7 | 7 |
| 191 | 3 | 4 | 7 | 8 |
| 192 | 3 | 4 | 8 | 8 |
| 193 | 3 | 5 | 5 | 5 |
| 194 | 3 | 5 | 5 | 6 |
| 195 | 3 | 5 | 5 | 7 |
| 196 | 3 | 5 | 5 | 8 |
| 197 | 3 | 5 | 6 | 6 |
| 198 | 3 | 5 | 6 | 7 |
| 199 | 3 | 5 | 6 | 8 |
| 200 | 3 | 5 | 7 | 7 |
| 201 | 3 | 5 | 7 | 8 |
| 202 | 3 | 5 | 8 | 8 |
| 203 | 3 | 6 | 6 | 6 |
| 204 | 3 | 6 | 6 | 7 |
| 205 | 3 | 6 | 6 | 8 |
| 206 | 3 | 6 | 7 | 7 |
| 207 | 3 | 6 | 7 | 8 |
| 208 | 3 | 6 | 8 | 8 |
| 209 | 3 | 7 | 7 | 7 |
| 210 | 3 | 7 | 7 | 8 |
| 211 | 3 | 7 | 8 | 8 |
| 212 | 4 | 4 | 4 | 5 |
| 213 | 4 | 4 | 4 | 6 |
| 214 | 4 | 4 | 4 | 7 |
| 215 | 4 | 4 | 4 | 8 |
| 216 | 4 | 4 | 5 | 5 |
| 217 | 4 | 4 | 5 | 6 |
| 218 | 4 | 4 | 5 | 7 |
| 219 | 4 | 4 | 5 | 8 |
| 220 | 4 | 4 | 6 | 6 |
| 221 | 4 | 4 | 6 | 7 |
| 222 | 4 | 4 | 6 | 8 |
| 223 | 4 | 4 | 7 | 7 |
| 224 | 4 | 4 | 7 | 8 |
| 225 | 4 | 4 | 8 | 8 |
| 226 | 4 | 5 | 5 | 5 |
| 227 | 4 | 5 | 5 | 6 |
| 228 | 4 | 5 | 5 | 7 |
| 229 | 4 | 5 | 5 | 8 |
| 230 | 4 | 5 | 6 | 6 |
| 231 | 4 | 5 | 6 | 7 |
| 232 | 4 | 5 | 6 | 8 |
| 233 | 4 | 5 | 7 | 7 |
| 234 | 4 | 5 | 7 | 8 |
| 235 | 4 | 5 | 8 | 8 |
| 236 | 4 | 6 | 6 | 6 |
| 237 | 4 | 6 | 6 | 7 |
| 238 | 4 | 6 | 6 | 8 |
| 239 | 4 | 6 | 7 | 7 |
| 240 | 4 | 6 | 7 | 8 |
| 241 | 4 | 6 | 8 | 8 |
| 242 | 4 | 7 | 7 | 7 |
| 243 | 4 | 7 | 7 | 8 |
| 244 | 4 | 7 | 8 | 8 |
| 245 | 4 | 8 | 8 | 8 |
| 246 | 5 | 5 | 5 | 6 |
| 247 | 5 | 5 | 5 | 7 |
| 248 | 5 | 5 | 5 | 8 |
| 249 | 5 | 5 | 6 | 6 |
| 250 | 5 | 5 | 6 | 7 |
| 251 | 5 | 5 | 6 | 8 |
| 252 | 5 | 5 | 7 | 7 |
| 253 | 5 | 5 | 7 | 8 |
| 254 | 5 | 5 | 8 | 8 |
| 255 | 5 | 6 | 6 | 6 |
| 256 | 5 | 6 | 6 | 7 |
| 257 | 5 | 6 | 6 | 8 |
| 258 | 5 | 6 | 7 | 7 |
| 259 | 5 | 6 | 7 | 8 |
| 260 | 5 | 6 | 8 | 8 |
| 261 | 5 | 7 | 7 | 7 |
| 262 | 5 | 7 | 7 | 8 |
| 263 | 5 | 7 | 8 | 8 |
| 264 | 5 | 8 | 8 | 8 |
| 265 | 6 | 6 | 6 | 7 |
| 266 | 6 | 6 | 6 | 8 |
| 267 | 6 | 6 | 7 | 7 |
| 268 | 6 | 6 | 7 | 8 |
| 269 | 6 | 6 | 8 | 8 |
| 270 | 6 | 7 | 7 | 7 |
| 271 | 6 | 7 | 7 | 8 |
| 272 | 6 | 7 | 8 | 8 |
| 273 | 6 | 8 | 8 | 8 |
| 274 | 7 | 7 | 7 | 8 |
| 275 | 7 | 7 | 8 | 8 |
| 276 | 7 | 8 | 8 | 8 |
| 277 to END (for example, END=511) | Reserved | | | |

It can be learned by comparing Table 7 and Table 5 that, when the optimization manner 1 is used, compared with Table 7, a number of entries in Table 5 is reduced by 321-276=45. This reduces complexity of a transmitter and a receiver. If some entries are further deleted from Table 7, the number of entries in the spatial stream grouping index table may be reduced to less than 256. When a number of entries in a spatial stream grouping index table used by the second device and the first device are reduced to less than 256, the length of the second field may be 8 bits.

Further, entries in the spatial stream grouping index table can be reduced by limiting a maximum of one MCS corresponding to an odd number of spatial stream in the number of spatial streams that correspond to the one or more MCSs and that are indicated by the second field. For example, in the number of spatial streams that correspond to the one or more MCSs and that are indicated by the second field, a maximum of one MCS corresponds to an odd number of spatial stream. For example, in a number of spatial streams that correspond to the M MCSs and that are indicated by the second field, a number of spatial streams corresponding to a first MCS to a number of spatial streams corresponding to an (M-1)^{th} MCS are all even numbers, a number of spatial streams corresponding to an M^{th} MCS is an even number or an odd number, and M is an integer greater than 0. For example, Table 5 is optimized in the optimization manner 2. Optimizing Table 5 in the optimization manner 2 means removing (deleting) one or more indexes in Table 5. In numbers of spatial streams that correspond to one or more MCSs and that are indicated by the one or more indexes, numbers of spatial streams corresponding to at least two MCSs are odd numbers. Table 8 is an example of another spatial stream grouping index table provided in embodiments of this application. In Table 8, a maximum number of supported spatial streams under the UEQM is 8. Table 8 is obtained by optimizing Table 5 in the optimization manner 1 and the optimization manner 2. In other words, Table 8 is obtained by optimizing Table 7 in the optimization manner 2.

**Table 8**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 2 | 2 | 2 | 3 |
| 1 | 2 | 2 | 2 | 4 |
| 2 | 2 | 2 | 2 | 5 |
| 3 | 2 | 2 | 2 | 6 |
| 4 | 2 | 2 | 4 | 4 |
| 5 | 2 | 2 | 4 | 5 |
| 6 | 2 | 2 | 4 | 6 |
| 7 | 2 | 2 | 4 | 7 |
| 8 | 2 | 2 | 4 | 8 |
| 9 | 2 | 2 | 6 | 6 |
| 10 | 2 | 2 | 6 | 7 |
| 11 | 2 | 2 | 6 | 8 |
| 12 | 2 | 4 | 4 | 4 |
| 13 | 2 | 4 | 4 | 5 |
| 14 | 2 | 4 | 4 | 6 |
| 15 | 2 | 4 | 4 | 7 |
| 16 | 2 | 4 | 4 | 8 |
| 17 | 2 | 4 | 6 | 6 |
| 18 | 2 | 4 | 6 | 7 |
| 19 | 2 | 4 | 6 | 8 |
| 20 | 2 | 4 | 8 | 8 |
| 21 | 2 | 6 | 6 | 6 |
| 22 | 2 | 6 | 6 | 7 |
| 23 | 2 | 6 | 6 | 8 |
| 24 | 2 | 6 | 8 | 8 |
| 25 | 4 | 4 | 4 | 5 |
| 26 | 4 | 4 | 4 | 6 |
| 27 | 4 | 4 | 4 | 7 |
| 28 | 4 | 4 | 4 | 8 |
| 29 | 4 | 4 | 6 | 6 |
| 30 | 4 | 4 | 6 | 7 |
| 31 | 4 | 4 | 6 | 8 |
| 32 | 4 | 4 | 8 | 8 |
| 33 | 4 | 6 | 6 | 6 |
| 34 | 4 | 6 | 6 | 7 |
| 35 | 4 | 6 | 6 | 8 |
| 36 | 4 | 6 | 8 | 8 |
| 37 | 4 | 8 | 8 | 8 |
| 38 | 6 | 6 | 6 | 7 |
| 39 | 6 | 6 | 6 | 8 |
| 40 | 6 | 6 | 8 | 8 |
| 41 | 6 | 8 | 8 | 8 |
| 42 to END (for example, END=63) | Reserved | | | |

There are 12 entries in Table 8, which greatly reduces complexity of the transmitter and the receiver. When the used spatial stream grouping index table is Table 8, the length of the second field may be 6 bits.

When the spatial stream grouping index table (for example, Table 7) is optimized in the optimization manner 2, a case in which each MCS in the spatial stream grouping index table corresponds to one spatial stream is prohibited (or deleted), in other words, a case in which each spatial stream uses a different MCS. For example, the case in which each MCS corresponds to one spatial stream may be used as a special example, and is added back to Table 8, which is referred to as an optimization manner 3. Table 9 is an example of another spatial stream grouping index table provided in embodiments of this application. In Table 9, a maximum number of supported spatial streams under the UEQM is 8. Table 9 may be obtained by optimizing Table 8 in the optimization manner 3, that is, the case in which each MCS corresponds to one spatial stream is added back to Table 8.

**Table 9**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 2 | 2 | 2 | 3 |
| 1 | 2 | 2 | 2 | 4 |
| 2 | 2 | 2 | 2 | 5 |
| 3 | 2 | 2 | 2 | 6 |
| 4 | 2 | 2 | 4 | 4 |
| 5 | 2 | 2 | 4 | 5 |
| 6 | 2 | 2 | 4 | 6 |
| 7 | 2 | 2 | 4 | 7 |
| 8 | 2 | 2 | 4 | 8 |
| 9 | 2 | 2 | 6 | 6 |
| 10 | 2 | 2 | 6 | 7 |
| 11 | 2 | 2 | 6 | 8 |
| 12 | 2 | 4 | 4 | 4 |
| 13 | 2 | 4 | 4 | 5 |
| 14 | 2 | 4 | 4 | 6 |
| 15 | 2 | 4 | 4 | 7 |
| 16 | 2 | 4 | 4 | 8 |
| 17 | 2 | 4 | 6 | 6 |
| 18 | 2 | 4 | 6 | 7 |
| 19 | 2 | 4 | 6 | 8 |
| 20 | 2 | 4 | 8 | 8 |
| 21 | 2 | 6 | 6 | 6 |
| 22 | 2 | 6 | 6 | 7 |
| 23 | 2 | 6 | 6 | 8 |
| 24 | 2 | 6 | 8 | 8 |
| 25 | 4 | 4 | 4 | 5 |
| 26 | 4 | 4 | 4 | 6 |
| 27 | 4 | 4 | 4 | 7 |
| 28 | 4 | 4 | 4 | 8 |
| 29 | 4 | 4 | 6 | 6 |
| 30 | 4 | 4 | 6 | 7 |
| 31 | 4 | 4 | 6 | 8 |
| 32 | 4 | 4 | 8 | 8 |
| 33 | 4 | 6 | 6 | 6 |
| 34 | 4 | 6 | 6 | 7 |
| 35 | 4 | 6 | 6 | 8 |
| 36 | 4 | 6 | 8 | 8 |
| 37 | 4 | 8 | 8 | 8 |
| 38 | 6 | 6 | 6 | 7 |
| 39 | 6 | 6 | 6 | 8 |
| 40 | 6 | 6 | 8 | 8 |
| 41 | 6 | 8 | 8 | 8 |
| 42 | 1 | 1 | 1 | 2 |
| 43 | 1 | 1 | 2 | 2 |
| 44 | 1 | 1 | 2 | 3 |
| 45 | 1 | 2 | 2 | 2 |
| 46 | 1 | 2 | 2 | 3 |
| 47 | 1 | 2 | 3 | 3 |
| 48 | 1 | 2 | 3 | 4 |
| 49 to END (for example, END=63) | Reserved | | | |

In a possible implementation, one or more indexes in the spatial stream grouping index table indicate the EQM and a number of spatial streams under the EQM, and the one or more indexes may be understood as an indication of the number of spatial streams under the EQM. When a part of indexes in the spatial stream grouping index table indicate spatial stream boundaries (for example, the index 0 in Table 10), and a part of indexes indicate the EQM and the number of spatial streams under the EQM (for example, an index 31 in Table 10), that is, the UEQM and the EQM use a unified spatial stream allocation indication field, that is, the second field, an indication of the EQM/UEQM can be reduced.

Table 10 is an example of another spatial stream grouping index table provided in embodiments of this application. In Table 10, a maximum number of supported spatial streams under the UEQM is 4. In Table 10, EQM transmission of one spatial stream to eight spatial streams corresponding to indexes 31 to 38 may be added based on Table 6. For example, the index 31 indicates EQM with a number of spatial streams equal to 1, and the index 32 indicates EQM with a number of spatial streams equal to 2. In this application, one row in one table is one entry. A sequence of entries in Table 10 is not limited. For example, the indexes 31 to 38 may alternatively be located at the front of Table 10, to be specific, the index 0 indicates EQM with NSS=1. A number of indexes indicating the EQM and the number of spatial streams under the EQM in Table 10 is not limited. For example, the last index in Table 10 is 31. For another example, the last index in Table 10 is 34.

**Table 10**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 2 | 2 |
| 4 | 1 | 1 | 2 | 3 |
| 5 | 1 | 1 | 2 | 4 |
| 6 | 1 | 1 | 3 | 3 |
| 7 | 1 | 1 | 3 | 4 |
| 8 | 1 | 1 | 4 | 4 |
| 9 | 1 | 2 | 2 | 2 |
| 10 | 1 | 2 | 2 | 3 |
| 11 | 1 | 2 | 2 | 4 |
| 12 | 1 | 2 | 3 | 3 |
| 13 | 1 | 2 | 3 | 4 |
| 14 | 1 | 2 | 4 | 4 |
| 15 | 1 | 3 | 3 | 3 |
| 16 | 1 | 3 | 3 | 4 |
| 17 | 1 | 3 | 4 | 4 |
| 18 | 1 | 4 | 4 | 4 |
| 19 | 2 | 2 | 2 | 3 |
| 20 | 2 | 2 | 2 | 4 |
| 21 | 2 | 2 | 3 | 3 |
| 22 | 2 | 2 | 3 | 4 |
| 23 | 2 | 2 | 4 | 4 |
| 24 | 2 | 3 | 3 | 3 |
| 25 | 2 | 3 | 3 | 4 |
| 26 | 2 | 3 | 4 | 4 |
| 27 | 2 | 4 | 4 | 4 |
| 28 | 3 | 3 | 3 | 4 |
| 29 | 3 | 3 | 4 | 4 |
| 30 | 3 | 4 | 4 | 4 |
| 31 | EQM with NSS=1 | | | |
| 32 | EQM with NSS=2 | | | |
| 33 | EQM with NSS=3 | | | |
| 34 | EQM with NSS=4 | | | |
| 35 | EQM with NSS=5 | | | |
| 36 | EQM with NSS=6 | | | |
| 37 | EQM with NSS=7 | | | |
| 38 | EQM with NSS=8 | | | |
| 39 to END (for example, END=63, only one line) | Reserved | | | |

In a possible implementation, the second field indicates a number of spatial streams corresponding to one MCS in the first MCS group, or the second field indicates a number of spatial streams corresponding to a plurality of MCSs in the first MCS group. For example, when a value indicated by the second field is a first index, the second field indicates the number of spatial streams corresponding to the one MCS in the first MCS group; or when a value indicated by the second field is a second index, the second field indicates the number of spatial streams corresponding to the plurality of MCSs in the first MCS group. That the second field indicates the number of spatial streams corresponding to the one MCS in the first MCS group may be that the second field indicates the EQM and the number of spatial streams under the EQM. For example, the first index is any one of the index 0 to the index 30 in Table 10, and the second index is any one of the index 31 to the index 38 in Table 10. In this specification, a value indicated by a field may be a value of the field.

The following describes a manner of flexibly indicating, by using Table 10, different MCSs used by a plurality of spatial streams.

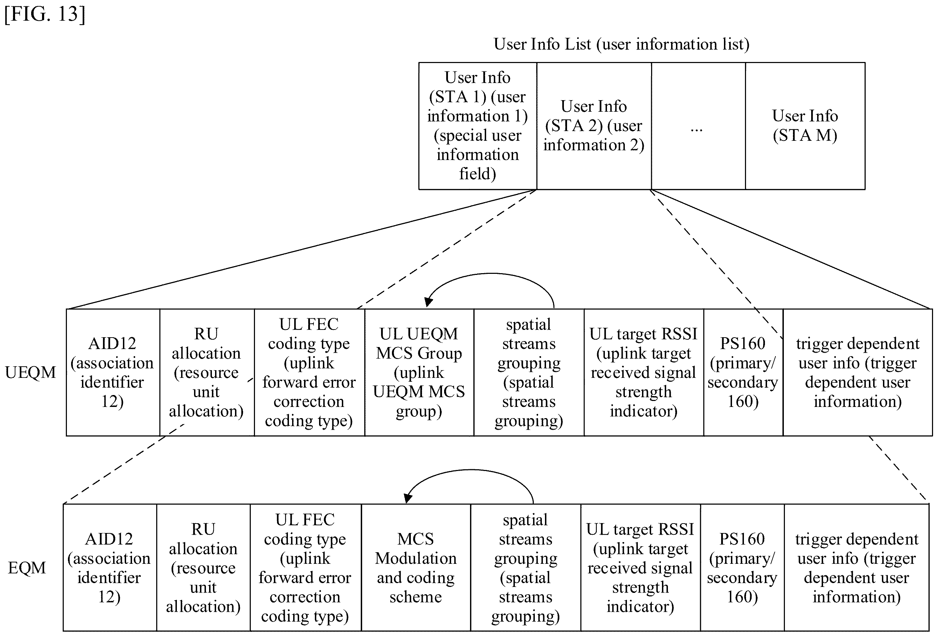

In a possible implementation, the user information list field in the trigger frame includes one user information field, and the user information field includes the second field. The user information field in the user information list field has two possible formats. FIG. 13 is another example of a format of a user information list field in the trigger frame according to an embodiment of this application. FIG. 13 shows user information fields in two formats. One user information field (corresponding to the UEQM) includes an association identifier 12 field, a resource unit allocation field, an uplink forward error correction coding type field, an uplink UEQM MCS group field (that is, the first field), a spatial streams grouping field (that is, the second field), an uplink target received signal strength indicator field, a primary/secondary 160 field, and trigger dependent user information field. The spatial streams grouping field indicates the number of spatial streams corresponding to the one or more MCSs in the first MCS group. The other user information field (corresponding to the EQM) includes an association identifier 12 field, a resource unit allocation field, an uplink forward error correction coding type field, an MCS field, a spatial streams grouping field (that is, the second field), an uplink target received signal strength indicator field, a primary/secondary 160 field, and a trigger dependent user information field. The spatial streams grouping field indicates the EQM and the number of spatial streams under the EQM. For functions of the fields in FIG. 13, refer to the descriptions of the fields in FIG. 3. Lengths of the user information fields in two formats shown in FIG. 13 are equal or unequal. FIG. 13 shows an example in which the lengths of the user information fields in two formats are equal, to be specific, a length of the MCS field in the user information field corresponding to the EQM is equal to a length of the uplink UEQM MCS group field in the user information field corresponding to the UEQM. The two formats of the user information field shown in FIG. 13 are merely examples. The format of the user information field may be another format, in other words, different from the format of the user information field shown in FIG. 13. In a possible implementation, the user information field corresponding to the EQM includes one or more reserved fields, the user information field corresponding to the UEQM includes one or more reserved fields, and a sum of a length of the UEQM MCS group field (that is, the first field) and a length of the reserved field (optional) is equal to a sum of the length of the MCS field and the length of the reserved field (optional).

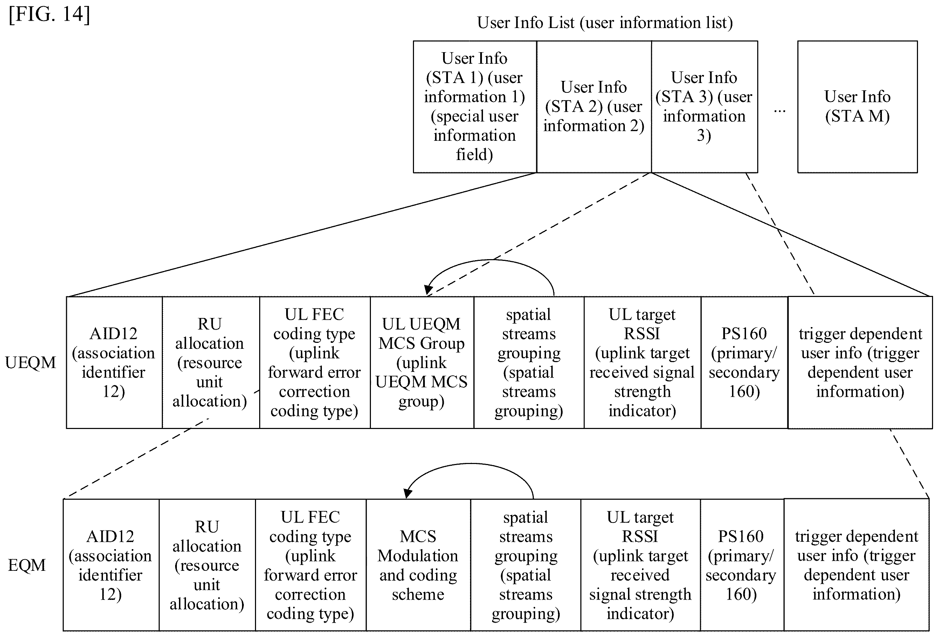

In a possible implementation, the user information list field in the trigger frame includes a user information field in a format 1 and a user information field in a format 2. The user information field in the format 1 includes the first field and the second field, and the user information field in the format 2 includes the second field and the MCS field. For example, the user information field in the format 1 indicates that a spatial stream of a user associated with the user information field uses the UEQM, and the user information field in the format 2 indicates that a spatial stream of a user associated with the user information field uses the EQM. The user information field in the user information list field has two possible formats. FIG. 14 is another example of a format of a user information list field in the trigger frame according to an embodiment of this application. FIG. 14 shows user information fields in two formats. A format of one user information field (that is, the user information field in the format 1) is the same as the format of the user information field corresponding to the UEQM shown in FIG. 13. A format of the other user information field is the same as the format of the user information field corresponding to the EQM shown in FIG. 13. For functions of fields in FIG. 14, refer to the descriptions of the fields in FIG. 6. Lengths of the user information fields in two formats shown in FIG. 14 are equal or unequal. For example, a length of a UEQM MCS group field (that is, the first field) is equal to a length of an MCS field. For example, a sum of the length of the UEQM MCS group field (that is, the first field) and a length of a reserved field (optional) is equal to a sum of the length of the MCS field and the length of the reserved field (optional). When the lengths of the user information fields in two formats are equal, an operation of parsing a plurality of user fields with an equal length is simpler than an operation of parsing a plurality of user fields with unequal lengths. This can improve efficiency of parsing the user field, and reduce implementation complexity.

The following describes a manner in which the first device parses the user information field.

Refer to FIG. 13 and FIG. 14. The first device may first obtain the EQM/UEQM field by using the spatial stream grouping index table, to be specific, obtain a number of spatial streams under the EQM/a spatial stream boundary under the UEQM, and then read the MCS field/the UEQM MCS group field. For example, an implementation in which the first device parses a user information field that matches an AID of the first device is as follows: The first device reads the spatial streams grouping field, and obtains an index indicated by the spatial streams grouping field; obtains a spatial stream boundary or EQM and a number of spatial streams under the EQM that are indicated by the index; and when the index indicates the spatial stream boundary, obtains an MCS group indicated by an uplink UEQM MCS group field, and determines, based on the MCS group indicated by the uplink UEQM MCS group field and the spatial stream boundary indicated by the index, a number of spatial streams corresponding to one or more MCSs in the MCS group; or when the index indicates the EQM and the number of spatial streams under the EQM, reads an MCS field, where an MCS indicated by the MCS field is an MCS used by each spatial stream of the first device.

The following describes an example of parsing the user field by using an example in which an NSS combination indication field in the user field represents an index in Table 10.

For example, a value of the spatial streams grouping field in the user information field is 31, in other words, the spatial streams grouping field indicates the index 31. The first device learns, based on the index 31 and Table 10, that the spatial stream of the first device uses the EQM and the number of spatial streams is 1, and then reads the MCS field to learn of an MCS, that is, an MCS used by the spatial stream of the first device. An example in which the first device reads the MCS field to learn of the MCS is as follows: The first device learns that a value of the MCS field represents an index #1, and reads an MCS indicated by the index #1 in Table 3 or Table 4. For another example, a value of the spatial streams grouping field in the user information field is 15, in other words, the spatial streams grouping field indicates the index 15. The first device learns, based on the index 15 and Table 10, that the spatial stream of the first device uses the UEQM and spatial stream boundaries corresponding to four MCSs, and then reads the uplink UEQM MCS group field to learn an MCS group; and determines, based on the MCS group and the spatial stream boundaries corresponding to the four MCSs, a number of spatial streams corresponding to one or more MCSs in the MCS group. An example in which the first device reads the uplink UEQM MCS group field to learn the MCS group is as follows: The first device learns that a value of the uplink UEQM MCS group field represents an index #2, and reads an MCS group indicated by the index #2 in Table 2 or Table 4.

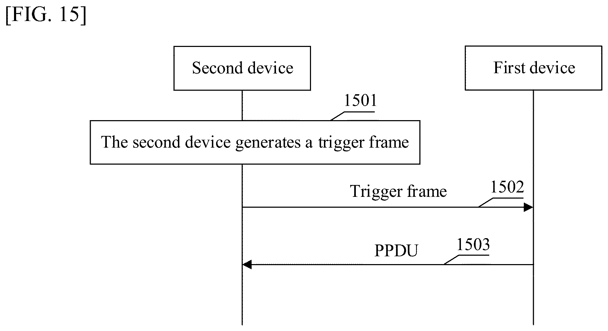

FIG. 15 is an interaction flowchart of another modulation and coding scheme indication method according to an embodiment of this application. As shown in FIG. 15, the method includes the following steps.

1501: A second device generates a trigger frame.

The trigger frame includes a sixth field and a seventh field. The sixth field indicates a number of spatial streams of a third user (for example, one or more stations). For example, the sixth field indicates a number of spatial streams used when the third user (for example, the one or more stations) sends the PPDU triggered by the trigger frame. A user may be a group of users in multicast transmission. For example, a value of the sixth field indicates the number of spatial streams used when the third user (a station) sends the PPDU triggered by the trigger frame. The sixth field may be replaced with an NSS (a number of spatial streams) field. In this specification, a number of spatial streams of a user is a number of spatial streams used by the user. The seventh field indicates an MCS used by each spatial stream of the third user. For example, the seventh field indicates the MCS used by each spatial stream of the third user when the third user sends the PPDU triggered by the trigger frame. The seventh field may be referred to as a UEQM MCS field or an uplink unequal modulation modulation and coding scheme (UL UEQM MCS) field, or may be referred to as another field. The MCS that is used by the spatial stream and that is indicated by the seventh field is related to the number of spatial streams of the third user. That the MCS that is used by the spatial stream and that is indicated by the seventh field is related to the number of spatial streams of the third user may be: When numbers of spatial streams of the third user are different, MCSs that are used by the spatial streams and that are indicated by the seventh field are different. For example, the number of spatial streams of the third user is 2, and the seventh field indicates MCSs that are respectively used by two spatial streams and that are used when the third user sends the PPDU triggered by the trigger frame. For another example, the number of spatial streams of the third user is 3, and the seventh field indicates MCSs that are respectively used by three spatial streams and that are used when the third user sends the PPDU triggered by the trigger frame. For example, a value of the seventh field is an index, and the index indicates the MCS used by each spatial stream of the third user when the third user sends the PPDU triggered by the trigger frame.

In a possible implementation, the trigger frame includes one or more user information fields, and one user information field includes the sixth field and the seventh field. For example, one user information field in the trigger frame is associated with one user (for example, a station), the user information field includes information that needs to be read by the user associated with the user information field, and another user does not need to read the user information field. For example, a user information field in the trigger frame is associated with a user #3, the user information field includes an identifier of the user #3, the user #3 determines, based on the identifier that is of the user #3 and that is included in the user information field, that the user information field includes information that needs to be read by the user #3, and another user (for example, a station) disregards (disregard) the user information field when the identifier included in the user information field is not an identifier of the another user.

The following describes a case in which the PPDU includes one user field and a case in which the PPDU includes a plurality of user fields.

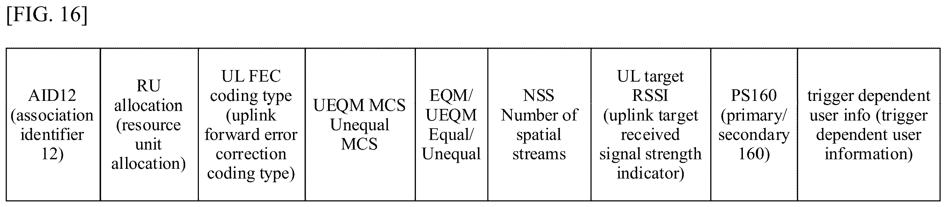

In a possible implementation, the trigger frame includes one user information field, and the user information field includes the sixth field, the seventh field, and an eighth field (optional). The eighth field indicates EQM or UEQM. The eighth field may be referred to as an EQM/UEQM indication field or an EQM/UEQM field. For example, when a value of the EQM/UEQM field is 0, the EQM/UEQM field indicates the EQM; or when a value of the EQM/UEQM field is 1, the EQM/UEQM field indicates the UEQM. FIG. 16 is an example of a format of a user information field in the trigger frame according to an embodiment of this application. As shown in FIG. 16, the user information field in the trigger frame includes an association identifier 12 field, a resource unit allocation field, an uplink forward error correction coding type field, a UEQM MCS field (that is, the seventh field), an EQM/UEQM field (that is, the eighth field), an NSS (that is, the sixth field) field, an uplink target received signal strength indicator field, a primary/secondary 160 field, and a trigger dependent user information field. For descriptions of the fields in the user information field shown in FIG. 16, refer to the descriptions of the fields in the user information field shown in FIG. 3. The user information field shown in FIG. 16 is only an example of one user information field in the trigger frame. The user information field in the trigger frame may include more or fewer fields than those in the user information field shown in FIG. 16. For example, the user information field in the trigger frame includes the association identifier 12 field, the resource unit allocation field, the uplink forward error correction coding type field, the UEQM MCS field (that is, the seventh field), the NSS field (that is, the sixth field), the uplink target received signal strength indicator field, the primary/secondary 160 field, and the trigger dependent user information field. A length and a location of each field in the user information field in the trigger frame are not limited in embodiments of this application. For example, a length of the sixth field may be 2 bits, 3 bits, or 4 bits. For example, a length of the seventh field may be 5 bits, 6 bits, 7 bits, 8 bits, or 9 bits. For example, in the user information field in the trigger frame, a length of the EQM/UEQM field is 1 bit (bit), a length of the UEQM MCS field is 7 bits, and a length of the NSS field is 2 bits. For example, in the user information field in the trigger frame, a length of the EQM/UEQM field is 1 bit, a length of the uplink UEQM MCS group field is 9 bits, and a length of the NSS field is 3 bits.

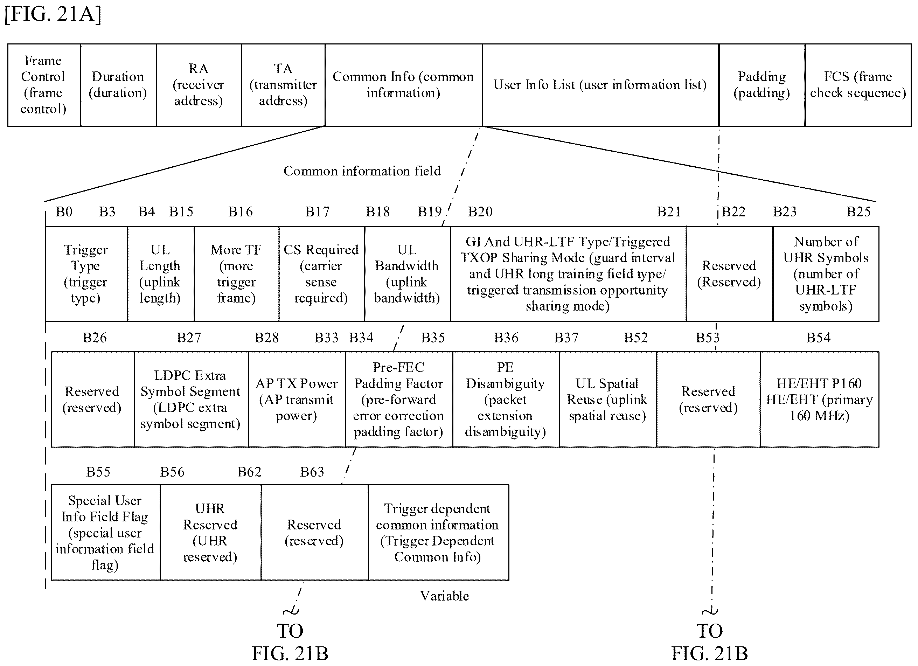

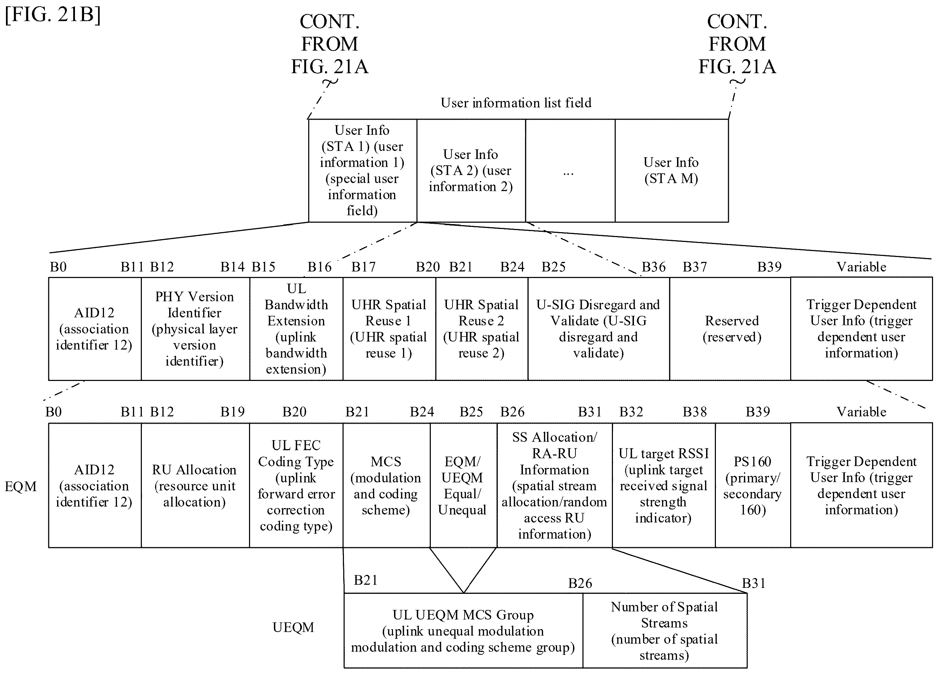

A format of the trigger frame is not limited in embodiments of this application. A possible format of the trigger frame is as follows: The trigger frame includes a user information list field, and the user information list field includes the user information field. The user information list field may be any field in the trigger frame. The trigger frame may be a trigger frame shown in FIG. 21A and FIG. 21B. For example, the user information field includes the EQM/UEQM indication field (that is, the EQM/UEQM field), and the EQM/UEQM indication field indicates whether the spatial stream of the third user uses the EQM or the UEQM when the third user sends the PPDU triggered by the trigger frame. Further, the user information field further indicates a UEQM MCS index (an index in the following UEQM index table) and an NSS. The UEQM MCS index indicates the MCS used by each spatial stream of the third user when the third user sends the PPDU triggered by the trigger frame. A value of the UEQM MCS field indicates a UEQM MCS index. Because there is the EQM/UEQM indication field in the UEQM MCS field, content of the user information field may be redefined. For example, the user information field includes a spatial stream allocation (SS allocation) field, 4 bits in the spatial stream allocation field indicate a start spatial stream, and 2 bits indicate the number of spatial streams. When the UEQM is limited to be used for single-user transmission, the 4 bits that are in the spatial stream allocation field and that indicate the start spatial stream may indicate the UEQM MCS index, and it is ensured that user information fields have an equal length in the case of EQM and UEQM.

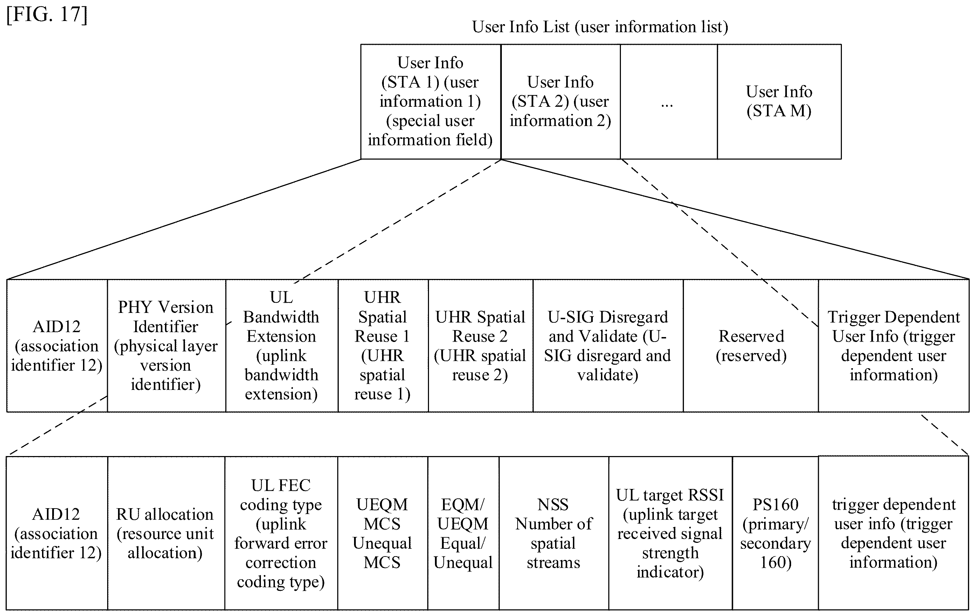

FIG. 17 is another example of a format of a user information list field in the trigger frame according to an embodiment of this application. As shown in FIG. 17, the user information list field includes M (greater than or equal to 2) user information fields, a 1^{st} user information field is a special user information field, and a format of a 2^{nd} user information field (that is, user information 2) is the same as the format of the user information field shown in FIG. 16. For descriptions of fields in the user information list field shown in FIG. 17, refer to the descriptions of the fields in the user information list field shown in FIG. 4. When M is equal to 2, in other words, when the user information list field includes two user information fields, the format of the user information list field shown in FIG. 17 is for single-user transmission.

In a possible implementation, the second device may send a trigger frame (referred to as a trigger frame #3 below) including the sixth field (the NSS field) and the seventh field (the UEQM MCS field). For example, a user information field in the trigger frame #3 includes the sixth field and the seventh field, the user information field in the trigger frame #3 is associated with the user #3, the sixth field indicates a total number of spatial streams used when the user #3 sends the PPDU triggered by the trigger frame #3, and the seventh field indicates the MCS used by each spatial stream of the user #3 when the user #3 sends the PPDU triggered by the trigger frame #3. Alternatively, the second device may send a trigger frame (referred to as a trigger frame #4 below) including an MCS field and an NSS field. For example, a user information field in the trigger frame #4 includes the MCS field and the NSS field, the user information field in the trigger frame #4 is associated with a user #4, the NSS field indicates a total number of spatial streams used when the user #4 sends the PPDU triggered by the trigger frame #4, and the MCS field indicates a same MCS used by all the spatial streams of the user #4 when the user #4 sends the PPDU triggered by the trigger frame #4. That is, the second device may send trigger frames in two different formats. A user information field in one trigger frame includes the UEQM MCS field and the NSS field, and a user information field in the other trigger frame includes the MCS field and the NSS field. When the user information field in the trigger frame includes the UEQM MCS field and the NSS field, the spatial stream of the user associated with the user information field uses the UEQM when the user sends the PPDU triggered by the trigger frame. When the user information field in the trigger frame includes the MCS field and the NSS field, the spatial stream of the user associated with the user information field uses the EQM when the user sends the PPDU triggered by the trigger frame. In other words, when the trigger frame is used to trigger a user to send a PPDU through the UEQM, the user information field in the trigger frame sent by the second device includes the UEQM MCS field and the NSS field, to indicate the MCS used by each spatial stream of the user when the user sends the PPDU triggered by the trigger frame. When the trigger frame is used to trigger a user to send a PPDU through the EQM, the user information field in the trigger frame sent by the second device includes the MCS field and the NSS field, to indicate the same MCS used by all the spatial streams of the user when the user sends the PPDU triggered by the trigger frame. For example, the user information field in the trigger frame sent by the second device includes the MCS field, the NSS field, and the eighth field (that is, the EQM/UEQM field), and the eighth field indicates the EQM. For example, a user information list field in the trigger frame sent by the second device includes the user information field, and the user information field includes the MCS field, the NSS field, and the EQM/UEQM field.

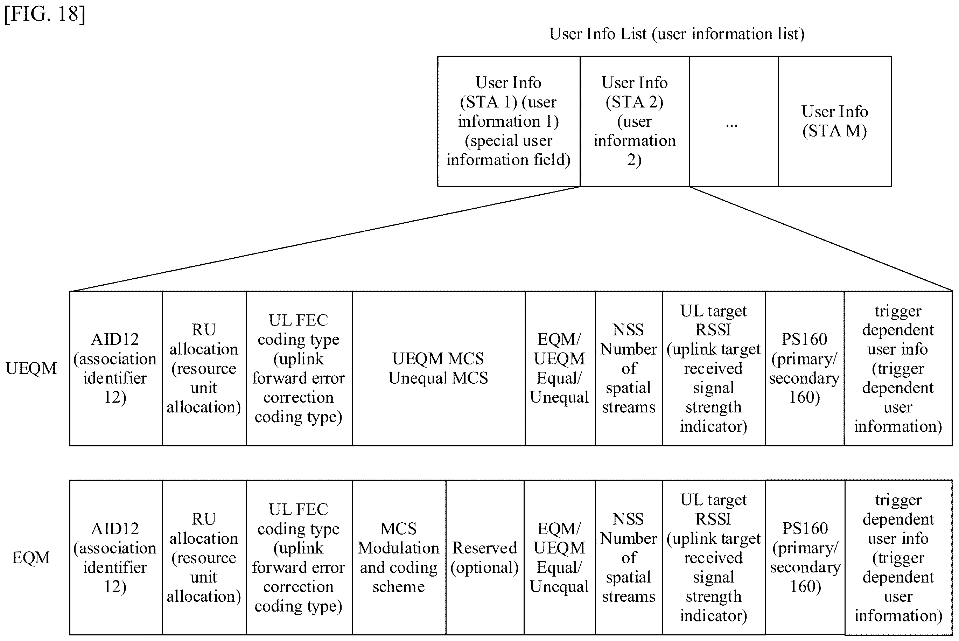

FIG. 18 is another example of a format of a user information list field in the trigger frame according to an embodiment of this application. For descriptions of fields in the user information list field shown in FIG. 18, refer to the descriptions of the fields in the user information list field shown in FIG. 4. Details are not described herein again. Refer to FIG. 18. A user information field in the user information list field in the trigger frame has two possible formats. Lengths of user information fields in two formats may be equal. A format of one user information field is the same as the format of the user information field shown in FIG. 16. The other user information field (corresponding to the EQM) includes an association identifier 12 field, a resource unit allocation field, an uplink forward error correction coding type field, an MCS field, a reserved field (optional), an EQM/UEQM field (that is, the eighth field), an NSS field, an uplink target received signal strength indicator field, a primary/secondary 160 field, and a trigger dependent user information field. For example, the length of the UEQM MCS field is equal to a sum of a length of the MCS field and a length of the reserved field (optional). For example, a location and a length of the reserved field in the user information field may be flexibly configured based on a requirement, so that the lengths of the two user information fields are equal. For example, in the one user information field, the length of the UEQM MCS field is 7 bits; and in the other user information field, the length of the MCS field is 4 bits, and the length of the reserved field is 3 bits. For example, in the one user information field, the length of the UEQM MCS field is 9 bits; and in the other user information field, the length of the MCS field is 4 bits, and the length of the reserved field is 5 bits. The user information field in this application may include more or fewer fields than those in the user information field shown in FIG. 18.

In a possible implementation, the trigger frame includes a plurality of user information fields, s user information fields in the plurality of user information fields include the UEQM MCS field and the NSS field, t user information fields in the plurality of user information fields include an MCS field and an NSS field, the NSS field indicates a number of spatial streams used by a user (a user associated with the user information field) to send a PPDU triggered by the trigger frame, the MCS field indicates a same MCS used by all spatial streams of the user when the user sends the PPDU triggered by the trigger frame, and lengths of the user information fields in the trigger frame are equal or unequal. s is an integer greater than 0, and t is an integer greater than 0. In other words, the trigger frame may include user information fields in two different formats. An example in which the trigger frame includes a third user information field (including the seventh field) and a fourth user information field (including the MCS field) is used to describe the trigger frame including the user information fields in two different formats. For example, a format of the third user information field is the same as the format of the user information field corresponding to the UEQM in FIG. 18, and a format of the fourth user information field is the same as the format of the user information field corresponding to the EQM in FIG. 18.

In a possible implementation, there are user information fields in two formats in the trigger frame, for example, the third user information field and the fourth user information field. Any user information field may indicate, by using the EQM/UEQM field included in the user information field, a type of the user information field. Further, content of subfields in user information fields in different formats is different. If the user information fields in different formats in the trigger frame have an equal length (in other words, lengths of the user information fields in different formats are equal), decoding and parsing complexity of a first device can be reduced. Because a length of a UEQM MCS field is greater than a length of an MCS field, to enable the third user information field and the fourth user information field to have the equal length or nearly equal length, one manner is to reduce overheads of the UEQM MCS field as much as possible, so as to achieve a tradeoff between the overheads and flexibility; and the other manner is to introduce some reserved bits into the fourth user information field. A location and a length of a reserved field (or the reserved bits) in the fourth user information field are not limited. For example, the length of the UEQM MCS field is 7 bits. In the fourth user information field, the length of the MCS field is 4 bits, and the length of the reserved field is 3 bits. For example, the length of the UEQM MCS field is 9 bits. In the fourth user information field, the length of the MCS field is 4 bits, and the length of the reserved field is 5 bits. The user information field in this application may include more or fewer fields than those in the user information field shown in FIG. 18. In this embodiment of this application, the EQM and the UEQM may be implemented by using the user information fields in different formats with an equal length. An operation of parsing a plurality of user fields with an equal length is simpler than an operation of parsing a plurality of user fields with unequal lengths. This can improve efficiency of parsing the user field.

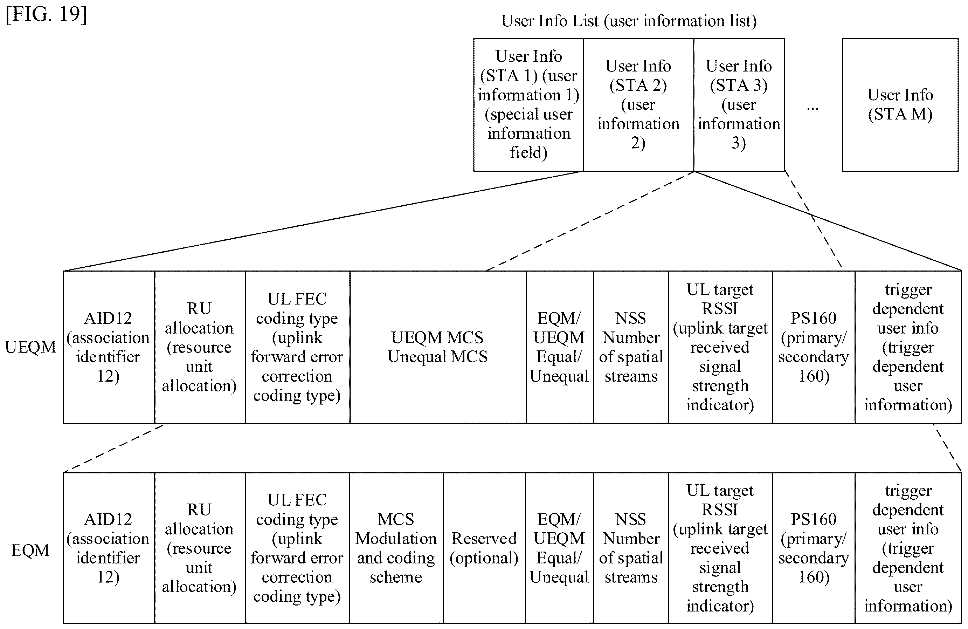

Another possible format of the trigger frame is as follows: The user information list field in the trigger frame includes the third user information field and the fourth user information field, and the format of the user information list field in the trigger frame is for OFDMA transmission. FIG. 19 is another example of a format of a user information list field in the trigger frame according to an embodiment of this application. As shown in FIG. 19, the user information list field includes M (greater than or equal to 3) user information fields, a 1^{st} user information field is a special user information field (user information 1), a format of a 2^{nd} user information field (user information 2) is the same as the format of the user information field corresponding to the UEQM in FIG. 18, and a format of a 3^{rd} user information field (user information 3) is the same as the format of the user information field corresponding to the EQM in FIG. 18. For descriptions of fields in the user information list field shown in FIG. 19, refer to the descriptions of the fields in the user information list field shown in FIG. 16. The 2^{nd} user information field in FIG. 19 may be an example of the third user information field, and the 3^{rd} user information field in FIG. 19 may be an example of the fourth user information field. For example, lengths of the user information fields (including or excluding the special user information field) in the trigger frame shown in FIG. 19 are equal.

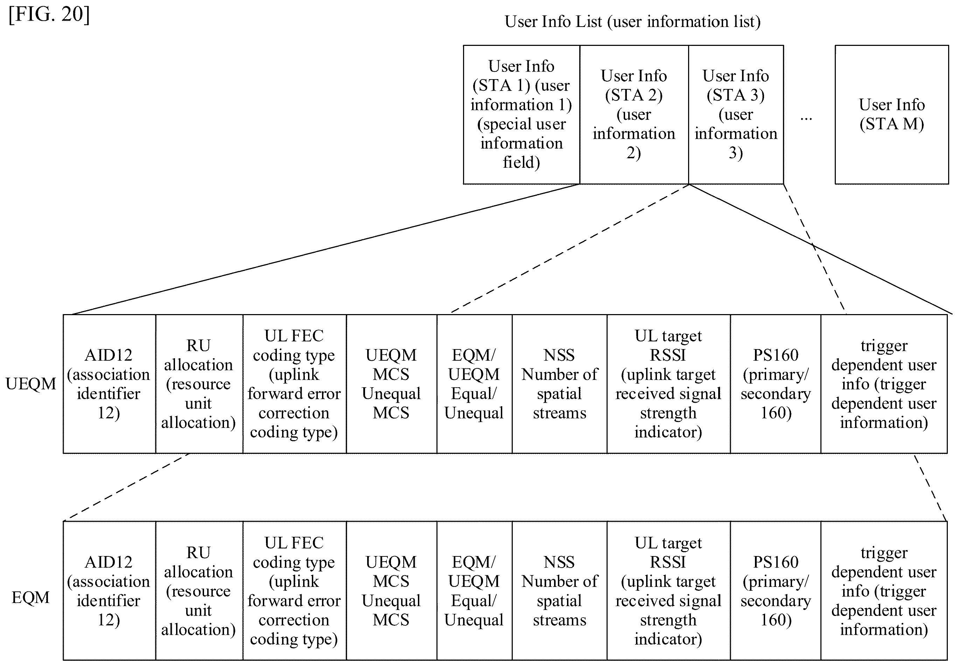

Another possible format of the trigger frame is as follows: The user information list field in the trigger frame includes the plurality of user information fields, and the plurality of user information fields include the third user information field and the fourth user information field. The format of the third user information field is the same as the format of the fourth user information field. The third user information field is associated with the third user, and the fourth user information field is associated with a fourth user. The seventh field included in the third user information field indicates that at least two spatial streams of the third user use different MCSs, and a seventh field included in the fourth user information field indicates a same MCS used by all spatial streams of the fourth user. For example, the EQM/UEQM field in the third user information field indicates the UEQM, and an index represented by the value of the seventh field in the third user information field is an index 16 in Table 13. The EQM/UEQM field in the third user information field indicates the EQM, and an index represented by a value of the seventh field in the fourth user information field is an index 0 in Table 13. A length of the third user information field is equal to a length of the fourth user information field. FIG. 20 is another example of a format of a user information list field in the trigger frame according to an embodiment of this application. A UEQM MCS field in FIG. 20 may be referred to as an EQM and UEQM MCS field, or may be directly referred to as an MCS field, or may be referred to as an MCS group field. For descriptions of fields in the user information list field shown in FIG. 20, refer to the descriptions of the fields in the user information list field shown in FIG. 16.

The format of the trigger frame is not limited in this application. Any field in the trigger frame may include the sixth field, the seventh field, and the eighth field (optional). An example of the trigger frame is shown in FIG. 21A and FIG. 21B. FIG. 21A and FIG. 21B is an example of a format of a trigger frame according to an embodiment of this application. As shown in FIG. 21A and FIG. 21B, the trigger frame includes a frame control (frame control) field, a duration (duration) field, a receiver address (receiver address, RD) field, a transmitter address (transmitter address, TD) field, a common information field, a user information list field, a padding (padding) field, and a frame check sequence (frame check sequence, FCS) field. User information 2 (a user information field) in the user information list field has two possible formats. One format is the same as the format of the user information field corresponding to the UEQM shown in FIG. 18, and the other format includes an association identifier 12 field, a resource unit allocation field, an uplink forward error correction coding type field, an MCS field, an EQM/UEQM field, a spatial stream allocation (spatial stream allocation)/random access RU information field, an uplink target received signal strength indicator field, a primary/secondary 160 field, and a trigger dependent user information field. In FIG. 21A and FIG. 21B, Bn represents an n^{th} bit of one field in the trigger frame, where n is an integer greater than or equal to 0. For example, B0 represents a 1^{st} bit in the user information 2, and B21 represents a 22^{nd} bit in the user information 2. For descriptions of fields in the trigger frame shown in FIG. 21A and FIG. 21B, refer to the descriptions of the fields in FIG. 7A and FIG. 7B. Details are not described herein again.

1502: The second device sends the trigger frame.

Correspondingly, the first device receives the trigger frame. For example, when the trigger frame is for single-user transmission, one first device (that is, a single user to which the trigger frame is directed) receives the trigger frame, and parses the trigger frame. For example, when the trigger frame is for multi-user transmission, a plurality of first devices (that is, users to which the trigger frame is directed) receive the trigger frame, and parse the trigger frame.

1503: The first device sends the PPDU.

The first device may be the third user. When the PPDU is sent, the MCS used by the spatial stream of the third user is used. In other words, when the first device sends the PPDU, the MCS used by the spatial stream of the third user is used. For example, if the trigger frame is used to trigger a plurality of first devices to send the PPDUs, the plurality of first devices may perform steps similar to step 1503. For example, if the trigger frame is used to trigger one first device (that is, the third user) to send the PPDU, the first device performs step 1503. The PPDU sent by the first device may be triggered by the trigger frame. In other words, the first device sends the PPDU triggered by the trigger frame.

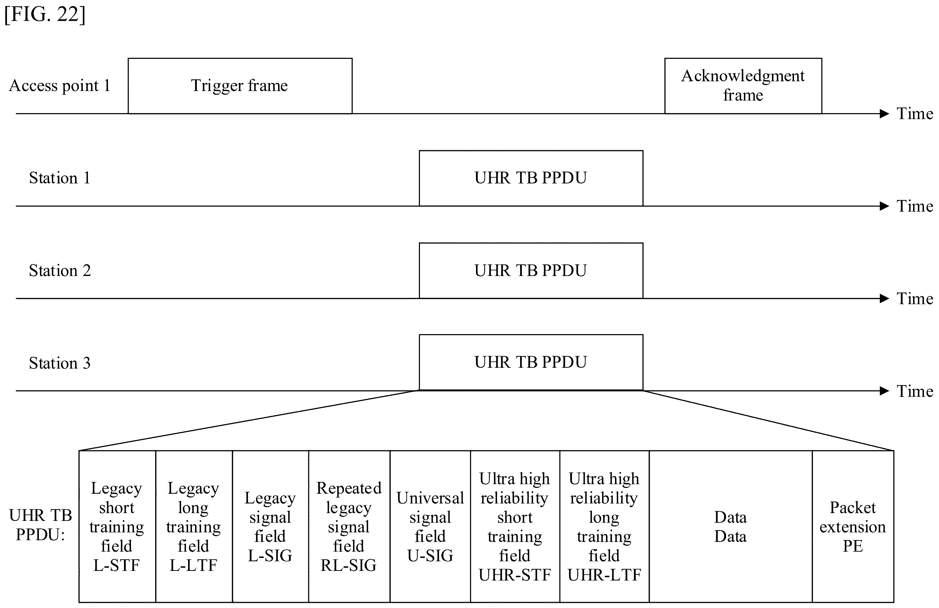

In a possible implementation, after receiving the PPDU from the first device, the second device sends an acknowledgment frame to the first device. FIG. 22 is a diagram of interaction between a second device and a plurality of first devices according to an embodiment of this application. As shown in FIG. 22, an access point 1 (that is, the second device) first sends a trigger frame. The trigger frame (for example, the trigger frame shown in FIG. 21A and FIG. 21B) includes other parameters and resource scheduling information used by one or more users (stations) to send uplink data. After receiving the trigger frame, the stations (a station 1, a station 2, and a station 3 in FIG. 22) each read a common information field and a special user information field in the trigger frame, and parse out a user information field that matches an AID of the station; and then send an ultra high reliability trigger based physical layer protocol data unit (UHR TB PPDU) on an RU or an MRU indicated by a resource unit allocation field in the user information field. After receiving a UHR TB PPDU sent by the one or more stations, the access point 1 replies with a multi-station block acknowledgment (multi-STA block acknowledgment) frame. A format of the PPDU is not limited in embodiments of this application. For example, the PPDU is a UHR PPDU or an IMMW PPDU.

In this embodiment of this application, the seventh field indicates the MCS used by each spatial stream of the third user, and the MCS that is used by the spatial stream and that is indicated by the seventh field is related to the number of spatial streams of the third user. Different MCSs used by a plurality of spatial streams can be flexibly indicated, and signaling overheads are lower compared with those of indicating, by using one index, an MCS used by each spatial stream under different numbers of spatial streams. In addition, in embodiments of this application, the user information fields under the UEQM and the EQM have the equal length. This reduce demodulation and parsing complexity of the device.

The following describes, based on a format of the user information field, a manner of indicating the MCS used by the spatial stream of the user.

An example of a format of a user information field is shown in FIG. 18. The user information field includes an EQM/UEQM field, an MCS field, and an NSS field. For example, the MCS field indicates 16 entries shown in Table 11. For example, a value of the MCS field is an index in Table 11, and the value of the MCS field ranges from 0 to 15. In Table 11, an index 14 and an index 15 are two special modulation schemes, which are respectively a duplicate transmission mode and a BPSK modulation scheme using dual carrier modulation. A sequence of the entries in Table 11 and a correspondence between an index and an MCS are not limited in embodiments of this application. The MCS field may indicate a part of the entries in Table 11. For example, the value of the MCS field ranges from 0 to 11. For example, the user information field in the trigger frame includes an identifier of the fourth user, an EQM/UEQM field, an MCS field, and an NSS field. A value of the EQM/UEQM field is 0 (indicating the EQM), a value of the NSS field is 3, and a value of the MCS field is 4. The value of the NSS field is a total number of spatial streams of the fourth user, and the MCS field (indicating an index 4) indicates that each spatial stream of the fourth user uses 16-QAM and a coding rate of 3/4. The fourth user learns, based on the value of the EQM/UEQM field, that the spatial stream of the fourth user uses the EQM; and then learns, based on the NSS field, that the total number of spatial streams of the fourth user is 3, and learns, based on the MCS field, that each spatial stream of the fourth user uses 16-QAM and the coding rate of 3/4.

**Table 11**

| Index | Modulation (Modulation) | Coding rate (Rate) |
|---|---|---|
| 0 | BPSK | 1/2 |
| 1 | QPSK | 1/2 |
| 2 | | 3/4 |
| 3 | 16-QAM | 1/2 |
| 4 | | 3/4 |
| 5 | 64-QAM | 2/3 |
| 6 | | 3/4 |
| 7 | | 5/6 |
| 8 | 256-QAM | 3/4 |
| 9 | | 5/6 |
| 10 | 1024-QAM | 3/4 |
| 11 | | 5/6 |
| 12 | 4096-QAM | 3/4 |
| 13 | | 5/6 |
| 14 | UHR duplicate (UHR duplicate, UHR DUP) | 1/2 |
| 15 | BPSK-DCM (BPSK-dual carrier modulation, dual carrier modulation) | 1/2 |

Another example of a format of a user information field is shown in FIG. 18. The user information field includes an EQM/UEQM field, a UEQM MCS field, and an NSS field. For example, a value of the UEQM MCS field is an index, and the index corresponds to different tables under different NSSs. For example, when a value of NSS field in the user information field is 2, a value of the UEQM MCS field is an index in Table 12. For another example, when a value of the NSS field in the user information field is 3, a value of the UEQM MCS field is an index in Table 13. If an index in a UEQM index table corresponds to L spatial streams, the UEQM index table is a UEQM index table with NSS=L, where L is an integer greater than 0. For example, Table 12 is a UEQM index table with NSS=2, and Table 13 is a UEQM index table with NSS=3. Table 12 and Table 13 are examples of two UEQM index tables provided in this application. One index in the UEQM index table corresponds to modulation schemes of a plurality of spatial streams, and the plurality of spatial streams use a same coding rate. For example, one index in Table 12 corresponds to modulation schemes respectively used by two spatial streams, and the two spatial streams use a same coding rate.

In the UEQM index table, a modulation scheme used by a spatial stream may be any one of 4096-QAM, 1024-QAM, 256-QAM, 64-QAM, 16-QAM, QPSK, and BPSK, and a used coding rate may be any one of 1/2, 2/3, 3/4, 5/6, 7/8, and the like. In the following UEQM index table, the spatial stream uses the coding rate of 1/2, 3/4, or 5/6, and BPSK is not introduced. Because a rate of BPSK is low, introducing BPSK into UEQM transmission does not greatly improve total throughput. In addition, the BPSK modulation scheme is not introduced in consideration of the overheads of the UEQM MCS field and complexity caused by excessive variety of implementations. Modulation schemes, coding rates, and indexes in the following UEQM index table are merely examples. A UEQM index table used by a transmitter and a receiver may be a part of the UEQM index table shown in this specification, or an index may alternatively be in another corresponding manner. This is not limited in embodiments of this application. In addition, there may be some reserved entries in the UEQM index table. For example, in Table 12, indexes 45 to 63 are reserved starting from 45. Because for an index represented by N bits, a maximum of 2ⁿ entries may be indicated, and the index is likely to reserve some entries. In addition, when numbers of spatial streams are different, UEQM MCS fields of a same length are used. Therefore, parsing by the first device is simple. For a UEQM index table with a small number of spatial streams, there may also be many reserved entries. In embodiments of this application, two reserved entries are introduced: validated (Validate) entry and disregarded (Disregard) entry. If the first device finds that an index indicates a validated entry, the first device stops further parsing the trigger frame. If the first device finds that an index indicates a disregarded entry, the first device disregards the field, and continues to read another field.

**Table 12**

| Index | Modulation (Modulation) | | Coding rate (Rate) |
|---|---|---|---|
| | Modulation scheme of a first spatial stream | Modulation scheme of a second spatial stream | |
| 0 | 16-QAM | QPSK | 1/2 |
| 1 | **64-QAM** | QPSK | 1/2 |
| 2 | **256-QAM** | QPSK | 1/2 |
| 3 | **1024-QAM** | QPSK | 1/2 |
| 4 | **4096-QAM** | QPSK | 1/2 |
| 5 | **64-QAM** | 16-QAM | 1/2 |
| 6 | **256-QAM** | 16-QAM | 1/2 |
| 7 | **1024-QAM** | 16-QAM | 1/2 |
| 8 | **4096-QAM** | 16-QAM | 1/2 |
| 9 | **256-QAM** | **64-QAM** | 1/2 |
| 10 | **1024-QAM** | **64-QAM** | 1/2 |
| 11 | **4096-QAM** | 64-QAM | 1/2 |
| 12 | **1024-QAM** | **256-QAM** | 1/2 |
| 13 | **4096-QAM** | **256-QAM** | 1/2 |
| 14 | **4096-QAM** | **1024-QAM** | 1/2 |
| 15 | 16-QAM | QPSK | 3/4 |
| 16 | 64-QAM | QPSK | 3/4 |
| 17 | 256-QAM | QPSK | 3/4 |
| 18 | 1024-QAM | QPSK | 3/4 |
| 19 | 4096-QAM | QPSK | 3/4 |
| 20 | 64-QAM | 16-QAM | 3/4 |
| 21 | 256-QAM | 16-QAM | 3/4 |
| 22 | 1024-QAM | 16-QAM | 3/4 |
| 23 | 4096-QAM | 16-QAM | 3/4 |
| 24 | 256-QAM | 64-QAM | 3/4 |
| 25 | 1024-QAM | 64-QAM | 3/4 |
| 26 | 4096-QAM | 64-QAM | 3/4 |
| 27 | 1024-QAM | 256-QAM | 3/4 |
| 28 | 4096-QAM | 256-QAM | 3/4 |
| 29 | 4096-QAM | 1024-QAM | 3/4 |
| 30 | **16-QAM** | **QPSK** | 5/6 |
| 31 | 64-QAM | **QPSK** | 5/6 |
| 32 | 256-QAM | **QPSK** | 5/6 |
| 33 | 1024-QAM | **QPSK** | 5/6 |
| 34 | 4096-QAM | **QPSK** | 5/6 |
| 35 | 64-QAM | **16-QAM** | 5/6 |
| 36 | 256-QAM | **16-QAM** | 5/6 |
| 37 | 1024-QAM | **16-QAM** | 5/6 |
| 38 | 4096-QAM | **16-QAM** | 5/6 |
| 39 | 256-QAM | 64-QAM | 5/6 |
| 40 | 1024-QAM | 64-QAM | 5/6 |
| 41 | 4096-QAM | 64-QAM | 5/6 |
| 42 | 1024-QAM | 256-QAM | 5/6 |
| 43 | 4096-QAM | 256-QAM | 5/6 |
| 44 | 4096-QAM | 1024-QAM | 5/6 |
| 45 to End (for example, End=63) | Reserved (for a user field matching an identifier of a station, the index indicates validate; otherwise, the index indicates disregard) | | |

One index in Table 12 corresponds to modulation schemes respectively used by two spatial streams, and the two spatial streams use a same coding rate. Each index in Table 12 indicates the EQM modulation. The first device may learn, according to Table 12, MCSs respectively used by two spatial streams of the first device. For example, the user information field in the trigger frame includes an identifier of the third user, an EQM/UEQM field, a UEQM MCS field, and an NSS field. A value of the EQM/UEQM field is 1 (indicating the UEQM), a value of the NSS field is 2, and a value of the UEQM MCS field is 4. The value of the NSS field is a total number of spatial streams of the third user. The third user learns, based on the value of the EQM/UEQM field, that the spatial stream of the third user uses the UEQM; then learns, based on the NSS field, that the total number of spatial streams of the third user is 2, and an index indicated by the UEQM MCS field is an index in the UEQM index table with NSS=2; and learns of, based on the UEQM MCS field and Table 12, MCSs respectively used by two spatial streams of the third user.

**Table 13**

| Index | Modulation (Modulation) | | | Coding rate (Rate) |
|---|---|---|---|---|
| | Modulation scheme of a first spatial stream | Modulation scheme of a second spatial stream | Modulation scheme of a third spatial stream | |
| 0 to 15 | Same as Table 11 | | | |
| 16 | 16-QAM | QPSK | QPSK | 1/2 |
| 17 | **64-QAM** | QPSK | QPSK | 1/2 |
| 18 | **256-QAM** | QPSK | QPSK | 1/2 |
| 19 | **1024-QAM** | QPSK | QPSK | 1/2 |
| 20 | **4096-QAM** | QPSK | QPSK | 1/2 |
| 21 | 16-QAM | 16-QAM | QPSK | 1/2 |
| 22 | **64-QAM** | 16-QAM | QPSK | 1/2 |
| 23 | **256-QAM** | 16-QAM | QPSK | 1/2 |
| 24 | **1024-QAM** | 16-QAM | QPSK | 1/2 |
| 25 | **4096-QAM** | 16-QAM | QPSK | 1/2 |
| 26 | **64-QAM** | **64-QAM** | QPSK | 1/2 |
| 27 | **256-QAM** | **64-QAM** | QPSK | 1/2 |
| 28 | **1024-QAM** | **64-QAM** | QPSK | 1/2 |
| 29 | **4096-QAM** | **64-QAM** | QPSK | 1/2 |
| 30 | **256-QAM** | **256-QAM** | QPSK | 1/2 |
| 31 | **1024-QAM** | **256-QAM** | QPSK | 1/2 |
| 32 | **4096-QAM** | **256-QAM** | QPSK | 1/2 |
| 33 | **1024-QAM** | **1024-QAM** | QPSK | 1/2 |
| 34 | **4096-QAM** | **1024-QAM** | QPSK | 1/2 |
| 35 | **4096-QAM** | **4096-QAM** | QPSK | 1/2 |
| 36 | **64-QAM** | 16-QAM | 16-QAM | 1/2 |
| 37 | **256-QAM** | 16-QAM | 16-QAM | 1/2 |
| 38 | **1024-QAM** | 16-QAM | 16-QAM | 1/2 |
| 39 | **4096-QAM** | **16-QAM** | 16-QAM | 1/2 |
| 40 | **64-QAM** | **64-QAM** | 16-QAM | 1/2 |
| 41 | **256-QAM** | **64-QAM** | 16-QAM | 1/2 |
| 42 | **1024-QAM** | **64-QAM** | 16-QAM | 1/2 |
| 43 | **4096-QAM** | **64-QAM** | 16-QAM | 1/2 |
| 44 | **256-QAM** | **256-QAM** | 16-QAM | 1/2 |
| 45 | **1024-QAM** | **256-QAM** | 16-QAM | 1/2 |
| 46 | **4096-QAM** | **256-QAM** | 16-QAM | 1/2 |
| 47 | **1024-QAM** | **1024-QAM** | 16-QAM | 1/2 |
| 48 | **4096-QAM** | **1024-QAM** | 16-QAM | 1/2 |
| 49 | **4096-QAM** | **4096-QAM** | 16-QAM | 1/2 |
| 50 | **256-QAM** | **64-QAM** | **64-QAM** | 1/2 |
| 51 | **1024-QAM** | **64-QAM** | **64-QAM** | 1/2 |
| 52 | **4096-QAM** | **64-QAM** | **64-QAM** | 1/2 |
| 53 | **256-QAM** | **256-QAM** | **64-QAM** | 1/2 |
| 54 | **1024-QAM** | **256-QAM** | **64-QAM** | 1/2 |
| 55 | **4096-QAM** | **256-QAM** | **64-QAM** | 1/2 |
| 56 | **1024-QAM** | **1024-QAM** | **64-QAM** | 1/2 |
| 57 | **4096-QAM** | **1024-QAM** | **64-QAM** | 1/2 |
| 58 | **4096-QAM** | **4096-QAM** | **64-QAM** | 1/2 |
| 59 | **1024-QAM** | **256-QAM** | **256-QAM** | 1/2 |
| 60 | **4096-QAM** | **256-QAM** | **256-QAM** | 1/2 |
| 61 | **1024-QAM** | **1024-QAM** | **256-QAM** | 1/2 |
| 62 | **4096-QAM** | **1024-QAM** | **256-QAM** | 1/2 |
| 63 | **4096-QAM** | **4096-QAM** | **256-QAM** | 1/2 |
| 64 | 4096-QAM | **1024-QAM** | **1024-QAM** | 1/2 |
| 65 | **4096-QAM** | **4096-QAM** | **1024-QAM** | 1/2 |
| 66 | 16-QAM | QPSK | QPSK | 3/4 |
| 67 | 64-QAM | QPSK | QPSK | 3/4 |
| 68 | 256-QAM | QPSK | QPSK | 3/4 |
| 69 | 1024-QAM | QPSK | QPSK | 3/4 |
| 70 | 4096-QAM | QPSK | QPSK | 3/4 |
| 71 | 16-QAM | 16-QAM | QPSK | 3/4 |
| 72 | 64-QAM | 16-QAM | QPSK | 3/4 |
| 73 | 256-QAM | 16-QAM | QPSK | 3/4 |
| 74 | 1024-QAM | 16-QAM | QPSK | 3/4 |
| 75 | 4096-QAM | 16-QAM | QPSK | 3/4 |
| 76 | 64-QAM | 64-QAM | QPSK | 3/4 |
| 77 | 256-QAM | 64-QAM | QPSK | 3/4 |
| 78 | 1024-QAM | 64-QAM | QPSK | 3/4 |
| 79 | 4096-QAM | 64-QAM | QPSK | 3/4 |
| 80 | 256-QAM | 256-QAM | QPSK | 3/4 |
| 81 | 1024-QAM | 256-QAM | QPSK | 3/4 |
| 82 | 4096-QAM | 256-QAM | QPSK | 3/4 |
| 83 | 1024-QAM | 1024-QAM | QPSK | 3/4 |
| 84 | 4096-QAM | 1024-QAM | QPSK | 3/4 |
| 85 | 4096-QAM | 4096-QAM | QPSK | 3/4 |
| 86 | 64-QAM | 16-QAM | 16-QAM | 3/4 |
| 87 | 256-QAM | 16-QAM | 16-QAM | 3/4 |
| 88 | 1024-QAM | 16-QAM | 16-QAM | 3/4 |
| 89 | 4096-QAM | 16-QAM | 16-QAM | 3/4 |
| 90 | 64-QAM | 64-QAM | 16-QAM | 3/4 |
| 91 | 256-QAM | 64-QAM | 16-QAM | 3/4 |
| 92 | 1024-QAM | 64-QAM | 16-QAM | 3/4 |
| 93 | 4096-QAM | 64-QAM | 16-QAM | 3/4 |
| 94 | 256-QAM | 256-QAM | 16-QAM | 3/4 |
| 95 | 1024-QAM | 256-QAM | 16-QAM | 3/4 |
| 96 | 4096-QAM | 256-QAM | 16-QAM | 3/4 |
| 97 | 1024-QAM | 1024-QAM | 16-QAM | 3/4 |
| 98 | 4096-QAM | 1024-QAM | 16-QAM | 3/4 |
| 99 | 4096-QAM | 4096-QAM | 16-QAM | 3/4 |
| 100 | 256-QAM | 64-QAM | 64-QAM | 3/4 |
| 101 | 1024-QAM | 64-QAM | 64-QAM | 3/4 |
| 102 | 4096-QAM | 64-QAM | 64-QAM | 3/4 |
| 103 | 256-QAM | 256-QAM | 64-QAM | 3/4 |
| 104 | 1024-QAM | 256-QAM | 64-QAM | 3/4 |
| 105 | 4096-QAM | 256-QAM | 64-QAM | 3/4 |
| 106 | 1024-QAM | 1024-QAM | 64-QAM | 3/4 |
| 107 | 4096-QAM | 1024-QAM | 64-QAM | 3/4 |
| 108 | 4096-QAM | 4096-QAM | 64-QAM | 3/4 |
| 109 | 1024-QAM | 256-QAM | 256-QAM | 3/4 |
| 110 | 4096-QAM | 256-QAM | 256-QAM | 3/4 |
| 111 | 1024-QAM | 1024-QAM | 256-QAM | 3/4 |
| 112 | 4096-QAM | 1024-QAM | 256-QAM | 3/4 |
| 113 | 4096-QAM | 4096-QAM | 256-QAM | 3/4 |
| 114 | 4096-QAM | 1024-QAM | 1024-QAM | 3/4 |
| 115 | 4096-QAM | 4096-QAM | 1024-QAM | 3/4 |
| 116 | **16-QAM** | **QPSK** | **QPSK** | 5/6 |
| 117 | 64-QAM | **QPSK** | **QPSK** | 5/6 |
| 118 | 256-QAM | **QPSK** | **QPSK** | 5/6 |
| 119 | 1024-QAM | **QPSK** | **QPSK** | 5/6 |
| 120 | 4096-QAM | **QPSK** | **QPSK** | 5/6 |
| 121 | **16-QAM** | **16-QAM** | **QPSK** | 5/6 |
| 122 | 64-QAM | **16-QAM** | **QPSK** | 5/6 |
| 123 | 256-QAM | **16-QAM** | **QPSK** | 5/6 |
| 124 | 1024-QAM | **16-QAM** | **QPSK** | 5/6 |
| 125 | 4096-QAM | **16-QAM** | **QPSK** | 5/6 |
| 126 | 64-QAM | 64-QAM | **QPSK** | 5/6 |
| 127 | 256-QAM | 64-QAM | **QPSK** | 5/6 |
| 128 | 1024-QAM | 64-QAM | **QPSK** | 5/6 |
| 129 | 4096-QAM | 64-QAM | **QPSK** | 5/6 |
| 130 | 256-QAM | 256-QAM | **QPSK** | 5/6 |
| 131 | 1024-QAM | 256-QAM | **QPSK** | 5/6 |
| 132 | 4096-QAM | 256-QAM | **QPSK** | 5/6 |
| 133 | 1024-QAM | 1024-QAM | **QPSK** | 5/6 |
| 134 | 4096-QAM | 1024-QAM | **QPSK** | 5/6 |
| 135 | 4096-QAM | 4096-QAM | **QPSK** | 5/6 |
| 136 | 64-QAM | **16-QAM** | **16-QAM** | 5/6 |
| 137 | 256-QAM | **16-QAM** | **16-QAM** | 5/6 |
| 138 | 1024-QAM | **16-QAM** | **16-QAM** | 5/6 |
| 139 | 4096-QAM | **16-QAM** | **16-QAM** | 5/6 |
| 140 | 64-QAM | 64-QAM | **16-QAM** | 5/6 |
| 141 | 256-QAM | 64-QAM | **16-QAM** | 5/6 |
| 142 | 1024-QAM | 64-QAM | **16-QAM** | 5/6 |
| 143 | 4096-QAM | 64-QAM | **16-QAM** | 5/6 |
| 144 | 256-QAM | 256-QAM | **16-QAM** | 5/6 |
| 145 | 1024-QAM | 256-QAM | **16-QAM** | 5/6 |
| 146 | 4096-QAM | 256-QAM | **16-QAM** | 5/6 |
| 147 | 1024-QAM | 1024-QAM | **16-QAM** | 5/6 |
| 148 | 4096-QAM | 1024-QAM | **16-QAM** | 5/6 |
| 149 | 4096-QAM | 4096-QAM | **16-QAM** | 5/6 |
| 150 | 256-QAM | 64-QAM | 64-QAM | 5/6 |
| 151 | 1024-QAM | 64-QAM | 64-QAM | 5/6 |
| 152 | 4096-QAM | 64-QAM | 64-QAM | 5/6 |
| 153 | 256-QAM | 256-QAM | 64-QAM | 5/6 |
| 154 | 1024-QAM | 256-QAM | 64-QAM | 5/6 |
| 155 | 4096-QAM | 256-QAM | 64-QAM | 5/6 |
| 156 | 1024-QAM | 1024-QAM | 64-QAM | 5/6 |
| 157 | 4096-QAM | 1024-QAM | 64-QAM | 5/6 |
| 158 | 4096-QAM | 4096-QAM | 64-QAM | 5/6 |
| 159 | 1024-QAM | 256-QAM | 256-QAM | 5/6 |
| 160 | 4096-QAM | 256-QAM | 256-QAM | 5/6 |
| 161 | 1024-QAM | 1024-QAM | 256-QAM | 5/6 |
| 162 | 4096-QAM | 1024-QAM | 256-QAM | 5/6 |
| 163 | 4096-QAM | 4096-QAM | 256-QAM | 5/6 |
| 164 | 4096-QAM | 1024-QAM | 1024-QAM | 5/6 |
| 165 | 4096-QAM | 4096-QAM | 1024-QAM | 5/6 |
| 166 to END (for example, End=255) | 4096-QAM | 4096-QAM | 1024-QAM | 5/6 |

In Table 13, meanings of indexes 0 to 15 may be the same as the meanings of the indexes 0 to 15 in Table 11. In some possible implementations, the indexes 0 to 15 may indicate a modulation scheme of the EQM. For example, when the value of the UEQM MCS field indicates the index 0, the UEQM MCS field indicates that each spatial stream of the third user uses the modulation scheme of BPSK and the coding rate of 1/2. When the value of the UEQM MCS field indicates the index 16, the UEQM MCS field indicates that a first spatial stream of the third user uses the modulation scheme of 16-QAM and the coding rate of 1/2, a second spatial stream uses the modulation scheme of QPSK and the coding rate of 1/2, and a third spatial stream uses the modulation scheme of QPSK and the coding rate of 1/2. The first device may learn, according to Table 13, MCSs respectively used by three spatial streams of the first device or a same MCS used by three spatial streams of the first device. For example, the user information field in the trigger frame includes the identifier of the third user, an EQM/UEQM field, a UEQM MCS field, and an NSS field. A value of the EQM/UEQM field is 0 (indicating the EQM), a value of the NSS field is 3, and a value of the UEQM MCS field is 0. The value of the NSS field is the total number of spatial streams of the third user. The third user learns, based on the value of the EQM/UEQM field, that the spatial stream of the third user uses the EQM; then learns, based on the NSS field, that the total number of spatial streams of the third user is 3, and an index indicated by the UEQM MCS field is an index in the UEQM index table with NSS=3 (for example, Table 13); and learns of, based on the UEQM MCS field and Table 13, the same MCS used by the three spatial streams of the third user.

**Table 14**

| Index | Modulation (Modulation) | | | | Coding rate (Rate) |
|---|---|---|---|---|---|
| | Modulation scheme of a first spatial stream | Modulation scheme of a second spatial stream | Modulation scheme of a third spatial stream | Modulation scheme of a fourth spatial stream | |
| 0 to 15 | Same as Table 11 | | | | |
| 16 | 16-QAM | QPSK | QPSK | QPSK | 1/2 |
| 17 | **64-QAM** | QPSK | QPSK | QPSK | 1/2 |
| 18 | **256-QAM** | QPSK | QPSK | QPSK | 1/2 |
| 19 | **1024-QAM** | QPSK | QPSK | QPSK | 1/2 |
| 20 | **4096-QAM** | QPSK | QPSK | QPSK | 1/2 |
| 21 | 16-QAM | 16-QAM | QPSK | QPSK | 1/2 |
| 22 | **64-QAM** | 16-QAM | QPSK | QPSK | 1/2 |
| 23 | **256-QAM** | 16-QAM | QPSK | QPSK | 1/2 |
| 24 | **1024-QAM** | 16-QAM | QPSK | QPSK | 1/2 |
| 25 | **4096-QAM** | 16-QAM | QPSK | QPSK | 1/2 |
| 26 | **64-QAM** | **64-QAM** | QPSK | QPSK | 1/2 |
| 27 | **256-QAM** | **64-QAM** | QPSK | QPSK | 1/2 |
| 28 | **1024-QAM** | **64-QAM** | QPSK | QPSK | 1/2 |
| 29 | **4096-QAM** | **64-QAM** | QPSK | QPSK | 1/2 |
| 30 | **256-QAM** | **256-QAM** | QPSK | QPSK | 1/2 |
| 31 | **1024-QAM** | **256-QAM** | QPSK | QPSK | 1/2 |
| 32 | **4096-QAM** | **256-QAM** | QPSK | QPSK | 1/2 |
| 33 | **1024-QAM** | **1024-QAM** | QPSK | QPSK | 1/2 |
| 34 | **4096-QAM** | **1024-QAM** | QPSK | QPSK | 1/2 |
| 35 | **4096-QAM** | **4096-QAM** | QPSK | QPSK | 1/2 |
| 36 | 16-QAM | 16-QAM | 16-QAM | QPSK | 1/2 |
| 37 | 64-QAM | 16-QAM | 16-QAM | QPSK | 1/2 |
| 38 | **256-QAM** | 16-QAM | 16-QAM | QPSK | 1/2 |
| 39 | **1024-QAM** | 16-QAM | 16-QAM | QPSK | 1/2 |
| 40 | **4096-QAM** | 16-QAM | 16-QAM | QPSK | 1/2 |
| 41 | **64-QAM** | **64-QAM** | 16-QAM | QPSK | 1/2 |
| 42 | **256-QAM** | **64-QAM** | 16-QAM | QPSK | 1/2 |
| 43 | **1024-QAM** | **64-QAM** | 16-QAM | QPSK | 1/2 |
| 44 | **4096-QAM** | **64-QAM** | 16-QAM | QPSK | 1/2 |
| 45 | **256-QAM** | **256-QAM** | 16-QAM | QPSK | 1/2 |
| 46 | **1024-QAM** | **256-QAM** | 16-QAM | QPSK | 1/2 |
| 47 | **4096-QAM** | **256-QAM** | 16-QAM | QPSK | 1/2 |
| 48 | **1024-QAM** | **1024-QAM** | 16-QAM | QPSK | 1/2 |
| 49 | **4096-QAM** | **1024-QAM** | 16-QAM | QPSK | 1/2 |
| 50 | **4096-QAM** | **4096-QAM** | 16-QAM | QPSK | 1/2 |
| 51 | **64-QAM** | **64-QAM** | **64-QAM** | QPSK | 1/2 |
| 52 | **256-QAM** | **64-QAM** | **64-QAM** | QPSK | 1/2 |
| 53 | **1024-QAM** | **64-QAM** | **64-QAM** | QPSK | 1/2 |
| 54 | **4096-QAM** | **64-QAM** | **64-QAM** | QPSK | 1/2 |
| 55 | **256-QAM** | **256-QAM** | **64-QAM** | QPSK | 1/2 |
| 56 | **1024-QAM** | **256-QAM** | **64-QAM** | QPSK | 1/2 |
| 57 | **4096-QAM** | **256-QAM** | **64-QAM** | QPSK | 1/2 |
| 58 | **1024-QAM** | **1024-QAM** | **64-QAM** | QPSK | 1/2 |
| 59 | **4096-QAM** | **1024-QAM** | **64-QAM** | QPSK | 1/2 |
| 60 | **4096-QAM** | **4096-QAM** | **64-QAM** | QPSK | 1/2 |
| 61 | **256-QAM** | **256-QAM** | **256-QAM** | QPSK | 1/2 |
| 62 | **1024-QAM** | **256-QAM** | **256-QAM** | QPSK | 1/2 |
| 63 | **4096-QAM** | **256-QAM** | **256-QAM** | QPSK | 1/2 |
| 64 | **1024-QAM** | **1024-QAM** | **256-QAM** | QPSK | 1/2 |
| 65 | **4096-QAM** | **1024-QAM** | **256-QAM** | QPSK | 1/2 |
| 66 | **4096-QAM** | **4096-QAM** | **256-QAM** | QPSK | 1/2 |
| 67 | **1024-QAM** | **1024-QAM** | **1024-QAM** | QPSK | 1/2 |
| 68 | **4096-QAM** | **1024-QAM** | **1024-QAM** | QPSK | 1/2 |
| 69 | **4096-QAM** | **4096-QAM** | **1024-QAM** | QPSK | 1/2 |
| 70 | **4096-QAM** | **4096-QAM** | **4096-QAM** | QPSK | 1/2 |
| 71 | **64-QAM** | 16-QAM | 16-QAM | 16-QAM | 1/2 |
| 72 | **256-QAM** | 16-QAM | 16-QAM | 16-QAM | 1/2 |
| 73 | **1024-QAM** | 16-QAM | 16-QAM | 16-QAM | 1/2 |
| 74 | **4096-QAM** | 16-QAM | 16-QAM | 16-QAM | 1/2 |
| 75 | **64-QAM** | **64-QAM** | 16-QAM | 16-QAM | 1/2 |
| 76 | **256-QAM** | **64-QAM** | 16-QAM | 16-QAM | 1/2 |
| 77 | **1024-QAM** | **64-QAM** | 16-QAM | 16-QAM | 1/2 |
| 78 | **4096-QAM** | **64-QAM** | 16-QAM | 16-QAM | 1/2 |
| 79 | **256-QAM** | **256-QAM** | 16-QAM | 16-QAM | 1/2 |
| 80 | **1024-QAM** | **256-QAM** | 16-QAM | 16-QAM | 1/2 |
| 81 | **4096-QAM** | **256-QAM** | 16-QAM | 16-QAM | 1/2 |
| 82 | **1024-QAM** | **1024-QAM** | 16-QAM | 16-QAM | 1/2 |
| 83 | **4096-QAM** | **1024-QAM** | 16-QAM | 16-QAM | 1/2 |
| 84 | **4096-QAM** | **4096-QAM** | 16-QAM | 16-QAM | 1/2 |
| 85 | **64-QAM** | **64-QAM** | **64-QAM** | 16-QAM | 1/2 |
| 86 | **256-QAM** | **64-QAM** | **64-QAM** | 16-QAM | 1/2 |
| 87 | **1024-QAM** | **64-QAM** | **64-QAM** | 16-QAM | 1/2 |
| 88 | **4096-QAM** | **64-QAM** | **64-QAM** | 16-QAM | 1/2 |
| 89 | **256-QAM** | **256-QAM** | **64-QAM** | 16-QAM | 1/2 |
| 90 | **1024-QAM** | **256-QAM** | **64-QAM** | 16-QAM | 1/2 |
| 91 | **4096-QAM** | **256-QAM** | **64-QAM** | 16-QAM | 1/2 |
| 92 | **1024-QAM** | **1024-QAM** | **64-QAM** | 16-QAM | 1/2 |
| 93 | **4096-QAM** | **1024-QAM** | **64-QAM** | 16-QAM | 1/2 |
| 94 | **4096-QAM** | **4096-QAM** | **64-QAM** | 16-QAM | 1/2 |
| 95 | **256-QAM** | **256-QAM** | **256-QAM** | 16-QAM | 1/2 |
| 96 | **1024-QAM** | **256-QAM** | **256-QAM** | 16-QAM | 1/2 |
| 97 | **4096-QAM** | **256-QAM** | **256-QAM** | 16-QAM | 1/2 |
| 98 | **1024-QAM** | **1024-QAM** | **256-QAM** | 16-QAM | 1/2 |
| 99 | **4096-QAM** | **1024-QAM** | **256-QAM** | 16-QAM | 1/2 |
| 100 | **4096-QAM** | **4096-QAM** | **256-QAM** | 16-QAM | 1/2 |
| 101 | **1024-QAM** | **1024-QAM** | **1024-QAM** | 16-QAM | 1/2 |
| 102 | **4096-QAM** | **1024-QAM** | **1024-QAM** | 16-QAM | 1/2 |
| 103 | **4096-QAM** | **4096-QAM** | **1024-QAM** | 16-QAM | 1/2 |
| 104 | **4096-QAM** | **4096-QAM** | **4096-QAM** | 16-QAM | 1/2 |
| 105 | **256-QAM** | **64-QAM** | **64-QAM** | **64-QAM** | 1/2 |
| 106 | **1024-QAM** | **64-QAM** | **64-QAM** | **64-QAM** | 1/2 |
| 107 | **4096-QAM** | **64-QAM** | **64-QAM** | **64-QAM** | 1/2 |
| 108 | **256-QAM** | **256-QAM** | **64-QAM** | **64-QAM** | 1/2 |
| 109 | **1024-QAM** | **256-QAM** | **64-QAM** | **64-QAM** | 1/2 |
| 110 | **4096-QAM** | **256-QAM** | **64-QAM** | **64-QAM** | 1/2 |
| 111 | **1024-QAM** | **1024-QAM** | **64-QAM** | **64-QAM** | 1/2 |
| 112 | **4096-QAM** | **1024-QAM** | **64-QAM** | **64-QAM** | 1/2 |
| 113 | **4096-QAM** | **4096-QAM** | **64-QAM** | **64-QAM** | 1/2 |
| 114 | **256-QAM** | **256-QAM** | **256-QAM** | **64-QAM** | 1/2 |
| 115 | **1024-QAM** | **256-QAM** | **256-QAM** | **64-QAM** | 1/2 |
| 116 | **4096-QAM** | **256-QAM** | **256-QAM** | **64-QAM** | 1/2 |
| 117 | **1024-QAM** | **1024-QAM** | **256-QAM** | **64-QAM** | 1/2 |
| 118 | **4096-QAM** | **1024-QAM** | **256-QAM** | **64-QAM** | 1/2 |
| 119 | **4096-QAM** | **4096-QAM** | **256-QAM** | **64-QAM** | 1/2 |
| 120 | **1024-QAM** | **1024-QAM** | **1024-QAM** | **64-QAM** | 1/2 |
| 121 | **4096-QAM** | **1024-QAM** | **1024-QAM** | **64-QAM** | 1/2 |
| 122 | **4096-QAM** | **4096-QAM** | **1024-QAM** | **64-QAM** | 1/2 |
| 123 | **4096-QAM** | **4096-QAM** | **4096-QAM** | **64-QAM** | 1/2 |
| 124 | **1024-QAM** | **256-QAM** | **256-QAM** | **256-QAM** | 1/2 |
| 125 | **4096-QAM** | **256-QAM** | **256-QAM** | **256-QAM** | 1/2 |
| 126 | **1024-QAM** | **1024-QAM** | **256-QAM** | **256-QAM** | 1/2 |
| 127 | **4096-QAM** | **1024-QAM** | **256-QAM** | **256-QAM** | 1/2 |
| 128 | **4096-QAM** | **4096-QAM** | **256-QAM** | **256-QAM** | 1/2 |
| 129 | **1024-QAM** | **1024-QAM** | **1024-QAM** | **256-QAM** | 1/2 |
| 130 | **4096-QAM** | **1024-QAM** | **1024-QAM** | **256-QAM** | 1/2 |
| 131 | **4096-QAM** | **4096-QAM** | **1024-QAM** | **256-QAM** | 1/2 |
| 132 | **4096-QAM** | **4096-QAM** | **4096-QAM** | **256-QAM** | 1/2 |
| 133 | **4096-QAM** | **1024-QAM** | **1024-QAM** | **1024-QAM** | 1/2 |
| 134 | **4096-QAM** | **4096-QAM** | **1024-QAM** | **1024-QAM** | 1/2 |
| 135 | **4096-QAM** | **4096-QAM** | **4096-QAM** | **1024-QAM** | 1/2 |
| 136 | 16-QAM | QPSK | QPSK | QPSK | 3/4 |
| 137 | 64-QAM | QPSK | QPSK | QPSK | 3/4 |
| 138 | 256-QAM | QPSK | QPSK | QPSK | 3/4 |
| 139 | 1024-QAM | QPSK | QPSK | QPSK | 3/4 |
| 140 | 4096-QAM | QPSK | QPSK | QPSK | 3/4 |
| 141 | 16-QAM | 16-QAM | QPSK | QPSK | 3/4 |
| 142 | 64-QAM | 16-QAM | QPSK | QPSK | 3/4 |
| 143 | 256-QAM | 16-QAM | QPSK | QPSK | 3/4 |
| 144 | 1024-QAM | 16-QAM | QPSK | QPSK | 3/4 |
| 145 | 4096-QAM | 16-QAM | QPSK | QPSK | 3/4 |
| 146 | 64-QAM | 64-QAM | QPSK | QPSK | 3/4 |
| 147 | 256-QAM | 64-QAM | QPSK | QPSK | 3/4 |
| 148 | 1024-QAM | 64-QAM | QPSK | QPSK | 3/4 |
| 149 | 4096-QAM | 64-QAM | QPSK | QPSK | 3/4 |
| 150 | 256-QAM | 256-QAM | QPSK | QPSK | 3/4 |
| 151 | 1024-QAM | 256-QAM | QPSK | QPSK | 3/4 |
| 152 | 4096-QAM | 256-QAM | QPSK | QPSK | 3/4 |
| 153 | 1024-QAM | 1024-QAM | QPSK | QPSK | 3/4 |
| 154 | 4096-QAM | 1024-QAM | QPSK | QPSK | 3/4 |
| 155 | 4096-QAM | 4096-QAM | QPSK | QPSK | 3/4 |
| 156 | 16-QAM | 16-QAM | 16-QAM | QPSK | 3/4 |
| 157 | 64-QAM | 16-QAM | 16-QAM | QPSK | 3/4 |
| 158 | 256-QAM | 16-QAM | 16-QAM | QPSK | 3/4 |
| 159 | 1024-QAM | 16-QAM | 16-QAM | QPSK | 3/4 |
| 160 | 4096-QAM | 16-QAM | 16-QAM | QPSK | 3/4 |
| 161 | 64-QAM | 64-QAM | 16-QAM | QPSK | 3/4 |
| 162 | 256-QAM | 64-QAM | 16-QAM | QPSK | 3/4 |
| 163 | 1024-QAM | 64-QAM | 16-QAM | QPSK | 3/4 |
| 164 | 4096-QAM | 64-QAM | 16-QAM | QPSK | 3/4 |
| 165 | 256-QAM | 256-QAM | 16-QAM | QPSK | 3/4 |
| 166 | 1024-QAM | 256-QAM | 16-QAM | QPSK | 3/4 |
| 167 | 4096-QAM | 256-QAM | 16-QAM | QPSK | 3/4 |
| 168 | 1024-QAM | 1024-QAM | 16-QAM | QPSK | 3/4 |
| 169 | 4096-QAM | 1024-QAM | 16-QAM | QPSK | 3/4 |
| 170 | 4096-QAM | 4096-QAM | 16-QAM | QPSK | 3/4 |
| 171 | 64-QAM | 64-QAM | 64-QAM | QPSK | 3/4 |
| 172 | 256-QAM | 64-QAM | 64-QAM | QPSK | 3/4 |
| 173 | 1024-QAM | 64-QAM | 64-QAM | QPSK | 3/4 |
| 174 | 4096-QAM | 64-QAM | 64-QAM | QPSK | 3/4 |
| 175 | 256-QAM | 256-QAM | 64-QAM | QPSK | 3/4 |
| 176 | 1024-QAM | 256-QAM | 64-QAM | QPSK | 3/4 |
| 177 | 4096-QAM | 256-QAM | 64-QAM | QPSK | 3/4 |
| 178 | 1024-QAM | 1024-QAM | 64-QAM | QPSK | 3/4 |
| 179 | 4096-QAM | 1024-QAM | 64-QAM | QPSK | 3/4 |
| 180 | 4096-QAM | 4096-QAM | 64-QAM | QPSK | 3/4 |
| 181 | 256-QAM | 256-QAM | 256-QAM | QPSK | 3/4 |
| 182 | 1024-QAM | 256-QAM | 256-QAM | QPSK | 3/4 |
| 183 | 4096-QAM | 256-QAM | 256-QAM | QPSK | 3/4 |
| 184 | 1024-QAM | 1024-QAM | 256-QAM | QPSK | 3/4 |
| 185 | 4096-QAM | 1024-QAM | 256-QAM | QPSK | 3/4 |
| 186 | 4096-QAM | 4096-QAM | 256-QAM | QPSK | 3/4 |
| 187 | 1024-QAM | 1024-QAM | 1024-QAM | QPSK | 3/4 |
| 188 | 4096-QAM | 1024-QAM | 1024-QAM | QPSK | 3/4 |
| 189 | 4096-QAM | 4096-QAM | 1024-QAM | QPSK | 3/4 |
| 190 | 4096-QAM | 4096-QAM | 4096-QAM | QPSK | 3/4 |
| 191 | 64-QAM | 16-QAM | 16-QAM | 16-QAM | 3/4 |
| 192 | 256-QAM | 16-QAM | 16-QAM | 16-QAM | 3/4 |
| 193 | 1024-QAM | 16-QAM | 16-QAM | 16-QAM | 3/4 |
| 194 | 4096-QAM | 16-QAM | 16-QAM | 16-QAM | 3/4 |
| 195 | 64-QAM | 64-QAM | 16-QAM | 16-QAM | 3/4 |
| 196 | 256-QAM | 64-QAM | 16-QAM | 16-QAM | 3/4 |
| 197 | 1024-QAM | 64-QAM | 16-QAM | 16-QAM | 3/4 |
| 198 | 4096-QAM | 64-QAM | 16-QAM | 16-QAM | 3/4 |
| 199 | 256-QAM | 256-QAM | 16-QAM | 16-QAM | 3/4 |
| 200 | 1024-QAM | 256-QAM | 16-QAM | 16-QAM | 3/4 |
| 201 | 4096-QAM | 256-QAM | 16-QAM | 16-QAM | 3/4 |
| 202 | 1024-QAM | 1024-QAM | 16-QAM | 16-QAM | 3/4 |
| 203 | 4096-QAM | 1024-QAM | 16-QAM | 16-QAM | 3/4 |
| 204 | 4096-QAM | 4096-QAM | 16-QAM | 16-QAM | 3/4 |
| 205 | 64-QAM | 64-QAM | 64-QAM | 16-QAM | 3/4 |
| 206 | 256-QAM | 64-QAM | 64-QAM | 16-QAM | 3/4 |
| 207 | 1024-QAM | 64-QAM | 64-QAM | 16-QAM | 3/4 |
| 208 | 4096-QAM | 64-QAM | 64-QAM | 16-QAM | 3/4 |
| 209 | 256-QAM | 256-QAM | 64-QAM | 16-QAM | 3/4 |
| 210 | 1024-QAM | 256-QAM | 64-QAM | 16-QAM | 3/4 |
| 211 | 4096-QAM | 256-QAM | 64-QAM | 16-QAM | 3/4 |
| 212 | 1024-QAM | 1024-QAM | 64-QAM | 16-QAM | 3/4 |
| 213 | 4096-QAM | 1024-QAM | 64-QAM | 16-QAM | 3/4 |
| 214 | 4096-QAM | 4096-QAM | 64-QAM | 16-QAM | 3/4 |
| 215 | 256-QAM | 256-QAM | 256-QAM | 16-QAM | 3/4 |
| 216 | 1024-QAM | 256-QAM | 256-QAM | 16-QAM | 3/4 |
| 217 | 4096-QAM | 256-QAM | 256-QAM | 16-QAM | 3/4 |
| 218 | 1024-QAM | 1024-QAM | 256-QAM | 16-QAM | 3/4 |
| 219 | 4096-QAM | 1024-QAM | 256-QAM | 16-QAM | 3/4 |
| 220 | 4096-QAM | 4096-QAM | 256-QAM | 16-QAM | 3/4 |
| 221 | 1024-QAM | 1024-QAM | 1024-QAM | 16-QAM | 3/4 |
| 222 | 4096-QAM | 1024-QAM | 1024-QAM | 16-QAM | 3/4 |
| 223 | 4096-QAM | 4096-QAM | 1024-QAM | 16-QAM | 3/4 |
| 224 | 4096-QAM | 4096-QAM | 4096-QAM | 16-QAM | 3/4 |
| 225 | 256-QAM | 64-QAM | 64-QAM | 64-QAM | 3/4 |
| 226 | 1024-QAM | 64-QAM | 64-QAM | 64-QAM | 3/4 |
| 227 | 4096-QAM | 64-QAM | 64-QAM | 64-QAM | 3/4 |
| 228 | 256-QAM | 256-QAM | 64-QAM | 64-QAM | 3/4 |
| 229 | 1024-QAM | 256-QAM | 64-QAM | 64-QAM | 3/4 |
| 230 | 4096-QAM | 256-QAM | 64-QAM | 64-QAM | 3/4 |
| 231 | 1024-QAM | 1024-QAM | 64-QAM | 64-QAM | 3/4 |
| 232 | 4096-QAM | 1024-QAM | 64-QAM | 64-QAM | 3/4 |
| 233 | 4096-QAM | 4096-QAM | 64-QAM | 64-QAM | 3/4 |
| 234 | 256-QAM | 256-QAM | 256-QAM | 64-QAM | 3/4 |
| 235 | 1024-QAM | 256-QAM | 256-QAM | 64-QAM | 3/4 |
| 236 | 4096-QAM | 256-QAM | 256-QAM | 64-QAM | 3/4 |
| 237 | 1024-QAM | 1024-QAM | 256-QAM | 64-QAM | 3/4 |
| 238 | 4096-QAM | 1024-QAM | 256-QAM | 64-QAM | 3/4 |
| 239 | 4096-QAM | 4096-QAM | 256-QAM | 64-QAM | 3/4 |
| 240 | 1024-QAM | 1024-QAM | 1024-QAM | 64-QAM | 3/4 |
| 241 | 4096-QAM | 1024-QAM | 1024-QAM | 64-QAM | 3/4 |
| 242 | 4096-QAM | 4096-QAM | 1024-QAM | 64-QAM | 3/4 |
| 243 | 4096-QAM | 4096-QAM | 4096-QAM | 64-QAM | 3/4 |
| 244 | 1024-QAM | 256-QAM | 256-QAM | 256-QAM | 3/4 |
| 245 | 4096-QAM | 256-QAM | 256-QAM | 256-QAM | 3/4 |
| 246 | 1024-QAM | 1024-QAM | 256-QAM | 256-QAM | 3/4 |
| 247 | 4096-QAM | 1024-QAM | 256-QAM | 256-QAM | 3/4 |
| 248 | 4096-QAM | 4096-QAM | 256-QAM | 256-QAM | 3/4 |
| 249 | 1024-QAM | 1024-QAM | 1024-QAM | 256-QAM | 3/4 |
| 250 | 4096-QAM | 1024-QAM | 1024-QAM | 256-QAM | 3/4 |
| 251 | 4096-QAM | 4096-QAM | 1024-QAM | 256-QAM | 3/4 |
| 252 | 4096-QAM | 4096-QAM | 4096-QAM | 256-QAM | 3/4 |
| 253 | 4096-QAM | 1024-QAM | 1024-QAM | 1024-QAM | 3/4 |
| 254 | 4096-QAM | 4096-QAM | 1024-QAM | 1024-QAM | 3/4 |
| 255 | 4096-QAM | 4096-QAM | 4096-QAM | 1024-QAM | 3/4 |
| 256 | **16-QAM** | **QPSK** | **QPSK** | **QPSK** | 5/6 |
| 257 | 64-QAM | **QPSK** | **QPSK** | **QPSK** | 5/6 |
| 258 | 256-QAM | **QPSK** | **QPSK** | **QPSK** | 5/6 |
| 259 | 1024-QAM | **QPSK** | **QPSK** | **QPSK** | 5/6 |
| 260 | 4096-QAM | **QPSK** | **QPSK** | **QPSK** | 5/6 |
| 261 | **16-QAM** | **16-QAM** | **QPSK** | **QPSK** | 5/6 |
| 262 | 64-QAM | **16-QAM** | **QPSK** | **QPSK** | 5/6 |
| 263 | 256-QAM | **16-QAM** | **QPSK** | **QPSK** | 5/6 |
| 264 | 1024-QAM | **16-QAM** | **QPSK** | **QPSK** | 5/6 |
| 265 | 4096-QAM | **16-QAM** | **QPSK** | **QPSK** | 5/6 |
| 266 | 64-QAM | 64-QAM | **QPSK** | **QPSK** | 5/6 |
| 267 | 256-QAM | 64-QAM | **QPSK** | **QPSK** | 5/6 |
| 268 | 1024-QAM | 64-QAM | **QPSK** | **QPSK** | 5/6 |
| 269 | 4096-QAM | 64-QAM | **QPSK** | **QPSK** | 5/6 |
| 270 | 256-QAM | 256-QAM | **QPSK** | **QPSK** | 5/6 |
| 271 | 1024-QAM | 256-QAM | **QPSK** | **QPSK** | 5/6 |
| 272 | 4096-QAM | 256-QAM | **QPSK** | **QPSK** | 5/6 |
| 273 | 1024-QAM | 1024-QAM | **QPSK** | **QPSK** | 5/6 |
| 274 | 4096-QAM | 1024-QAM | **QPSK** | **QPSK** | 5/6 |
| 275 | 4096-QAM | 4096-QAM | **QPSK** | **QPSK** | 5/6 |
| 276 | **16-QAM** | **16-QAM** | **16-QAM** | **QPSK** | 5/6 |
| 277 | 64-QAM | **16-QAM** | **16-QAM** | **QPSK** | 5/6 |
| 278 | 256-QAM | **16-QAM** | **16-QAM** | **QPSK** | 5/6 |
| 279 | 1024-QAM | **16-QAM** | **16-QAM** | **QPSK** | 5/6 |
| 280 | 4096-QAM | **16-QAM** | **16-QAM** | **QPSK** | 5/6 |
| 281 | 64-QAM | 64-QAM | **16-QAM** | **QPSK** | 5/6 |
| 282 | 256-QAM | 64-QAM | **16-QAM** | **QPSK** | 5/6 |
| 283 | 1024-QAM | 64-QAM | **16-QAM** | **QPSK** | 5/6 |
| 284 | 4096-QAM | 64-QAM | **16-QAM** | **QPSK** | 5/6 |
| 285 | 256-QAM | 256-QAM | **16-QAM** | **QPSK** | 5/6 |
| 286 | 1024-QAM | 256-QAM | **16-QAM** | **QPSK** | 5/6 |
| 287 | 4096-QAM | 256-QAM | **16-QAM** | **QPSK** | 5/6 |
| 288 | 1024-QAM | 1024-QAM | **16-QAM** | **QPSK** | 5/6 |
| 289 | 4096-QAM | 1024-QAM | **16-QAM** | **QPSK** | 5/6 |
| 290 | 4096-QAM | 4096-QAM | **16-QAM** | **QPSK** | 5/6 |
| 291 | 64-QAM | 64-QAM | 64-QAM | **QPSK** | 5/6 |
| 292 | 256-QAM | 64-QAM | 64-QAM | **QPSK** | 5/6 |
| 293 | 1024-QAM | 64-QAM | 64-QAM | **QPSK** | 5/6 |
| 294 | 4096-QAM | 64-QAM | 64-QAM | **QPSK** | 5/6 |
| 295 | 256-QAM | 256-QAM | 64-QAM | **QPSK** | 5/6 |
| 296 | 1024-QAM | 256-QAM | 64-QAM | **QPSK** | 5/6 |
| 297 | 4096-QAM | 256-QAM | 64-QAM | **QPSK** | 5/6 |
| 298 | 1024-QAM | 1024-QAM | 64-QAM | **QPSK** | 5/6 |
| 299 | 4096-QAM | 1024-QAM | 64-QAM | **QPSK** | 5/6 |
| 300 | 4096-QAM | 4096-QAM | 64-QAM | **QPSK** | 5/6 |
| 301 | 256-QAM | 256-QAM | 256-QAM | **QPSK** | 5/6 |
| 302 | 1024-QAM | 256-QAM | 256-QAM | **QPSK** | 5/6 |
| 303 | 4096-QAM | 256-QAM | 256-QAM | **QPSK** | 5/6 |
| 304 | 1024-QAM | 1024-QAM | 256-QAM | **QPSK** | 5/6 |
| 305 | 4096-QAM | 1024-QAM | 256-QAM | **QPSK** | 5/6 |
| 306 | 4096-QAM | 4096-QAM | 256-QAM | **QPSK** | 5/6 |
| 307 | 1024-QAM | 1024-QAM | 1024-QAM | **QPSK** | 5/6 |
| 308 | 4096-QAM | 1024-QAM | 1024-QAM | **QPSK** | 5/6 |
| 309 | 4096-QAM | 4096-QAM | 1024-QAM | **QPSK** | 5/6 |
| 310 | 4096-QAM | 4096-QAM | 4096-QAM | **QPSK** | 5/6 |
| 311 | 64-QAM | **16-QAM** | **16-QAM** | **16-QAM** | 5/6 |
| 312 | 256-QAM | **16-QAM** | **16-QAM** | **16-QAM** | 5/6 |
| 313 | 1024-QAM | **16-QAM** | **16-QAM** | **16-QAM** | 5/6 |
| 314 | 4096-QAM | **16-QAM** | **16-QAM** | **16-QAM** | 5/6 |
| 315 | 64-QAM | 64-QAM | **16-QAM** | **16-QAM** | 5/6 |
| 316 | 256-QAM | 64-QAM | **16-QAM** | **16-QAM** | 5/6 |
| 317 | 1024-QAM | 64-QAM | **16-QAM** | **16-QAM** | 5/6 |
| 318 | 4096-QAM | 64-QAM | **16-QAM** | **16-QAM** | 5/6 |
| 319 | 256-QAM | 256-QAM | **16-QAM** | **16-QAM** | 5/6 |
| 320 | 1024-QAM | 256-QAM | **16-QAM** | **16-QAM** | 5/6 |
| 321 | 4096-QAM | 256-QAM | **16-QAM** | **16-QAM** | 5/6 |
| 322 | 1024-QAM | 1024-QAM | **16-QAM** | **16-QAM** | 5/6 |
| 323 | 4096-QAM | 1024-QAM | **16-QAM** | **16-QAM** | 5/6 |
| 324 | 4096-QAM | 4096-QAM | **16-QAM** | **16-QAM** | 5/6 |
| 325 | 64-QAM | 64-QAM | 64-QAM | **16-QAM** | 5/6 |
| 326 | 256-QAM | 64-QAM | 64-QAM | **16-QAM** | 5/6 |
| 327 | 1024-QAM | 64-QAM | 64-QAM | **16-QAM** | 5/6 |
| 328 | 4096-QAM | 64-QAM | 64-QAM | **16-QAM** | 5/6 |
| 329 | 256-QAM | 256-QAM | 64-QAM | **16-QAM** | 5/6 |
| 330 | 1024-QAM | 256-QAM | 64-QAM | **16-QAM** | 5/6 |
| 331 | 4096-QAM | 256-QAM | 64-QAM | **16-QAM** | 5/6 |
| 332 | 1024-QAM | 1024-QAM | 64-QAM | **16-QAM** | 5/6 |
| 333 | 4096-QAM | 1024-QAM | 64-QAM | **16-QAM** | 5/6 |
| 334 | 4096-QAM | 4096-QAM | 64-QAM | **16-QAM** | 5/6 |
| 335 | 256-QAM | 256-QAM | 256-QAM | **16-QAM** | 5/6 |
| 336 | 1024-QAM | 256-QAM | 256-QAM | **16-QAM** | 5/6 |
| 337 | 4096-QAM | 256-QAM | 256-QAM | **16-QAM** | 5/6 |
| 338 | 1024-QAM | 1024-QAM | 256-QAM | **16-QAM** | 5/6 |
| 339 | 4096-QAM | 1024-QAM | 256-QAM | **16-QAM** | 5/6 |
| 340 | 4096-QAM | 4096-QAM | 256-QAM | **16-QAM** | 5/6 |
| 341 | 1024-QAM | 1024-QAM | 1024-QAM | **16-QAM** | 5/6 |
| 342 | 4096-QAM | 1024-QAM | 1024-QAM | **16-QAM** | 5/6 |
| 343 | 4096-QAM | 4096-QAM | 1024-QAM | **16-QAM** | 5/6 |
| 344 | 4096-QAM | 4096-QAM | 4096-QAM | **16-QAM** | 5/6 |
| 345 | 256-QAM | 64-QAM | 64-QAM | 64-QAM | 5/6 |
| 346 | 1024-QAM | 64-QAM | 64-QAM | 64-QAM | 5/6 |
| 347 | 4096-QAM | 64-QAM | 64-QAM | 64-QAM | 5/6 |
| 348 | 256-QAM | 256-QAM | 64-QAM | 64-QAM | 5/6 |
| 349 | 1024-QAM | 256-QAM | 64-QAM | 64-QAM | 5/6 |
| 350 | 4096-QAM | 256-QAM | 64-QAM | 64-QAM | 5/6 |
| 351 | 1024-QAM | 1024-QAM | 64-QAM | 64-QAM | 5/6 |
| 352 | 4096-QAM | 1024-QAM | 64-QAM | 64-QAM | 5/6 |
| 353 | 4096-QAM | 4096-QAM | 64-QAM | 64-QAM | 5/6 |
| 354 | 256-QAM | 256-QAM | 256-QAM | 64-QAM | 5/6 |
| 355 | 1024-QAM | 256-QAM | 256-QAM | 64-QAM | 5/6 |
| 356 | 4096-QAM | 256-QAM | 256-QAM | 64-QAM | 5/6 |
| 357 | 1024-QAM | 1024-QAM | 256-QAM | 64-QAM | 5/6 |
| 358 | 4096-QAM | 1024-QAM | 256-QAM | 64-QAM | 5/6 |
| 359 | 4096-QAM | 4096-QAM | 256-QAM | 64-QAM | 5/6 |
| 360 | 1024-QAM | 1024-QAM | 1024-QAM | 64-QAM | 5/6 |
| 361 | 4096-QAM | 1024-QAM | 1024-QAM | 64-QAM | 5/6 |
| 362 | 4096-QAM | 4096-QAM | 1024-QAM | 64-QAM | 5/6 |
| 363 | 4096-QAM | 4096-QAM | 4096-QAM | 64-QAM | 5/6 |
| 364 | 1024-QAM | 256-QAM | 256-QAM | 256-QAM | 5/6 |
| 365 | 4096-QAM | 256-QAM | 256-QAM | 256-QAM | 5/6 |
| 366 | 1024-QAM | 1024-QAM | 256-QAM | 256-QAM | 5/6 |
| 367 | 4096-QAM | 1024-QAM | 256-QAM | 256-QAM | 5/6 |
| 368 | 4096-QAM | 4096-QAM | 256-QAM | 256-QAM | 5/6 |
| 369 | 1024-QAM | 1024-QAM | 1024-QAM | 256-QAM | 5/6 |
| 370 | 4096-QAM | 1024-QAM | 1024-QAM | 256-QAM | 5/6 |
| 371 | 4096-QAM | 4096-QAM | 1024-QAM | 256-QAM | 5/6 |
| 372 | 4096-QAM | 4096-QAM | 4096-QAM | 256-QAM | 5/6 |
| 373 | 4096-QAM | 1024-QAM | 1024-QAM | 1024-QAM | 5/6 |
| 374 | 4096-QAM | 4096-QAM | 1024-QAM | 1024-QAM | 5/6 |
| 375 | 4096-QAM | 4096-QAM | 4096-QAM | 1024-QAM | 5/6 |
| 376 to END (for example, End=511) | 4096-QAM | 4096-QAM | 4096-QAM | 1024-QAM | 5/6 |

Table 14 is an example of a UEQM index table with NSS=4.

In the UEQM index table shown above, the second spatial stream, the third spatial stream, and the fourth spatial stream may alternatively be indicated by using a difference between the first spatial stream and the second spatial stream, a difference between the first spatial stream and the third spatial stream, and a difference between the first spatial stream and the fourth spatial stream, as shown in Table 15. In Table 15, various QAMs corresponding to the second spatial stream, the third spatial stream, and the fourth spatial stream are replaced with difference indexes. For example, if the first spatial stream is QPSK, a difference 0 indicates 16-QAM, a difference 1 indicates 64-QAM, and a difference 2 indicates 256-QAM.

**Table 15**

| QAM difference index | Modulation scheme of a first spatial stream | | | | | |
|---|---|---|---|---|---|---|
| | QPSK | 16-QAM | 64-QAM | 256-QAM | 1024-QAM | 4096-QAM |
| 0 | QPSK | 16-QAM | 64-QAM | 256-QAM | 1024-QAM | 4096-QAM |
| 1 | 16-QAM | 64-QAM | 256-QAM | 1024-QAM | 4096-QAM | Reserved |
| 2 | 64-QAM | 256-QAM | 1024-QAM | 4096-QAM | Reserved | Reserved |
| 3 | 256-QAM | 1024-QAM | 4096-QAM | Reserved | Reserved | Reserved |
| 4 | 1024-QAM | 4096-QAM | Reserved | Reserved | Reserved | Reserved |
| 5 | 4096-QAM | Reserved | Reserved | Reserved | Reserved | Reserved |
| 6 to END | Reserved | | | | | |

It can be seen from the foregoing UEQM index table that, as the NSS increases, a number of entries in the UEQM index table increases significantly. In other words, when NSSs are different, numbers of indexes included in different UEQM index tables are different. For example, when NSS=2, a number of bits required by the UEQM MCS field is 6. Refer to Table 12. For example, when NSS=3, a number of bits required by the UEQM MCS field is 8. Refer to Table 13. For example, when NSS=4, a number of bits required by the UEQM MCS field is 9. Refer to Table 14. When values of the NSS field in the user information field are different, minimum numbers of bits required by the UEQM MCS field are different. If a length of the UEQM MCS field is defined based on the minimum number of bits required by the UEQM MCS field, lengths of user information fields under different numbers of spatial streams are different.

The following describes two possible manners used to make the user information fields under different numbers of spatial streams have an equal length.

In a possible implementation, a length of a corresponding UEQM MCS field is defined based on a number of bits required by a number of indexes under a maximum number of streams. For example, END in Table 14 is defined as 511, the length of the UEQM MCS field is 9 bits, and there are different numbers of reserved entries in Table 14. In another possible implementation, lengths of the UEQM MCS field are different under different numbers of spatial streams, and the user information fields under different spatial streams are aligned by using an additional reserved bit. For example, under different numbers of spatial streams, the length of the UEQM MCS field and the length of the reserved field are shown as follows:
when NSS=2, the length of the UEQM MCS field is 6 bits, and the length of the reserved field is (X+3) bits;
when NSS=3, the length of the UEQM MCS field is 8 bits, and the length of the reserved field is (X+1) bits; and
when NSS=4, the length of the UEQM MCS field is 9 bits, and the length of the reserved field is X bits, where X is greater than or equal to 0.

Considering that a number of antennas of a terminal device (or a station) is usually less than or equal to 4, it may be considered that the UEQM MCS field supports a maximum of 4 SSs (in other words, NSS=4). Nevertheless, the UEQM MCS field still requires 9 bits, and an additional 5 bits need to be provided compared with the 4 bits of the MCS field. If it is expected to ensure that the user information fields in two different formats (refer to FIG. 18 or FIG. 19) have the equal length and simplify demodulation and parsing of the receiver, in a case of the EQM modulation, a plurality of reserved bits need to be introduced, resulting in an increase in overheads. Therefore, how to reduce the overheads needs to be considered, in other words, a number of entries indicated by the UEQM MCS field needs to be reduced.

A first manner of reducing the overheads is to limit a difference between highest modulation order and lowest modulation order of a spatial stream used by a same user from differing significantly. For example, a difference between a highest MCS index and a lowest MCS index that are used by the spatial stream and that are indicated by the seventh field is less than or equal to a second threshold, and the second threshold is a positive integer less than 10. For example, the difference between the highest modulation order and the lowest modulation order that are used by the spatial stream and that are indicated by the seventh field is less than or equal to 6. For example, when lowest modulation used by a spatial stream of a user is QPSK (an order is 2), highest modulation used by the spatial stream of the user is 256-QAM (an order is 8); when lowest modulation used by a spatial stream of a user is 16-QAM (an order is 4), highest modulation used by the spatial stream of the user is 1024-QAM (an order is 10); or when lowest modulation used by a spatial stream of a user is 64-QAM (an order is 6), highest modulation used by the spatial stream of the user is 4096-QAM (an order is 12). An order of BPSK is 1. If modulation scheme orders used by a spatial stream of a user differ greatly, a throughput gain brought by low modulation is not obvious. To balance an increase in complexity caused by the number of entries (that is, a number of indexes) indicated by the UEQM MCS field and excessive implementation modes of the receiver, because a number of entries of the 4 SSs is the largest, the 4 SSs may be simplified, or all NSSs may be simplified, to simplify implementation of the receiver. For example, to reduce the number of entries indicated by the UEQM MCS field, Table 14 is optimized in an optimization manner 4, to be specific, one or more indexes in Table 14 are removed (deleted). A difference between a highest MCS index and a lowest MCS index that are used by a spatial stream and that are indicated by the one or more indexes is greater than the second threshold. Table 16 may be obtained by optimizing Table 14 in the optimization manner 4. A difference between a highest MCS index and a lowest MCS index that are used by a spatial stream and that are indicated by each index in Table 16 is less than or equal to 6, in other words, the second threshold is 6.

**Table 16**

| Index | Modulation (Modulation) | | | | Coding rate (Rate) |
|---|---|---|---|---|---|
| | Modulation scheme of a first spatial stream | Modulation scheme of a second spatial stream | Modulation scheme of a third spatial stream | Modulation scheme of a fourth spatial stream | |
| 0 to 15 | Same as Table 11 | | | | |
| 16 | 16-QAM | QPSK | QPSK | QPSK | 1/2 |
| 17 | 64-QAM | QPSK | QPSK | QPSK | 1/2 |
| 18 | 256-QAM | QPSK | QPSK | QPSK | 1/2 |
| 19 | 16-QAM | 16-QAM | QPSK | QPSK | 1/2 |
| 20 | 64-QAM | 16-QAM | QPSK | QPSK | 1/2 |
| 21 | 256-QAM | 16-QAM | QPSK | QPSK | 1/2 |
| 22 | 64-QAM | 64-QAM | QPSK | QPSK | 1/2 |
| 23 | 256-QAM | 64-QAM | QPSK | QPSK | 1/2 |
| 24 | 256-QAM | 256-QAM | QPSK | QPSK | 1/2 |
| 25 | 16-QAM | 16-QAM | 16-QAM | QPSK | 1/2 |
| 26 | 64-QAM | 16-QAM | 16-QAM | QPSK | 1/2 |
| 27 | 256-QAM | 16-QAM | 16-QAM | QPSK | 1/2 |
| 28 | 64-QAM | 64-QAM | 16-QAM | QPSK | 1/2 |
| 29 | 256-QAM | 64-QAM | 16-QAM | QPSK | 1/2 |
| 30 | 256-QAM | 256-QAM | 16-QAM | QPSK | 1/2 |
| 31 | 64-QAM | 64-QAM | 64-QAM | QPSK | 1/2 |
| 32 | 256-QAM | 64-QAM | 64-QAM | QPSK | 1/2 |
| 33 | 256-QAM | 256-QAM | 64-QAM | QPSK | 1/2 |
| 34 | 256-QAM | 256-QAM | 256-QAM | QPSK | 1/2 |
| 35 | 64-QAM | 16-QAM | 16-QAM | 16-QAM | 1/2 |
| 36 | 256-QAM | 16-QAM | 16-QAM | 16-QAM | 1/2 |
| 37 | 1024-QAM | 16-QAM | 16-QAM | 16-QAM | 1/2 |
| 38 | 64-QAM | 64-QAM | 16-QAM | 16-QAM | 1/2 |
| 39 | 256-QAM | 64-QAM | 16-QAM | 16-QAM | 1/2 |
| 40 | 1024-QAM | 64-QAM | 16-QAM | 16-QAM | 1/2 |
| 41 | 256-QAM | 256-QAM | 16-QAM | 16-QAM | 1/2 |
| 42 | 1024-QAM | 256-QAM | 16-QAM | 16-QAM | 1/2 |
| 43 | 1024-QAM | 1024-QAM | 16-QAM | 16-QAM | 1/2 |
| 44 | 64-QAM | 64-QAM | 64-QAM | 16-QAM | 1/2 |
| 45 | 256-QAM | 64-QAM | 64-QAM | 16-QAM | 1/2 |
| 46 | 1024-QAM | 64-QAM | 64-QAM | 16-QAM | 1/2 |
| 47 | 256-QAM | 256-QAM | 64-QAM | 16-QAM | 1/2 |
| 48 | 1024-QAM | 256-QAM | 64-QAM | 16-QAM | 1/2 |
| 49 | 1024-QAM | 1024-QAM | 64-QAM | 16-QAM | 1/2 |
| 50 | 256-QAM | 256-QAM | 256-QAM | 16-QAM | 1/2 |
| 51 | 1024-QAM | 256-QAM | 256-QAM | 16-QAM | 1/2 |
| 52 | 1024-QAM | 1024-QAM | 256-QAM | 16-QAM | 1/2 |
| 53 | 1024-QAM | 1024-QAM | 1024-QAM | 16-QAM | 1/2 |
| 54 | 256-QAM | 64-QAM | 64-QAM | 64-QAM | 1/2 |
| 55 | 1024-QAM | 64-QAM | 64-QAM | 64-QAM | 1/2 |
| 56 | 4096-QAM | 64-QAM | 64-QAM | 64-QAM | 1/2 |
| 57 | 256-QAM | 256-QAM | 64-QAM | 64-QAM | 1/2 |
| 58 | 1024-QAM | 256-QAM | 64-QAM | 64-QAM | 1/2 |
| 59 | 4096-QAM | 256-QAM | 64-QAM | 64-QAM | 1/2 |
| 60 | 1024-QAM | 1024-QAM | 64-QAM | 64-QAM | 1/2 |
| 61 | 4096-QAM | 1024-QAM | 64-QAM | 64-QAM | 1/2 |
| 62 | 4096-QAM | 4096-QAM | 64-QAM | 64-QAM | 1/2 |
| 63 | 256-QAM | 256-QAM | 256-QAM | 64-QAM | 1/2 |
| 64 | 1024-QAM | 256-QAM | 256-QAM | 64-QAM | 1/2 |
| 65 | 4096-QAM | 256-QAM | 256-QAM | 64-QAM | 1/2 |
| 66 | 1024-QAM | 1024-QAM | 256-QAM | 64-QAM | 1/2 |
| 67 | 4096-QAM | 1024-QAM | 256-QAM | 64-QAM | 1/2 |
| 68 | 4096-QAM | 4096-QAM | 256-QAM | 64-QAM | 1/2 |
| 69 | 1024-QAM | 1024-QAM | 1024-QAM | 64-QAM | 1/2 |
| 70 | 4096-QAM | 1024-QAM | 1024-QAM | 64-QAM | 1/2 |
| 71 | 4096-QAM | 4096-QAM | 1024-QAM | 64-QAM | 1/2 |
| 72 | 4096-QAM | 4096-QAM | 4096-QAM | 64-QAM | 1/2 |
| 73 | 1024-QAM | 256-QAM | 256-QAM | 256-QAM | 1/2 |
| 74 | 4096-QAM | 256-QAM | 256-QAM | 256-QAM | 1/2 |
| 75 | 1024-QAM | 1024-QAM | 256-QAM | 256-QAM | 1/2 |
| 76 | 4096-QAM | 1024-QAM | 256-QAM | 256-QAM | 1/2 |
| 77 | 4096-QAM | 4096-QAM | 256-QAM | 256-QAM | 1/2 |
| 78 | 1024-QAM | 1024-QAM | 1024-QAM | 256-QAM | 1/2 |
| 79 | 4096-QAM | 1024-QAM | 1024-QAM | 256-QAM | 1/2 |
| 80 | 4096-QAM | 4096-QAM | 1024-QAM | 256-QAM | 1/2 |
| 81 | 4096-QAM | 4096-QAM | 4096-QAM | 256-QAM | 1/2 |
| 82 | 4096-QAM | 1024-QAM | 1024-QAM | 1024-QAM | 1/2 |
| 83 | 4096-QAM | 4096-QAM | 1024-QAM | 1024-QAM | 1/2 |
| 84 | 4096-QAM | 4096-QAM | 4096-QAM | 1024-QAM | 1/2 |
| 85 | 16-QAM | QPSK | QPSK | QPSK | 3/4 |
| 86 | 64-QAM | QPSK | QPSK | QPSK | 3/4 |
| 87 | 256-QAM | QPSK | QPSK | QPSK | 3/4 |
| 88 | 16-QAM | 16-QAM | QPSK | QPSK | 3/4 |
| 89 | 64-QAM | 16-QAM | QPSK | QPSK | 3/4 |
| 90 | 256-QAM | 16-QAM | QPSK | QPSK | 3/4 |
| 91 | 64-QAM | 64-QAM | QPSK | QPSK | 3/4 |
| 92 | 256-QAM | 64-QAM | QPSK | QPSK | 3/4 |
| 93 | 256-QAM | 256-QAM | QPSK | QPSK | 3/4 |
| 94 | 16-QAM | 16-QAM | 16-QAM | QPSK | 3/4 |
| 95 | 64-QAM | 16-QAM | 16-QAM | QPSK | 3/4 |
| 96 | 256-QAM | 16-QAM | 16-QAM | QPSK | 3/4 |
| 97 | 64-QAM | 64-QAM | 16-QAM | QPSK | 3/4 |
| 98 | 256-QAM | 64-QAM | 16-QAM | QPSK | 3/4 |
| 99 | 256-QAM | 256-QAM | 16-QAM | QPSK | 3/4 |
| 100 | 64-QAM | 64-QAM | 64-QAM | QPSK | 3/4 |
| 101 | 256-QAM | 64-QAM | 64-QAM | QPSK | 3/4 |
| 102 | 256-QAM | 256-QAM | 64-QAM | QPSK | 3/4 |
| 103 | 256-QAM | 256-QAM | 256-QAM | QPSK | 3/4 |
| 104 | 64-QAM | 16-QAM | 16-QAM | 16-QAM | 3/4 |
| 105 | 256-QAM | 16-QAM | 16-QAM | 16-QAM | 3/4 |
| 106 | 1024-QAM | 16-QAM | 16-QAM | 16-QAM | 3/4 |
| 107 | 64-QAM | 64-QAM | 16-QAM | 16-QAM | 3/4 |
| 108 | 256-QAM | 64-QAM | 16-QAM | 16-QAM | 3/4 |
| 109 | 1024-QAM | 64-QAM | 16-QAM | 16-QAM | 3/4 |
| 110 | 256-QAM | 256-QAM | 16-QAM | 16-QAM | 3/4 |
| 111 | 1024-QAM | 256-QAM | 16-QAM | 16-QAM | 3/4 |
| 112 | 1024-QAM | 1024-QAM | 16-QAM | 16-QAM | 3/4 |
| 113 | 64-QAM | 64-QAM | 64-QAM | 16-QAM | 3/4 |
| 114 | 256-QAM | 64-QAM | 64-QAM | 16-QAM | 3/4 |
| 115 | 1024-QAM | 64-QAM | 64-QAM | 16-QAM | 3/4 |
| 116 | 256-QAM | 256-QAM | 64-QAM | 16-QAM | 3/4 |
| 117 | 1024-QAM | 256-QAM | 64-QAM | 16-QAM | 3/4 |
| 118 | 1024-QAM | 1024-QAM | 64-QAM | 16-QAM | 3/4 |
| 119 | 256-QAM | 256-QAM | 256-QAM | 16-QAM | 3/4 |
| 120 | 1024-QAM | 256-QAM | 256-QAM | 16-QAM | 3/4 |
| 121 | 1024-QAM | 1024-QAM | 256-QAM | 16-QAM | 3/4 |
| 122 | 1024-QAM | 1024-QAM | 1024-QAM | 16-QAM | 3/4 |
| 123 | 256-QAM | 64-QAM | 64-QAM | 64-QAM | 3/4 |
| 124 | 1024-QAM | 64-QAM | 64-QAM | 64-QAM | 3/4 |
| 125 | 4096-QAM | 64-QAM | 64-QAM | 64-QAM | 3/4 |
| 126 | 256-QAM | 256-QAM | 64-QAM | 64-QAM | 3/4 |
| 127 | 1024-QAM | 256-QAM | 64-QAM | 64-QAM | 3/4 |
| 128 | 4096-QAM | 256-QAM | 64-QAM | 64-QAM | 3/4 |
| 129 | 1024-QAM | 1024-QAM | 64-QAM | 64-QAM | 3/4 |
| 130 | 4096-QAM | 1024-QAM | 64-QAM | 64-QAM | 3/4 |
| 131 | 4096-QAM | 4096-QAM | 64-QAM | 64-QAM | 3/4 |
| 132 | 256-QAM | 256-QAM | 256-QAM | 64-QAM | 3/4 |
| 133 | 1024-QAM | 256-QAM | 256-QAM | 64-QAM | 3/4 |
| 134 | 4096-QAM | 256-QAM | 256-QAM | 64-QAM | 3/4 |
| 135 | 1024-QAM | 1024-QAM | 256-QAM | 64-QAM | 3/4 |
| 136 | 4096-QAM | 1024-QAM | 256-QAM | 64-QAM | 3/4 |
| 137 | 4096-QAM | 4096-QAM | 256-QAM | 64-QAM | 3/4 |
| 138 | 1024-QAM | 1024-QAM | 1024-QAM | 64-QAM | 3/4 |
| 139 | 4096-QAM | 1024-QAM | 1024-QAM | 64-QAM | 3/4 |
| 140 | 4096-QAM | 4096-QAM | 1024-QAM | 64-QAM | 3/4 |
| 141 | 4096-QAM | 4096-QAM | 4096-QAM | 64-QAM | 3/4 |
| 142 | 1024-QAM | 256-QAM | 256-QAM | 256-QAM | 3/4 |
| 143 | 4096-QAM | 256-QAM | 256-QAM | 256-QAM | 3/4 |
| 144 | 1024-QAM | 1024-QAM | 256-QAM | 256-QAM | 3/4 |
| 145 | 4096-QAM | 1024-QAM | 256-QAM | 256-QAM | 3/4 |
| 146 | 4096-QAM | 4096-QAM | 256-QAM | 256-QAM | 3/4 |
| 147 | 1024-QAM | 1024-QAM | 1024-QAM | 256-QAM | 3/4 |
| 148 | 4096-QAM | 1024-QAM | 1024-QAM | 256-QAM | 3/4 |
| 149 | 4096-QAM | 4096-QAM | 1024-QAM | 256-QAM | 3/4 |
| 150 | 4096-QAM | 4096-QAM | 4096-QAM | 256-QAM | 3/4 |
| 151 | 4096-QAM | 1024-QAM | 1024-QAM | 1024-QAM | 3/4 |
| 152 | 4096-QAM | 4096-QAM | 1024-QAM | 1024-QAM | 3/4 |
| 153 | 4096-QAM | 4096-QAM | 4096-QAM | 1024-QAM | 3/4 |
| 154 | 16-QAM | QPSK | QPSK | QPSK | 5/6 |
| 155 | 64-QAM | QPSK | QPSK | QPSK | 5/6 |
| 156 | 256-QAM | QPSK | QPSK | QPSK | 5/6 |
| 157 | 16-QAM | 16-QAM | QPSK | QPSK | 5/6 |
| 158 | 64-QAM | 16-QAM | QPSK | QPSK | 5/6 |
| 159 | 256-QAM | 16-QAM | QPSK | QPSK | 5/6 |
| 160 | 64-QAM | 64-QAM | QPSK | QPSK | 5/6 |
| 161 | 256-QAM | 64-QAM | QPSK | QPSK | 5/6 |
| 162 | 256-QAM | 256-QAM | QPSK | QPSK | 5/6 |
| 163 | 16-QAM | 16-QAM | 16-QAM | QPSK | 5/6 |
| 164 | 64-QAM | 16-QAM | 16-QAM | QPSK | 5/6 |
| 165 | 256-QAM | 16-QAM | 16-QAM | QPSK | 5/6 |
| 166 | 64-QAM | 64-QAM | 16-QAM | QPSK | 5/6 |
| 167 | 256-QAM | 64-QAM | 16-QAM | QPSK | 5/6 |
| 168 | 256-QAM | 256-QAM | 16-QAM | QPSK | 5/6 |
| 169 | 64-QAM | 64-QAM | 64-QAM | QPSK | 5/6 |
| 170 | 256-QAM | 64-QAM | 64-QAM | QPSK | 5/6 |
| 171 | 256-QAM | 256-QAM | 64-QAM | QPSK | 5/6 |
| 172 | 256-QAM | 256-QAM | 256-QAM | QPSK | 5/6 |
| 173 | 64-QAM | 16-QAM | 16-QAM | 16-QAM | 5/6 |
| 174 | 256-QAM | 16-QAM | 16-QAM | 16-QAM | 5/6 |
| 175 | 1024-QAM | 16-QAM | 16-QAM | 16-QAM | 5/6 |
| 176 | 64-QAM | 64-QAM | 16-QAM | 16-QAM | 5/6 |
| 177 | 256-QAM | 64-QAM | 16-QAM | 16-QAM | 5/6 |
| 178 | 1024-QAM | 64-QAM | 16-QAM | 16-QAM | 5/6 |
| 179 | 256-QAM | 256-QAM | 16-QAM | 16-QAM | 5/6 |
| 180 | 1024-QAM | 256-QAM | 16-QAM | 16-QAM | 5/6 |
| 181 | 1024-QAM | 1024-QAM | 16-QAM | 16-QAM | 5/6 |
| 182 | 64-QAM | 64-QAM | 64-QAM | 16-QAM | 5/6 |
| 183 | 256-QAM | 64-QAM | 64-QAM | 16-QAM | 5/6 |
| 184 | 1024-QAM | 64-QAM | 64-QAM | 16-QAM | 5/6 |
| 185 | 256-QAM | 256-QAM | 64-QAM | 16-QAM | 5/6 |
| 186 | 1024-QAM | 256-QAM | 64-QAM | 16-QAM | 5/6 |
| 187 | 1024-QAM | 1024-QAM | 64-QAM | 16-QAM | 5/6 |
| 188 | 256-QAM | 256-QAM | 256-QAM | 16-QAM | 5/6 |
| 189 | 1024-QAM | 256-QAM | 256-QAM | 16-QAM | 5/6 |
| 190 | 1024-QAM | 1024-QAM | 256-QAM | 16-QAM | 5/6 |
| 191 | 1024-QAM | 1024-QAM | 1024-QAM | 16-QAM | 5/6 |
| 192 | 256-QAM | 64-QAM | 64-QAM | 64-QAM | 5/6 |
| 193 | 1024-QAM | 64-QAM | 64-QAM | 64-QAM | 5/6 |
| 194 | 4096-QAM | 64-QAM | 64-QAM | 64-QAM | 5/6 |
| 195 | 256-QAM | 256-QAM | 64-QAM | 64-QAM | 5/6 |
| 196 | 1024-QAM | 256-QAM | 64-QAM | 64-QAM | 5/6 |
| 197 | 4096-QAM | 256-QAM | 64-QAM | 64-QAM | 5/6 |
| 198 | 1024-QAM | 1024-QAM | 64-QAM | 64-QAM | 5/6 |
| 199 | 4096-QAM | 1024-QAM | 64-QAM | 64-QAM | 5/6 |
| 200 | 4096-QAM | 4096-QAM | 64-QAM | 64-QAM | 5/6 |
| 201 | 256-QAM | 256-QAM | 256-QAM | 64-QAM | 5/6 |
| 202 | 1024-QAM | 256-QAM | 256-QAM | 64-QAM | 5/6 |
| 203 | 4096-QAM | 256-QAM | 256-QAM | 64-QAM | 5/6 |
| 204 | 1024-QAM | 1024-QAM | 256-QAM | 64-QAM | 5/6 |
| 205 | 4096-QAM | 1024-QAM | 256-QAM | 64-QAM | 5/6 |
| 206 | 4096-QAM | 4096-QAM | 256-QAM | 64-QAM | 5/6 |
| 207 | 1024-QAM | 1024-QAM | 1024-QAM | 64-QAM | 5/6 |
| 208 | 4096-QAM | 1024-QAM | 1024-QAM | 64-QAM | 5/6 |
| 209 | 4096-QAM | 4096-QAM | 1024-QAM | 64-QAM | 5/6 |
| 210 | 4096-QAM | 4096-QAM | 4096-QAM | 64-QAM | 5/6 |
| 211 | 1024-QAM | 256-QAM | 256-QAM | 256-QAM | 5/6 |
| 212 | 4096-QAM | 256-QAM | 256-QAM | 256-QAM | 5/6 |
| 213 | 1024-QAM | 1024-QAM | 256-QAM | 256-QAM | 5/6 |
| 214 | 4096-QAM | 1024-QAM | 256-QAM | 256-QAM | 5/6 |
| 215 | 4096-QAM | 4096-QAM | 256-QAM | 256-QAM | 5/6 |
| 216 | 1024-QAM | 1024-QAM | 1024-QAM | 256-QAM | 5/6 |
| 217 | 4096-QAM | 1024-QAM | 1024-QAM | 256-QAM | 5/6 |
| 218 | 4096-QAM | 4096-QAM | 1024-QAM | 256-QAM | 5/6 |
| 219 | 4096-QAM | 4096-QAM | 4096-QAM | 256-QAM | 5/6 |
| 220 | 4096-QAM | 1024-QAM | 1024-QAM | 1024-QAM | 5/6 |
| 221 | 4096-QAM | 4096-QAM | 1024-QAM | 1024-QAM | 5/6 |
| 222 | 4096-QAM | 4096-QAM | 4096-QAM | 1024-QAM | 5/6 |
| 223 to END (for example, End=255) | 4096-QAM | 4096-QAM | 4096-QAM | 1024-QAM | 5/6 |

It can be learned by comparing Table 14 with Table 16 that, after Table 14 is optimized in the optimization manner 4, 376-223=153 entries in Table 14 are reduced, and 1-bit overheads are saved for the UEQM MCS field, in other words, 1-bit overheads are saved for each user.

The following describes a manner of optimizing the UEQM index table in an optimization manner 5. For the EQM, different QAMs support different coding rates. As shown in Table 11, QPSK and 16-QAM do not support the coding rate of 5/6, and 64-QAM and QAM with a higher order do not support the coding rate of 1/2. In the optimization manner 5, a modulation+coding rate combination that is not supported under the EQM may be deleted, that is, the bold entries in Tables 12 to 14. In this way, complexity of the transmitter and the receiver can be reduced. For example, the MCS that is used by the spatial stream and that is indicated by the seventh field is a supported MCS under the EQM. Table 17 is an example of a UEQM index table for which both the optimization manner 4 and the optimization manner 5 are used. MCSs used by spatial streams indicated by indexes in Table 17 all belong to supported MCSs under the EQM.

**Table 17**

| Index | Modulation (Modulation) | | | | Coding rate (Rate) |
|---|---|---|---|---|---|
| | Modulation scheme of a first spatial stream | Modulation scheme of a second spatial stream | Modulation scheme of a third spatial stream | Modulation scheme of a fourth spatial stream | |
| 0 to 15 | Same as Table 11 | | | | |
| 16 | 16-QAM | QPSK | QPSK | QPSK | 1/2 |
| 17 | 16-QAM | 16-QAM | QPSK | QPSK | 1/2 |
| 18 | 16-QAM | 16-QAM | 16-QAM | QPSK | 1/2 |
| 19 | 16-QAM | QPSK | QPSK | QPSK | 3/4 |
| 20 | 64-QAM | QPSK | QPSK | QPSK | 3/4 |
| 21 | 256-QAM | QPSK | QPSK | QPSK | 3/4 |
| 22 | 16-QAM | 16-QAM | QPSK | QPSK | 3/4 |
| 23 | 64-QAM | 16-QAM | QPSK | QPSK | 3/4 |
| 24 | 256-QAM | 16-QAM | QPSK | QPSK | 3/4 |
| 25 | 64-QAM | 64-QAM | QPSK | QPSK | 3/4 |
| 26 | 256-QAM | 64-QAM | QPSK | QPSK | 3/4 |
| 27 | 256-QAM | 256-QAM | QPSK | QPSK | 3/4 |
| 28 | 16-QAM | 16-QAM | 16-QAM | QPSK | 3/4 |
| 29 | 64-QAM | 16-QAM | 16-QAM | QPSK | 3/4 |
| 30 | 256-QAM | 16-QAM | 16-QAM | QPSK | 3/4 |
| 31 | 64-QAM | 64-QAM | 16-QAM | QPSK | 3/4 |
| 32 | 256-QAM | 64-QAM | 16-QAM | QPSK | 3/4 |
| 33 | 256-QAM | 256-QAM | 16-QAM | QPSK | 3/4 |
| 34 | 64-QAM | 64-QAM | 64-QAM | QPSK | 3/4 |
| 35 | 256-QAM | 64-QAM | 64-QAM | QPSK | 3/4 |
| 36 | 256-QAM | 256-QAM | 64-QAM | QPSK | 3/4 |
| 37 | 256-QAM | 256-QAM | 256-QAM | QPSK | 3/4 |
| 38 | 64-QAM | 16-QAM | 16-QAM | 16-QAM | 3/4 |
| 39 | 256-QAM | 16-QAM | 16-QAM | 16-QAM | 3/4 |
| 40 | 1024-QAM | 16-QAM | 16-QAM | 16-QAM | 3/4 |
| 41 | 64-QAM | 64-QAM | 16-QAM | 16-QAM | 3/4 |
| 42 | 256-QAM | 64-QAM | 16-QAM | 16-QAM | 3/4 |
| 43 | 1024-QAM | 64-QAM | 16-QAM | 16-QAM | 3/4 |
| 44 | 256-QAM | 256-QAM | 16-QAM | 16-QAM | 3/4 |
| 45 | 1024-QAM | 256-QAM | 16-QAM | 16-QAM | 3/4 |
| 46 | 1024-QAM | 1024-QAM | 16-QAM | 16-QAM | 3/4 |
| 47 | 64-QAM | 64-QAM | 64-QAM | 16-QAM | 3/4 |
| 48 | 256-QAM | 64-QAM | 64-QAM | 16-QAM | 3/4 |
| 49 | 1024-QAM | 64-QAM | 64-QAM | 16-QAM | 3/4 |
| 50 | 256-QAM | 256-QAM | 64-QAM | 16-QAM | 3/4 |
| 51 | 1024-QAM | 256-QAM | 64-QAM | 16-QAM | 3/4 |
| 52 | 1024-QAM | 1024-QAM | 64-QAM | 16-QAM | 3/4 |
| 53 | 256-QAM | 256-QAM | 256-QAM | 16-QAM | 3/4 |
| 54 | 1024-QAM | 256-QAM | 256-QAM | 16-QAM | 3/4 |
| 55 | 1024-QAM | 1024-QAM | 256-QAM | 16-QAM | 3/4 |
| 56 | 1024-QAM | 1024-QAM | 1024-QAM | 16-QAM | 3/4 |
| 57 | 256-QAM | 64-QAM | 64-QAM | 64-QAM | 3/4 |
| 58 | 1024-QAM | 64-QAM | 64-QAM | 64-QAM | 3/4 |
| 59 | 4096-QAM | 64-QAM | 64-QAM | 64-QAM | 3/4 |
| 60 | 256-QAM | 256-QAM | 64-QAM | 64-QAM | 3/4 |
| 61 | 1024-QAM | 256-QAM | 64-QAM | 64-QAM | 3/4 |
| 62 | 4096-QAM | 256-QAM | 64-QAM | 64-QAM | 3/4 |
| 63 | 1024-QAM | 1024-QAM | 64-QAM | 64-QAM | 3/4 |
| 64 | 4096-QAM | 1024-QAM | 64-QAM | 64-QAM | 3/4 |
| 65 | 4096-QAM | 4096-QAM | 64-QAM | 64-QAM | 3/4 |
| 66 | 256-QAM | 256-QAM | 256-QAM | 64-QAM | 3/4 |
| 67 | 1024-QAM | 256-QAM | 256-QAM | 64-QAM | 3/4 |
| 68 | 4096-QAM | 256-QAM | 256-QAM | 64-QAM | 3/4 |
| 69 | 1024-QAM | 1024-QAM | 256-QAM | 64-QAM | 3/4 |
| 70 | 4096-QAM | 1024-QAM | 256-QAM | 64-QAM | 3/4 |
| 71 | 4096-QAM | 4096-QAM | 256-QAM | 64-QAM | 3/4 |
| 72 | 1024-QAM | 1024-QAM | 1024-QAM | 64-QAM | 3/4 |
| 73 | 4096-QAM | 1024-QAM | 1024-QAM | 64-QAM | 3/4 |
| 74 | 4096-QAM | 4096-QAM | 1024-QAM | 64-QAM | 3/4 |
| 75 | 4096-QAM | 4096-QAM | 4096-QAM | 64-QAM | 3/4 |
| 76 | 1024-QAM | 256-QAM | 256-QAM | 256-QAM | 3/4 |
| 77 | 4096-QAM | 256-QAM | 256-QAM | 256-QAM | 3/4 |
| 78 | 1024-QAM | 1024-QAM | 256-QAM | 256-QAM | 3/4 |
| 79 | 4096-QAM | 1024-QAM | 256-QAM | 256-QAM | 3/4 |
| 80 | 4096-QAM | 4096-QAM | 256-QAM | 256-QAM | 3/4 |
| 81 | 1024-QAM | 1024-QAM | 1024-QAM | 256-QAM | 3/4 |
| 82 | 4096-QAM | 1024-QAM | 1024-QAM | 256-QAM | 3/4 |
| 83 | 4096-QAM | 4096-QAM | 1024-QAM | 256-QAM | 3/4 |
| 84 | 4096-QAM | 4096-QAM | 4096-QAM | 256-QAM | 3/4 |
| 85 | 4096-QAM | 1024-QAM | 1024-QAM | 1024-QAM | 3/4 |
| 86 | 4096-QAM | 4096-QAM | 1024-QAM | 1024-QAM | 3/4 |
| 87 | 4096-QAM | 4096-QAM | 4096-QAM | 1024-QAM | 3/4 |
| 88 | 256-QAM | 64-QAM | 64-QAM | 64-QAM | 5/6 |
| 89 | 1024-QAM | 64-QAM | 64-QAM | 64-QAM | 5/6 |
| 90 | 4096-QAM | 64-QAM | 64-QAM | 64-QAM | 5/6 |
| 91 | 256-QAM | 256-QAM | 64-QAM | 64-QAM | 5/6 |
| 92 | 1024-QAM | 256-QAM | 64-QAM | 64-QAM | 5/6 |
| 93 | 4096-QAM | 256-QAM | 64-QAM | 64-QAM | 5/6 |
| 94 | 1024-QAM | 1024-QAM | 64-QAM | 64-QAM | 5/6 |
| 95 | 4096-QAM | 1024-QAM | 64-QAM | 64-QAM | 5/6 |
| 96 | 4096-QAM | 4096-QAM | 64-QAM | 64-QAM | 5/6 |
| 97 | 256-QAM | 256-QAM | 256-QAM | 64-QAM | 5/6 |
| 98 | 1024-QAM | 256-QAM | 256-QAM | 64-QAM | 5/6 |
| 99 | 4096-QAM | 256-QAM | 256-QAM | 64-QAM | 5/6 |
| 100 | 1024-QAM | 1024-QAM | 256-QAM | 64-QAM | 5/6 |
| 101 | 4096-QAM | 1024-QAM | 256-QAM | 64-QAM | 5/6 |
| 102 | 4096-QAM | 4096-QAM | 256-QAM | 64-QAM | 5/6 |
| 103 | 1024-QAM | 1024-QAM | 1024-QAM | 64-QAM | 5/6 |
| 104 | 4096-QAM | 1024-QAM | 1024-QAM | 64-QAM | 5/6 |
| 105 | 4096-QAM | 4096-QAM | 1024-QAM | 64-QAM | 5/6 |
| 106 | 4096-QAM | 4096-QAM | 4096-QAM | 64-QAM | 5/6 |
| 107 | 1024-QAM | 256-QAM | 256-QAM | 256-QAM | 5/6 |
| 108 | 4096-QAM | 256-QAM | 256-QAM | 256-QAM | 5/6 |
| 109 | 1024-QAM | 1024-QAM | 256-QAM | 256-QAM | 5/6 |
| 110 | 4096-QAM | 1024-QAM | 256-QAM | 256-QAM | 5/6 |
| 111 | 4096-QAM | 4096-QAM | 256-QAM | 256-QAM | 5/6 |
| 112 | 1024-QAM | 1024-QAM | 1024-QAM | 256-QAM | 5/6 |
| 113 | 4096-QAM | 1024-QAM | 1024-QAM | 256-QAM | 5/6 |
| 114 | 4096-QAM | 4096-QAM | 1024-QAM | 256-QAM | 5/6 |
| 115 | 4096-QAM | 4096-QAM | 4096-QAM | 256-QAM | 5/6 |
| 116 | 4096-QAM | 1024-QAM | 1024-QAM | 1024-QAM | 5/6 |
| 117 | 4096-QAM | 4096-QAM | 1024-QAM | 1024-QAM | 5/6 |
| 118 | 4096-QAM | 4096-QAM | 4096-QAM | 1024-QAM | 5/6 |
| 119 to END (for example, END=127) | 4096-QAM | 4096-QAM | 4096-QAM | 1024-QAM | 5/6 |

It can be learned by comparing Table 17 with Table 16 that, after Table 16 is optimized in the optimization manner 5, 223-118=105 entries in Table 16 are reduced, and 1-bit overheads are saved for the UEQM MCS field, in other words, 1-bit overheads are saved for each user.

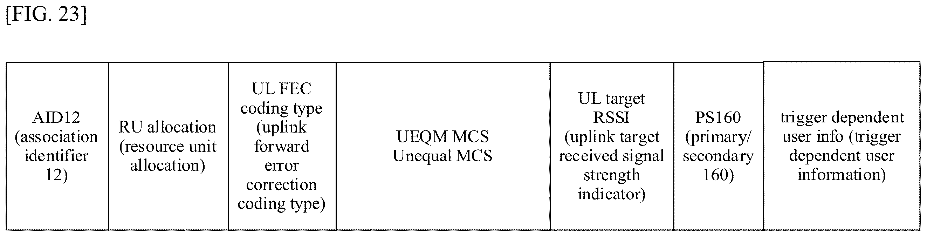

The foregoing provides descriptions that UEQM index tables are respectively designed for different numbers of spatial streams. The following describes all cases in which a same UEQM index table indicates 2 SSs to 4 SSs, including the EQM modulation scheme and the UEQM modulation scheme. Table 18 is another example of the UEQM index table. Table 18 may indicate both the NSS and a modulation scheme of each spatial stream, including the EQM and the UEQM. For example, the length of the UEQM MCS field is 10 bits, and an index represented by the value of the UEQM MCS field is any index in Table 18. For example, a user information field includes an association identifier 12 field, a resource unit allocation field, an uplink forward error correction coding type field, a UEQM MCS field (that is, the seventh field), an NSS field (that is, the sixth field), an uplink target received signal strength indicator field, a primary/secondary 160 field, and a trigger dependent user information field. Refer to FIG. 23. FIG. 23 is an example of a format of a user information field in the trigger frame according to an embodiment of this application. For example, a user information list field in the trigger frame includes a plurality of user information fields, and formats of the user information fields are the same. For example, the format of the user information field is shown in FIG. 23. The UEQM MCS field in FIG. 23 may be referred to as a UEQM MCS and NSS (an unequal modulation MCS and number of spatial streams) field. In addition, Table 18 may be further simplified in the optimization manner 4 and/or the optimization manner 5, to reduce a mode that needs to be supported by the device and overheads of a signal field. A bold entry in Table 18 is a modulation+coding rate combination that is not supported under the EQM.

**Table 18**

| Index | NSS | Modulation | | | | Coding rate |
|---|---|---|---|---|---|---|
| | | Modulation scheme of a first spatial stream | Modulation scheme of a second spatial stream | Modulation scheme of a third spatial stream | Modulation scheme of a fourth spatial stream | |
| 0 | 1 | BPSK | | | | 1/2 |
| 1 | 1 | QPSK | | | | 1/2 |
| 2 | 1 | | | | | 3/4 |
| 3 | 1 | 16-QAM | | | | 1/2 |
| 4 | 1 | | | | | 3/4 |
| 5 | 1 | 64-QAM | | | | 2/3 |
| 6 | 1 | | | | | 3/4 |
| 7 | 1 | | | | | 5/6 |
| 8 | 1 | 256-QAM | | | | 3/4 |
| 9 | 1 | | | | | 5/6 |
| 10 | 1 | 1024-QAM | | | | 3/4 |
| 11 | 1 | | | | | 5/6 |
| 12 | 1 | 4096-QAM | | | | 3/4 |
| 13 | 1 | | | | | 5/6 |
| 14 | 1 | EHT DUP | | | | 1/2 |
| 15 | 1 | BPSK-DCM | | | | 1/2 |
| 16 | 2 | BPSK | | | | 1/2 |
| 17 | 2 | QPSK | | | | 1/2 |
| 18 | 2 | | | | | 3/4 |
| 19 | 2 | 16-QAM | | | | 1/2 |
| 20 | 2 | | | | | 3/4 |
| 21 | 2 | 64-QAM | | | | 2/3 |
| 22 | 2 | | | | | 3/4 |
| 23 | 2 | | | | | 5/6 |
| 24 | 2 | 256-QAM | | | | 3/4 |
| 25 | 2 | | | | | 5/6 |
| 26 | 2 | 1024-QAM | | | | 3/4 |
| 27 | 2 | | | | | 5/6 |
| 28 | 2 | 4096-QAM | | | | 3/4 |
| 29 | 2 | | | | | 5/6 |
| 30 | 2 | EHT DUP | | | | 1/2 |
| 31 | 2 | BPSK-DCM | | | | 1/2 |
| 32 | 3 | BPSK | | | | 1/2 |
| 33 | 3 | QPSK | | | | 1/2 |
| 34 | 3 | | | | | 3/4 |
| 35 | 3 | 16-QAM | | | | 1/2 |
| 36 | 3 | | | | | 3/4 |
| 37 | 3 | 64-QAM | | | | 2/3 |
| 38 | 3 | | | | | 3/4 |
| 39 | 3 | | | | | 5/6 |
| 40 | 3 | 256-QAM | | | | 3/4 |
| 41 | 3 | | | | | 5/6 |
| 42 | 3 | 1024-QAM | | | | 3/4 |
| 43 | 3 | | | | | 5/6 |
| 44 | 3 | 4096-QAM | | | | 3/4 |
| 45 | 3 | | | | | 5/6 |
| 46 | 3 | EHT DUP | | | | 1/2 |
| 47 | 3 | BPSK-DCM | | | | 1/2 |
| 48 | 4 | BPSK | | | | 1/2 |
| 49 | 4 | QPSK | | | | 1/2 |
| 50 | 4 | | | | | 3/4 |
| 51 | 4 | 16-QAM | | | | 1/2 |
| 52 | 4 | | | | | 3/4 |
| 53 | 4 | 64-QAM | | | | 2/3 |
| 54 | 4 | | | | | 3/4 |
| 55 | 4 | | | | | 5/6 |
| 56 | 4 | 256-QAM | | | | 3/4 |
| 57 | 4 | | | | | 5/6 |
| 58 | 4 | 1024-QAM | | | | 3/4 |
| 59 | 4 | | | | | 5/6 |
| 60 | 4 | 4096-QAM | | | | 3/4 |
| 61 | 4 | | | | | 5/6 |
| 62 | 4 | EHT DUP | | | | 1/2 |
| 63 | 4 | BPSK-DCM | | | | 1/2 |
| 64 | 5 | BPSK | | | | 1/2 |
| 65 | 5 | QPSK | | | | 1/2 |
| 66 | 5 | | | | | 3/4 |
| 67 | 5 | 16-QAM | | | | 1/2 |
| 68 | 5 | | | | | 3/4 |
| 69 | 5 | 64-QAM | | | | 2/3 |
| 70 | 5 | | | | | 3/4 |
| 71 | 5 | | | | | 5/6 |
| 72 | 5 | 256-QAM | | | | 3/4 |
| 73 | 5 | | | | | 5/6 |
| 74 | 5 | 1024-QAM | | | | 3/4 |
| 75 | 5 | | | | | 5/6 |
| 76 | 5 | 4096-QAM | | | | 3/4 |
| 77 | 5 | | | | | 5/6 |
| 78 | 5 | EHT DUP | | | | 1/2 |
| 79 | 5 | BPSK-DCM | | | | 1/2 |
| 80 | 6 | BPSK | | | | 1/2 |
| 81 | 6 | QPSK | | | | 1/2 |
| 82 | 6 | | | | | 3/4 |
| 83 | 6 | 16-QAM | | | | 1/2 |
| 84 | 6 | | | | | 3/4 |
| 85 | 6 | 64-QAM | | | | 2/3 |
| 86 | 6 | | | | | 3/4 |
| 87 | 6 | | | | | 5/6 |
| 88 | 6 | 256-QAM | | | | 3/4 |
| 89 | 6 | | | | | 5/6 |
| 90 | 6 | 1024-QAM | | | | 3/4 |
| 91 | 6 | | | | | 5/6 |
| 92 | 6 | 4096-QAM | | | | 3/4 |
| 93 | 6 | | | | | 5/6 |
| 94 | 6 | EHT DUP | | | | 1/2 |
| 95 | 6 | BPSK-DCM | | | | 1/2 |
| 96 | 7 | BPSK | | | | 1/2 |
| 97 | 7 | QPSK | | | | 1/2 |
| 98 | 7 | | | | | 3/4 |
| 99 | 7 | 16-QAM | | | | 1/2 |
| 100 | 7 | | | | | 3/4 |
| 101 | 7 | 64-QAM | | | | 2/3 |
| 102 | 7 | | | | | 3/4 |
| 103 | 7 | | | | | 5/6 |
| 104 | 7 | 256-QAM | | | | 3/4 |
| 105 | 7 | | | | | 5/6 |
| 106 | 7 | 1024-QAM | | | | 3/4 |
| 107 | 7 | | | | | 5/6 |
| 108 | 7 | 4096-QAM | | | | 3/4 |
| 109 | 7 | | | | | 5/6 |
| 110 | 7 | EHT DUP | | | | 1/2 |
| 111 | 7 | BPSK-DCM | | | | 1/2 |
| 112 | 8 | BPSK | | | | 1/2 |
| 113 | 8 | QPSK | | | | 1/2 |
| 114 | 8 | | | | | 3/4 |
| 115 | 8 | 16-QAM | | | | 1/2 |
| 116 | 8 | | | | | 3/4 |
| 117 | 8 | 64-QAM | | | | 2/3 |
| 118 | 8 | | | | | 3/4 |
| 119 | 8 | | | | | 5/6 |
| 120 | 8 | 256-QAM | | | | 3/4 |
| 121 | 8 | | | | | 5/6 |
| 122 | 8 | 1024-QAM | | | | 3/4 |
| 123 | 8 | | | | | 5/6 |
| 124 | 8 | 4096-QAM | | | | 3/4 |
| 125 | 8 | | | | | 5/6 |
| 126 | 8 | EHT DUP | | | | 1/2 |
| 127 | 8 | BPSK-DCM | | | | 1/2 |
| 128 | 2 | 16-QAM | QPSK | | | 1/2 |
| 129 | 2 | **64-QAM** | QPSK | | | 1/2 |
| 130 | 2 | **256-QAM** | QPSK | | | 1/2 |
| 131 | 2 | **1024-QAM** | QPSK | | | 1/2 |
| 132 | 2 | **4096-QAM** | QPSK | | | 1/2 |
| 133 | 2 | **64-QAM** | 16-QAM | | | 1/2 |
| 134 | 2 | **256-QAM** | 16-QAM | | | 1/2 |
| 135 | 2 | **1024-QAM** | 16-QAM | | | 1/2 |
| 136 | 2 | **4096-QAM** | 16-QAM | | | 1/2 |
| 137 | 2 | **256-QAM** | **64-QAM** | | | 1/2 |
| 138 | 2 | **1024-QAM** | **64-QAM** | | | 1/2 |
| 139 | 2 | **4096-QAM** | **64-QAM** | | | 1/2 |
| 140 | 2 | **1024-QAM** | **256-QAM** | | | 1/2 |
| 141 | 2 | **4096-QAM** | **256-QAM** | | | 1/2 |
| 142 | 2 | **4096-QAM** | **1024-QAM** | | | 1/2 |
| 143 | 2 | 16-QAM | QPSK | | | 3/4 |
| 144 | 2 | 64-QAM | QPSK | | | 3/4 |
| 145 | 2 | 256-QAM | QPSK | | | 3/4 |
| 146 | 2 | 1024-QAM | QPSK | | | 3/4 |
| 147 | 2 | 4096-QAM | QPSK | | | 3/4 |
| 148 | 2 | 64-QAM | 16-QAM | | | 3/4 |
| 149 | 2 | 256-QAM | 16-QAM | | | 3/4 |
| 150 | 2 | 1024-QAM | 16-QAM | | | 3/4 |
| 151 | 2 | 4096-QAM | 16-QAM | | | 3/4 |
| 152 | 2 | 256-QAM | 64-QAM | | | 3/4 |
| 153 | 2 | 1024-QAM | 64-QAM | | | 3/4 |
| 154 | 2 | 4096-QAM | 64-QAM | | | 3/4 |
| 155 | 2 | 1024-QAM | 256-QAM | | | 3/4 |
| 156 | 2 | 4096-QAM | 256-QAM | | | 3/4 |
| 157 | 2 | 4096-QAM | 1024-QAM | | | 3/4 |
| 158 | 2 | **16-QAM** | **QPSK** | | | 5/6 |
| 159 | 2 | 64-QAM | **QPSK** | | | 5/6 |
| 160 | 2 | 256-QAM | **QPSK** | | | 5/6 |
| 161 | 2 | 1024-QAM | **QPSK** | | | 5/6 |
| 162 | 2 | 4096-QAM | **QPSK** | | | 5/6 |
| 163 | 2 | 64-QAM | **16-QAM** | | | 5/6 |
| 164 | 2 | 256-QAM | **16-QAM** | | | 5/6 |
| 165 | 2 | 1024-QAM | **16-QAM** | | | 5/6 |
| 166 | 2 | 4096-QAM | **16-QAM** | | | 5/6 |
| 167 | 2 | 256-QAM | 64-QAM | | | 5/6 |
| 168 | 2 | 1024-QAM | 64-QAM | | | 5/6 |
| 169 | 2 | 4096-QAM | 64-QAM | | | 5/6 |
| 170 | 2 | 1024-QAM | 256-QAM | | | 5/6 |
| 171 | 2 | 4096-QAM | 256-QAM | | | 5/6 |
| 172 | 2 | 4096-QAM | 1024-QAM | | | 5/6 |
| 173 | 3 | 16-QAM | QPSK | QPSK | | 1/2 |
| 174 | 3 | **64-QAM** | QPSK | QPSK | | 1/2 |
| 175 | 3 | **256-QAM** | QPSK | QPSK | | 1/2 |
| 176 | 3 | **1024-QAM** | QPSK | QPSK | | 1/2 |
| 177 | 3 | **4096-QAM** | QPSK | QPSK | | 1/2 |
| 178 | 3 | 16-QAM | 16-QAM | QPSK | | 1/2 |
| 179 | 3 | **64-QAM** | 16-QAM | QPSK | | 1/2 |
| 180 | 3 | **256-QAM** | 16-QAM | QPSK | | 1/2 |
| 181 | 3 | **1024-QAM** | 16-QAM | QPSK | | 1/2 |
| 182 | 3 | **4096-QAM** | 16-QAM | QPSK | | 1/2 |
| 183 | 3 | **64-QAM** | **64-QAM** | QPSK | | 1/2 |
| 184 | 3 | **256-QAM** | **64-QAM** | QPSK | | 1/2 |
| 185 | 3 | **1024-QAM** | **64-QAM** | QPSK | | 1/2 |
| 186 | 3 | **4096-QAM** | **64-QAM** | QPSK | | 1/2 |
| 187 | 3 | **256-QAM** | **256-QAM** | QPSK | | 1/2 |
| 188 | 3 | **1024-QAM** | **256-QAM** | QPSK | | 1/2 |
| 189 | 3 | **4096-QAM** | **256-QAM** | QPSK | | 1/2 |
| 190 | 3 | **1024-QAM** | **1024-QAM** | QPSK | | 1/2 |
| 191 | 3 | **4096-QAM** | **1024-QAM** | QPSK | | 1/2 |
| 192 | 3 | **4096-QAM** | **4096-QAM** | QPSK | | 1/2 |
| 193 | 3 | **64-QAM** | 16-QAM | 16-QAM | | 1/2 |
| 194 | 3 | **256-QAM** | 16-QAM | 16-QAM | | 1/2 |
| 195 | 3 | **1024-QAM** | 16-QAM | 16-QAM | | 1/2 |
| 196 | 3 | **4096-QAM** | 16-QAM | 16-QAM | | 1/2 |
| 197 | 3 | **64-QAM** | **64-QAM** | 16-QAM | | 1/2 |
| 198 | 3 | **256-QAM** | **64-QAM** | 16-QAM | | 1/2 |
| 199 | 3 | **1024-QAM** | **64-QAM** | 16-QAM | | 1/2 |
| 200 | 3 | **4096-QAM** | **64-QAM** | 16-QAM | | 1/2 |
| 201 | 3 | **256-QAM** | **256-QAM** | 16-QAM | | 1/2 |
| 202 | 3 | **1024-QAM** | **256-QAM** | 16-QAM | | 1/2 |
| 203 | 3 | **4096-QAM** | **256-QAM** | 16-QAM | | 1/2 |
| 204 | 3 | **1024-QAM** | **1024-QAM** | 16-QAM | | 1/2 |
| 205 | 3 | **4096-QAM** | **1024-QAM** | 16-QAM | | 1/2 |
| 206 | 3 | **4096-QAM** | **4096-QAM** | 16-QAM | | 1/2 |
| 207 | 3 | **256-QAM** | **64-QAM** | **64-QAM** | | 1/2 |
| 208 | 3 | **1024-QAM** | **64-QAM** | **64-QAM** | | 1/2 |
| 209 | 3 | **4096-QAM** | **64-QAM** | **64-QAM** | | 1/2 |
| 210 | 3 | **256-QAM** | **256-QAM** | **64-QAM** | | 1/2 |
| 211 | 3 | **1024-QAM** | **256-QAM** | **64-QAM** | | 1/2 |
| 212 | 3 | **4096-QAM** | **256-QAM** | **64-QAM** | | 1/2 |
| 213 | 3 | **1024-QAM** | **1024-QAM** | **64-QAM** | | 1/2 |
| 214 | 3 | **4096-QAM** | **1024-QAM** | **64-QAM** | | 1/2 |
| 215 | 3 | **4096-QAM** | **4096-QAM** | **64-QAM** | | 1/2 |
| 216 | 3 | **1024-QAM** | **256-QAM** | **256-QAM** | | 1/2 |
| 217 | 3 | **4096-QAM** | **256-QAM** | **256-QAM** | | 1/2 |
| 218 | 3 | **1024-QAM** | **1024-QAM** | **256-QAM** | | 1/2 |
| 219 | 3 | **4096-QAM** | **1024-QAM** | **256-QAM** | | 1/2 |
| 220 | 3 | **4096-QAM** | **4096-QAM** | **256-QAM** | | 1/2 |
| 221 | 3 | **4096-QAM** | **1024-QAM** | **1024-QAM** | | 1/2 |
| 222 | 3 | **4096-QAM** | **4096-QAM** | **1024-QAM** | | 1/2 |
| 223 | 3 | 16-QAM | QPSK | QPSK | | 3/4 |
| 224 | 3 | 64-QAM | QPSK | QPSK | | 3/4 |
| 225 | 3 | 256-QAM | QPSK | QPSK | | 3/4 |
| 226 | 3 | 1024-QAM | QPSK | QPSK | | 3/4 |
| 227 | 3 | 4096-QAM | QPSK | QPSK | | 3/4 |
| 228 | 3 | 16-QAM | 16-QAM | QPSK | | 3/4 |
| 229 | 3 | 64-QAM | 16-QAM | QPSK | | 3/4 |
| 230 | 3 | 256-QAM | 16-QAM | QPSK | | 3/4 |
| 231 | 3 | 1024-QAM | 16-QAM | QPSK | | 3/4 |
| 232 | 3 | 4096-QAM | 16-QAM | QPSK | | 3/4 |
| 233 | 3 | 64-QAM | 64-QAM | QPSK | | 3/4 |
| 234 | 3 | 256-QAM | 64-QAM | QPSK | | 3/4 |
| 235 | 3 | 1024-QAM | 64-QAM | QPSK | | 3/4 |
| 236 | 3 | 4096-QAM | 64-QAM | QPSK | | 3/4 |
| 237 | 3 | 256-QAM | 256-QAM | QPSK | | 3/4 |
| 238 | 3 | 1024-QAM | 256-QAM | QPSK | | 3/4 |
| 239 | 3 | 4096-QAM | 256-QAM | QPSK | | 3/4 |
| 240 | 3 | 1024-QAM | 1024-QAM | QPSK | | 3/4 |
| 241 | 3 | 4096-QAM | 1024-QAM | QPSK | | 3/4 |
| 242 | 3 | 4096-QAM | 4096-QAM | QPSK | | 3/4 |
| 243 | 3 | 64-QAM | 16-QAM | 16-QAM | | 3/4 |
| 244 | 3 | 256-QAM | 16-QAM | 16-QAM | | 3/4 |
| 245 | 3 | 1024-QAM | 16-QAM | 16-QAM | | 3/4 |
| 246 | 3 | 4096-QAM | 16-QAM | 16-QAM | | 3/4 |
| 247 | 3 | 64-QAM | 64-QAM | 16-QAM | | 3/4 |
| 248 | 3 | 256-QAM | 64-QAM | 16-QAM | | 3/4 |
| 249 | 3 | 1024-QAM | 64-QAM | 16-QAM | | 3/4 |
| 250 | 3 | 4096-QAM | 64-QAM | 16-QAM | | 3/4 |
| 251 | 3 | 256-QAM | 256-QAM | 16-QAM | | 3/4 |
| 252 | 3 | 1024-QAM | 256-QAM | 16-QAM | | 3/4 |
| 253 | 3 | 4096-QAM | 256-QAM | 16-QAM | | 3/4 |
| 254 | 3 | 1024-QAM | 1024-QAM | 16-QAM | | 3/4 |
| 255 | 3 | 4096-QAM | 1024-QAM | 16-QAM | | 3/4 |
| 256 | 3 | 4096-QAM | 4096-QAM | 16-QAM | | 3/4 |
| 257 | 3 | 256-QAM | 64-QAM | 64-QAM | | 3/4 |
| 258 | 3 | 1024-QAM | 64-QAM | 64-QAM | | 3/4 |
| 259 | 3 | 4096-QAM | 64-QAM | 64-QAM | | 3/4 |
| 260 | 3 | 256-QAM | 256-QAM | 64-QAM | | 3/4 |
| 261 | 3 | 1024-QAM | 256-QAM | 64-QAM | | 3/4 |
| 262 | 3 | 4096-QAM | 256-QAM | 64-QAM | | 3/4 |
| 263 | 3 | 1024-QAM | 1024-QAM | 64-QAM | | 3/4 |
| 264 | 3 | 4096-QAM | 1024-QAM | 64-QAM | | 3/4 |
| 265 | 3 | 4096-QAM | 4096-QAM | 64-QAM | | 3/4 |
| 266 | 3 | 1024-QAM | 256-QAM | 256-QAM | | 3/4 |
| 267 | 3 | 4096-QAM | 256-QAM | 256-QAM | | 3/4 |
| 268 | 3 | 1024-QAM | 1024-QAM | 256-QAM | | 3/4 |
| 269 | 3 | 4096-QAM | 1024-QAM | 256-QAM | | 3/4 |
| 270 | 3 | 4096-QAM | 4096-QAM | 256-QAM | | 3/4 |
| 271 | 3 | 4096-QAM | 1024-QAM | 1024-QAM | | 3/4 |
| 272 | 3 | 4096-QAM | 4096-QAM | 1024-QAM | | 3/4 |
| 273 | 3 | **16-QAM** | **QPSK** | **QPSK** | | 5/6 |
| 274 | 3 | 64-QAM | **QPSK** | **QPSK** | | 5/6 |
| 275 | 3 | 256-QAM | **QPSK** | **QPSK** | | 5/6 |
| 276 | 3 | 1024-QAM | **QPSK** | **QPSK** | | 5/6 |
| 277 | 3 | 4096-QAM | **QPSK** | **QPSK** | | 5/6 |
| 278 | 3 | **16-QAM** | **16-QAM** | **QPSK** | | 5/6 |
| 279 | 3 | 64-QAM | **16-QAM** | **QPSK** | | 5/6 |
| 280 | 3 | 256-QAM | **16-QAM** | **QPSK** | | 5/6 |
| 281 | 3 | 1024-QAM | **16-QAM** | **QPSK** | | 5/6 |
| 282 | 3 | 4096-QAM | **16-QAM** | **QPSK** | | 5/6 |
| 283 | 3 | 64-QAM | 64-QAM | **QPSK** | | 5/6 |
| 284 | 3 | 256-QAM | 64-QAM | **QPSK** | | 5/6 |
| 285 | 3 | 1024-QAM | 64-QAM | **QPSK** | | 5/6 |
| 286 | 3 | 4096-QAM | 64-QAM | **QPSK** | | 5/6 |
| 287 | 3 | 256-QAM | 256-QAM | **QPSK** | | 5/6 |
| 288 | 3 | 1024-QAM | 256-QAM | **QPSK** | | 5/6 |
| 289 | 3 | 4096-QAM | 256-QAM | **QPSK** | | 5/6 |
| 290 | 3 | 1024-QAM | 1024-QAM | **QPSK** | | 5/6 |
| 291 | 3 | 4096-QAM | 1024-QAM | **QPSK** | | 5/6 |
| 292 | 3 | 4096-QAM | 4096-QAM | **QPSK** | | 5/6 |
| 293 | 3 | 64-QAM | **16-QAM** | **16-QAM** | | 5/6 |
| 294 | 3 | 256-QAM | **16-QAM** | **16-QAM** | | 5/6 |
| 295 | 3 | 1024-QAM | **16-QAM** | **16-QAM** | | 5/6 |
| 296 | 3 | 4096-QAM | **16-QAM** | **16-QAM** | | 5/6 |
| 297 | 3 | 64-QAM | 64-QAM | **16-QAM** | | 5/6 |
| 298 | 3 | 256-QAM | 64-QAM | **16-QAM** | | 5/6 |
| 299 | 3 | 1024-QAM | 64-QAM | **16-QAM** | | 5/6 |
| 300 | 3 | 4096-QAM | 64-QAM | **16-QAM** | | 5/6 |
| 301 | 3 | 256-QAM | 256-QAM | **16-QAM** | | 5/6 |
| 302 | 3 | 1024-QAM | 256-QAM | **16-QAM** | | 5/6 |
| 303 | 3 | 4096-QAM | 256-QAM | **16-QAM** | | 5/6 |
| 304 | 3 | 1024-QAM | 1024-QAM | **16-QAM** | | 5/6 |
| 305 | 3 | 4096-QAM | 1024-QAM | **16-QAM** | | 5/6 |
| 306 | 3 | 4096-QAM | 4096-QAM | **16-QAM** | | 5/6 |
| 307 | 3 | 256-QAM | 64-QAM | 64-QAM | | 5/6 |
| 308 | 3 | 1024-QAM | 64-QAM | 64-QAM | | 5/6 |
| 309 | 3 | 4096-QAM | 64-QAM | 64-QAM | | 5/6 |
| 310 | 3 | 256-QAM | 256-QAM | 64-QAM | | 5/6 |
| 311 | 3 | 1024-QAM | 256-QAM | 64-QAM | | 5/6 |
| 312 | 3 | 4096-QAM | 256-QAM | 64-QAM | | 5/6 |
| 313 | 3 | 1024-QAM | 1024-QAM | 64-QAM | | 5/6 |
| 314 | 3 | 4096-QAM | 1024-QAM | 64-QAM | | 5/6 |
| 315 | 3 | 4096-QAM | 4096-QAM | 64-QAM | | 5/6 |
| 316 | 3 | 1024-QAM | 256-QAM | 256-QAM | | 5/6 |
| 317 | 3 | 4096-QAM | 256-QAM | 256-QAM | | 5/6 |
| 318 | 3 | 1024-QAM | 1024-QAM | 256-QAM | | 5/6 |
| 319 | 3 | 4096-QAM | 1024-QAM | 256-QAM | | 5/6 |
| 320 | 3 | 4096-QAM | 4096-QAM | 256-QAM | | 5/6 |
| 321 | 3 | 4096-QAM | 1024-QAM | 1024-QAM | | 5/6 |
| 322 | 3 | 4096-QAM | 4096-QAM | 1024-QAM | | 5/6 |
| 323 | 4 | 16-QAM | QPSK | QPSK | QPSK | 1/2 |
| 324 | 4 | **64-QAM** | QPSK | QPSK | QPSK | 1/2 |
| 325 | 4 | **256-QAM** | QPSK | QPSK | QPSK | 1/2 |
| 326 | 4 | **1024-QAM** | QPSK | QPSK | QPSK | 1/2 |
| 327 | 4 | **4096-QAM** | QPSK | QPSK | QPSK | 1/2 |
| 328 | 4 | 16-QAM | 16-QAM | QPSK | QPSK | 1/2 |
| 329 | 4 | **64-QAM** | 16-QAM | QPSK | QPSK | 1/2 |
| 330 | 4 | **256-QAM** | 16-QAM | QPSK | QPSK | 1/2 |
| 331 | 4 | **1024-QAM** | 16-QAM | QPSK | QPSK | 1/2 |
| 332 | 4 | **4096-QAM** | 16-QAM | QPSK | QPSK | 1/2 |
| 333 | 4 | **64-QAM** | **64-QAM** | QPSK | QPSK | 1/2 |
| 334 | 4 | **256-QAM** | **64-QAM** | QPSK | QPSK | 1/2 |
| 335 | 4 | **1024-QAM** | **64-QAM** | QPSK | QPSK | 1/2 |
| 336 | 4 | **4096-QAM** | **64-QAM** | QPSK | QPSK | 1/2 |
| 337 | 4 | **256-QAM** | **256-QAM** | QPSK | QPSK | 1/2 |
| 338 | 4 | **1024-QAM** | **256-QAM** | QPSK | QPSK | 1/2 |
| 339 | 4 | **4096-QAM** | **256-QAM** | QPSK | QPSK | 1/2 |
| 340 | 4 | **1024-QAM** | **1024-QAM** | QPSK | QPSK | 1/2 |
| 341 | 4 | **4096-QAM** | **1024-QAM** | QPSK | QPSK | 1/2 |
| 342 | 4 | **4096-QAM** | **4096-QAM** | QPSK | QPSK | 1/2 |
| 343 | 4 | 16-QAM | 16-QAM | 16-QAM | QPSK | 1/2 |
| 344 | 4 | 64-QAM | 16-QAM | 16-QAM | QPSK | 1/2 |
| 345 | 4 | **256-QAM** | 16-QAM | 16-QAM | QPSK | 1/2 |
| 346 | 4 | **1024-QAM** | 16-QAM | 16-QAM | QPSK | 1/2 |
| 347 | 4 | **4096-QAM** | 16-QAM | 16-QAM | QPSK | 1/2 |
| 348 | 4 | **64-QAM** | **64-QAM** | 16-QAM | QPSK | 1/2 |
| 349 | 4 | **256-QAM** | **64-QAM** | 16-QAM | QPSK | 1/2 |
| 350 | 4 | **1024-QAM** | **64-QAM** | 16-QAM | QPSK | 1/2 |
| 351 | 4 | **4096-QAM** | **64-QAM** | 16-QAM | QPSK | 1/2 |
| 352 | 4 | **256-QAM** | **256-QAM** | 16-QAM | QPSK | 1/2 |
| 353 | 4 | **1024-QAM** | **256-QAM** | 16-QAM | QPSK | 1/2 |
| 354 | 4 | **4096-QAM** | **256-QAM** | 16-QAM | QPSK | 1/2 |
| 355 | 4 | **1024-QAM** | **1024-QAM** | 16-QAM | QPSK | 1/2 |
| 356 | 4 | **4096-QAM** | **1024-QAM** | 16-QAM | QPSK | 1/2 |
| 357 | 4 | **4096-QAM** | **4096-QAM** | 16-QAM | QPSK | 1/2 |
| 358 | 4 | **64-QAM** | **64-QAM** | **64-QAM** | QPSK | 1/2 |
| 359 | 4 | **256-QAM** | **64-QAM** | **64-QAM** | QPSK | 1/2 |
| 360 | 4 | **1024-QAM** | **64-QAM** | **64-QAM** | QPSK | 1/2 |
| 361 | 4 | **4096-QAM** | **64-QAM** | **64-QAM** | QPSK | 1/2 |
| 362 | 4 | **256-QAM** | **256-QAM** | **64-QAM** | QPSK | 1/2 |
| 363 | 4 | **1024-QAM** | **256-QAM** | **64-QAM** | QPSK | 1/2 |
| 364 | 4 | **4096-QAM** | **256-QAM** | **64-QAM** | QPSK | 1/2 |
| 365 | 4 | **1024-QAM** | **1024-QAM** | **64-QAM** | QPSK | 1/2 |
| 366 | 4 | **4096-QAM** | **1024-QAM** | **64-QAM** | QPSK | 1/2 |
| 367 | 4 | **4096-QAM** | **4096-QAM** | **64-QAM** | QPSK | 1/2 |
| 368 | 4 | **256-QAM** | **256-QAM** | **256-QAM** | QPSK | 1/2 |
| 369 | 4 | **1024-QAM** | **256-QAM** | **256-QAM** | QPSK | 1/2 |
| 370 | 4 | **4096-QAM** | **256-QAM** | **256-QAM** | QPSK | 1/2 |
| 371 | 4 | **1024-QAM** | **1024-QAM** | **256-QAM** | QPSK | 1/2 |
| 372 | 4 | **4096-QAM** | **1024-QAM** | **256-QAM** | QPSK | 1/2 |
| 373 | 4 | **4096-QAM** | **4096-QAM** | **256-QAM** | QPSK | 1/2 |
| 374 | 4 | **1024-QAM** | **1024-QAM** | **1024-QAM** | QPSK | 1/2 |
| 375 | 4 | **4096-QAM** | **1024-QAM** | **1024-QAM** | QPSK | 1/2 |
| 376 | 4 | **4096-QAM** | **4096-QAM** | **1024-QAM** | QPSK | 1/2 |
| 377 | 4 | **4096-QAM** | **4096-QAM** | **4096-QAM** | QPSK | 1/2 |
| 378 | 4 | **64-QAM** | 16-QAM | 16-QAM | 16-QAM | 1/2 |
| 379 | 4 | **256-QAM** | 16-QAM | 16-QAM | 16-QAM | 1/2 |
| 380 | 4 | **1024-QAM** | 16-QAM | 16-QAM | 16-QAM | 1/2 |
| 381 | 4 | **4096-QAM** | 16-QAM | 16-QAM | 16-QAM | 1/2 |
| 382 | 4 | **64-QAM** | **64-QAM** | 16-QAM | 16-QAM | 1/2 |
| 383 | 4 | **256-QAM** | **64-QAM** | 16-QAM | 16-QAM | 1/2 |
| 384 | 4 | **1024-QAM** | **64-QAM** | 16-QAM | 16-QAM | 1/2 |
| 385 | 4 | **4096-QAM** | **64-QAM** | 16-QAM | 16-QAM | 1/2 |
| 386 | 4 | **256-QAM** | **256-QAM** | 16-QAM | 16-QAM | 1/2 |
| 387 | 4 | **1024-QAM** | **256-QAM** | 16-QAM | 16-QAM | 1/2 |
| 388 | 4 | **4096-QAM** | **256-QAM** | 16-QAM | 16-QAM | 1/2 |
| 389 | 4 | **1024-QAM** | **1024-QAM** | 16-QAM | 16-QAM | 1/2 |
| 390 | 4 | **4096-QAM** | **1024-QAM** | 16-QAM | 16-QAM | 1/2 |
| 391 | 4 | **4096-QAM** | **4096-QAM** | 16-QAM | 16-QAM | 1/2 |
| 392 | 4 | **64-QAM** | **64-QAM** | **64-QAM** | 16-QAM | 1/2 |
| 393 | 4 | **256-QAM** | **64-QAM** | **64-QAM** | 16-QAM | 1/2 |
| 394 | 4 | **1024-QAM** | **64-QAM** | **64-QAM** | 16-QAM | 1/2 |
| 395 | 4 | **4096-QAM** | **64-QAM** | **64-QAM** | 16-QAM | 1/2 |
| 396 | 4 | **256-QAM** | **256-QAM** | **64-QAM** | 16-QAM | 1/2 |
| 397 | 4 | **1024-QAM** | **256-QAM** | **64-QAM** | 16-QAM | 1/2 |
| 398 | 4 | **4096-QAM** | **256-QAM** | **64-QAM** | 16-QAM | 1/2 |
| 399 | 4 | **1024-QAM** | **1024-QAM** | **64-QAM** | 16-QAM | 1/2 |
| 400 | 4 | **4096-QAM** | **1024-QAM** | **64-QAM** | 16-QAM | 1/2 |
| 401 | 4 | **4096-QAM** | **4096-QAM** | **64-QAM** | 16-QAM | 1/2 |
| 402 | 4 | **256-QAM** | **256-QAM** | **256-QAM** | 16-QAM | 1/2 |
| 403 | 4 | **1024-QAM** | **256-QAM** | **256-QAM** | 16-QAM | 1/2 |
| 404 | 4 | **4096-QAM** | **256-QAM** | **256-QAM** | 16-QAM | 1/2 |
| 405 | 4 | **1024-QAM** | **1024-QAM** | **256-QAM** | 16-QAM | 1/2 |
| 406 | 4 | **4096-QAM** | **1024-QAM** | **256-QAM** | 16-QAM | 1/2 |
| 407 | 4 | **4096-QAM** | **4096-QAM** | **256-QAM** | 16-QAM | 1/2 |
| 408 | 4 | **1024-QAM** | **1024-QAM** | **1024-QAM** | 16-QAM | 1/2 |
| 409 | 4 | **4096-QAM** | **1024-QAM** | **1024-QAM** | 16-QAM | 1/2 |
| 410 | 4 | **4096-QAM** | **4096-QAM** | **1024-QAM** | 16-QAM | 1/2 |
| 411 | 4 | **4096-QAM** | **4096-QAM** | **4096-QAM** | 16-QAM | 1/2 |
| 412 | 4 | **256-QAM** | **64-QAM** | **64-QAM** | **64-QAM** | 1/2 |
| 413 | 4 | **1024-QAM** | **64-QAM** | **64-QAM** | **64-QAM** | 1/2 |
| 414 | 4 | **4096-QAM** | **64-QAM** | **64-QAM** | **64-QAM** | 1/2 |
| 415 | 4 | **256-QAM** | **256-QAM** | **64-QAM** | **64-QAM** | 1/2 |
| 416 | 4 | **1024-QAM** | **256-QAM** | **64-QAM** | **64-QAM** | 1/2 |
| 417 | 4 | **4096-QAM** | **256-QAM** | **64-QAM** | **64-QAM** | 1/2 |
| 418 | 4 | **1024-QAM** | **1024-QAM** | **64-QAM** | **64-QAM** | 1/2 |
| 419 | 4 | **4096-QAM** | **1024-QAM** | **64-QAM** | **64-QAM** | 1/2 |
| 420 | 4 | **4096-QAM** | **4096-QAM** | **64-QAM** | **64-QAM** | 1/2 |
| 421 | 4 | **256-QAM** | **256-QAM** | **256-QAM** | **64-QAM** | 1/2 |
| 422 | 4 | **1024-QAM** | **256-QAM** | **256-QAM** | **64-QAM** | 1/2 |
| 423 | 4 | **4096-QAM** | **256-QAM** | **256-QAM** | **64-QAM** | 1/2 |
| 424 | 4 | **1024-QAM** | **1024-QAM** | **256-QAM** | **64-QAM** | 1/2 |
| 425 | 4 | **4096-QAM** | **1024-QAM** | **256-QAM** | **64-QAM** | 1/2 |
| 426 | 4 | **4096-QAM** | **4096-QAM** | **256-QAM** | **64-QAM** | 1/2 |
| 427 | 4 | **1024-QAM** | **1024-QAM** | **1024-QAM** | **64-QAM** | 1/2 |
| 428 | 4 | **4096-QAM** | **1024-QAM** | **1024-QAM** | **64-QAM** | 1/2 |
| 429 | 4 | **4096-QAM** | **4096-QAM** | **1024-QAM** | **64-QAM** | 1/2 |
| 430 | 4 | **4096-QAM** | **4096-QAM** | **4096-QAM** | **64-QAM** | 1/2 |
| 431 | 4 | **1024-QAM** | **256-QAM** | **256-QAM** | **256-QAM** | 1/2 |
| 432 | 4 | **4096-QAM** | **256-QAM** | **256-QAM** | **256-QAM** | 1/2 |
| 433 | 4 | **1024-QAM** | **1024-QAM** | **256-QAM** | **256-QAM** | 1/2 |
| 434 | 4 | **4096-QAM** | **1024-QAM** | **256-QAM** | **256-QAM** | 1/2 |
| 435 | 4 | **4096-QAM** | **4096-QAM** | **256-QAM** | **256-QAM** | 1/2 |
| 436 | 4 | **1024-QAM** | **1024-QAM** | **1024-QAM** | **256-QAM** | 1/2 |
| 437 | 4 | **4096-QAM** | **1024-QAM** | **1024-QAM** | **256-QAM** | 1/2 |
| 438 | 4 | **4096-QAM** | **4096-QAM** | **1024-QAM** | **256-QAM** | 1/2 |
| 439 | 4 | **4096-QAM** | **4096-QAM** | **4096-QAM** | **256-QAM** | 1/2 |
| 440 | 4 | **4096-QAM** | **1024-QAM** | **1024-QAM** | **1024-QAM** | 1/2 |
| 441 | 4 | **4096-QAM** | **4096-QAM** | **1024-QAM** | **1024-QAM** | 1/2 |
| 442 | 4 | **4096-QAM** | **4096-QAM** | **4096-QAM** | **1024-QAM** | 1/2 |
| 443 | 4 | 16-QAM | QPSK | QPSK | QPSK | 3/4 |
| 444 | 4 | 64-QAM | QPSK | QPSK | QPSK | 3/4 |
| 445 | 4 | 256-QAM | QPSK | QPSK | QPSK | 3/4 |
| 446 | 4 | 1024-QAM | QPSK | QPSK | QPSK | 3/4 |
| 447 | 4 | 4096-QAM | QPSK | QPSK | QPSK | 3/4 |
| 448 | 4 | 16-QAM | 16-QAM | QPSK | QPSK | 3/4 |
| 449 | 4 | 64-QAM | 16-QAM | QPSK | QPSK | 3/4 |
| 450 | 4 | 256-QAM | 16-QAM | QPSK | QPSK | 3/4 |
| 451 | 4 | 1024-QAM | 16-QAM | QPSK | QPSK | 3/4 |
| 452 | 4 | 4096-QAM | 16-QAM | QPSK | QPSK | 3/4 |
| 453 | 4 | 64-QAM | 64-QAM | QPSK | QPSK | 3/4 |
| 454 | 4 | 256-QAM | 64-QAM | QPSK | QPSK | 3/4 |
| 455 | 4 | 1024-QAM | 64-QAM | QPSK | QPSK | 3/4 |
| 456 | 4 | 4096-QAM | 64-QAM | QPSK | QPSK | 3/4 |
| 457 | 4 | 256-QAM | 256-QAM | QPSK | QPSK | 3/4 |
| 458 | 4 | 1024-QAM | 256-QAM | QPSK | QPSK | 3/4 |
| 459 | 4 | 4096-QAM | 256-QAM | QPSK | QPSK | 3/4 |
| 460 | 4 | 1024-QAM | 1024-QAM | QPSK | QPSK | 3/4 |
| 461 | 4 | 4096-QAM | 1024-QAM | QPSK | QPSK | 3/4 |
| 462 | 4 | 4096-QAM | 4096-QAM | QPSK | QPSK | 3/4 |
| 463 | 4 | 16-QAM | 16-QAM | 16-QAM | QPSK | 3/4 |
| 464 | 4 | 64-QAM | 16-QAM | 16-QAM | QPSK | 3/4 |
| 465 | 4 | 256-QAM | 16-QAM | 16-QAM | QPSK | 3/4 |
| 466 | 4 | 1024-QAM | 16-QAM | 16-QAM | QPSK | 3/4 |
| 467 | 4 | 4096-QAM | 16-QAM | 16-QAM | QPSK | 3/4 |
| 468 | 4 | 64-QAM | 64-QAM | 16-QAM | QPSK | 3/4 |
| 469 | 4 | 256-QAM | 64-QAM | 16-QAM | QPSK | 3/4 |
| 470 | 4 | 1024-QAM | 64-QAM | 16-QAM | QPSK | 3/4 |
| 471 | 4 | 4096-QAM | 64-QAM | 16-QAM | QPSK | 3/4 |
| 472 | 4 | 256-QAM | 256-QAM | 16-QAM | QPSK | 3/4 |
| 473 | 4 | 1024-QAM | 256-QAM | 16-QAM | QPSK | 3/4 |
| 474 | 4 | 4096-QAM | 256-QAM | 16-QAM | QPSK | 3/4 |
| 475 | 4 | 1024-QAM | 1024-QAM | 16-QAM | QPSK | 3/4 |
| 476 | 4 | 4096-QAM | 1024-QAM | 16-QAM | QPSK | 3/4 |
| 477 | 4 | 4096-QAM | 4096-QAM | 16-QAM | QPSK | 3/4 |
| 478 | 4 | 64-QAM | 64-QAM | 64-QAM | QPSK | 3/4 |
| 479 | 4 | 256-QAM | 64-QAM | 64-QAM | QPSK | 3/4 |
| 480 | 4 | 1024-QAM | 64-QAM | 64-QAM | QPSK | 3/4 |
| 481 | 4 | 4096-QAM | 64-QAM | 64-QAM | QPSK | 3/4 |
| 482 | 4 | 256-QAM | 256-QAM | 64-QAM | QPSK | 3/4 |
| 483 | 4 | 1024-QAM | 256-QAM | 64-QAM | QPSK | 3/4 |
| 484 | 4 | 4096-QAM | 256-QAM | 64-QAM | QPSK | 3/4 |
| 485 | 4 | 1024-QAM | 1024-QAM | 64-QAM | QPSK | 3/4 |
| 486 | 4 | 4096-QAM | 1024-QAM | 64-QAM | QPSK | 3/4 |
| 487 | 4 | 4096-QAM | 4096-QAM | 64-QAM | QPSK | 3/4 |
| 488 | 4 | 256-QAM | 256-QAM | 256-QAM | QPSK | 3/4 |
| 489 | 4 | 1024-QAM | 256-QAM | 256-QAM | QPSK | 3/4 |
| 490 | 4 | 4096-QAM | 256-QAM | 256-QAM | QPSK | 3/4 |
| 491 | 4 | 1024-QAM | 1024-QAM | 256-QAM | QPSK | 3/4 |
| 492 | 4 | 4096-QAM | 1024-QAM | 256-QAM | QPSK | 3/4 |
| 493 | 4 | 4096-QAM | 4096-QAM | 256-QAM | QPSK | 3/4 |
| 494 | 4 | 1024-QAM | 1024-QAM | 1024-QAM | QPSK | 3/4 |
| 495 | 4 | 4096-QAM | 1024-QAM | 1024-QAM | QPSK | 3/4 |
| 496 | 4 | 4096-QAM | 4096-QAM | 1024-QAM | QPSK | 3/4 |
| 497 | 4 | 4096-QAM | 4096-QAM | 4096-QAM | QPSK | 3/4 |
| 498 | 4 | 64-QAM | 16-QAM | 16-QAM | 16-QAM | 3/4 |
| 499 | 4 | 256-QAM | 16-QAM | 16-QAM | 16-QAM | 3/4 |
| 500 | 4 | 1024-QAM | 16-QAM | 16-QAM | 16-QAM | 3/4 |
| 501 | 4 | 4096-QAM | 16-QAM | 16-QAM | 16-QAM | 3/4 |
| 502 | 4 | 64-QAM | 64-QAM | 16-QAM | 16-QAM | 3/4 |
| 503 | 4 | 256-QAM | 64-QAM | 16-QAM | 16-QAM | 3/4 |
| 504 | 4 | 1024-QAM | 64-QAM | 16-QAM | 16-QAM | 3/4 |
| 505 | 4 | 4096-QAM | 64-QAM | 16-QAM | 16-QAM | 3/4 |
| 506 | 4 | 256-QAM | 256-QAM | 16-QAM | 16-QAM | 3/4 |
| 507 | 4 | 1024-QAM | 256-QAM | 16-QAM | 16-QAM | 3/4 |
| 508 | 4 | 4096-QAM | 256-QAM | 16-QAM | 16-QAM | 3/4 |
| 509 | 4 | 1024-QAM | 1024-QAM | 16-QAM | 16-QAM | 3/4 |
| 510 | 4 | 4096-QAM | 1024-QAM | 16-QAM | 16-QAM | 3/4 |
| 511 | 4 | 4096-QAM | 4096-QAM | 16-QAM | 16-QAM | 3/4 |
| 512 | 4 | 64-QAM | 64-QAM | 64-QAM | 16-QAM | 3/4 |
| 513 | 4 | 256-QAM | 64-QAM | 64-QAM | 16-QAM | 3/4 |
| 514 | 4 | 1024-QAM | 64-QAM | 64-QAM | 16-QAM | 3/4 |
| 515 | 4 | 4096-QAM | 64-QAM | 64-QAM | 16-QAM | 3/4 |
| 516 | 4 | 256-QAM | 256-QAM | 64-QAM | 16-QAM | 3/4 |
| 517 | 4 | 1024-QAM | 256-QAM | 64-QAM | 16-QAM | 3/4 |
| 518 | 4 | 4096-QAM | 256-QAM | 64-QAM | 16-QAM | 3/4 |
| 519 | 4 | 1024-QAM | 1024-QAM | 64-QAM | 16-QAM | 3/4 |
| 520 | 4 | 4096-QAM | 1024-QAM | 64-QAM | 16-QAM | 3/4 |
| 521 | 4 | 4096-QAM | 4096-QAM | 64-QAM | 16-QAM | 3/4 |
| 522 | 4 | 256-QAM | 256-QAM | 256-QAM | 16-QAM | 3/4 |
| 523 | 4 | 1024-QAM | 256-QAM | 256-QAM | 16-QAM | 3/4 |
| 524 | 4 | 4096-QAM | 256-QAM | 256-QAM | 16-QAM | 3/4 |
| 525 | 4 | 1024-QAM | 1024-QAM | 256-QAM | 16-QAM | 3/4 |
| 526 | 4 | 4096-QAM | 1024-QAM | 256-QAM | 16-QAM | 3/4 |
| 527 | 4 | 4096-QAM | 4096-QAM | 256-QAM | 16-QAM | 3/4 |
| 528 | 4 | 1024-QAM | 1024-QAM | 1024-QAM | 16-QAM | 3/4 |
| 529 | 4 | 4096-QAM | 1024-QAM | 1024-QAM | 16-QAM | 3/4 |
| 530 | 4 | 4096-QAM | 4096-QAM | 1024-QAM | 16-QAM | 3/4 |
| 531 | 4 | 4096-QAM | 4096-QAM | 4096-QAM | 16-QAM | 3/4 |
| 532 | 4 | 256-QAM | 64-QAM | 64-QAM | 64-QAM | 3/4 |
| 533 | 4 | 1024-QAM | 64-QAM | 64-QAM | 64-QAM | 3/4 |
| 534 | 4 | 4096-QAM | 64-QAM | 64-QAM | 64-QAM | 3/4 |
| 535 | 4 | 256-QAM | 256-QAM | 64-QAM | 64-QAM | 3/4 |
| 536 | 4 | 1024-QAM | 256-QAM | 64-QAM | 64-QAM | 3/4 |
| 537 | 4 | 4096-QAM | 256-QAM | 64-QAM | 64-QAM | 3/4 |
| 538 | 4 | 1024-QAM | 1024-QAM | 64-QAM | 64-QAM | 3/4 |
| 539 | 4 | 4096-QAM | 1024-QAM | 64-QAM | 64-QAM | 3/4 |
| 540 | 4 | 4096-QAM | 4096-QAM | 64-QAM | 64-QAM | 3/4 |
| 541 | 4 | 256-QAM | 256-QAM | 256-QAM | 64-QAM | 3/4 |
| 542 | 4 | 1024-QAM | 256-QAM | 256-QAM | 64-QAM | 3/4 |
| 543 | 4 | 4096-QAM | 256-QAM | 256-QAM | 64-QAM | 3/4 |
| 544 | 4 | 1024-QAM | 1024-QAM | 256-QAM | 64-QAM | 3/4 |
| 545 | 4 | 4096-QAM | 1024-QAM | 256-QAM | 64-QAM | 3/4 |
| 546 | 4 | 4096-QAM | 4096-QAM | 256-QAM | 64-QAM | 3/4 |
| 547 | 4 | 1024-QAM | 1024-QAM | 1024-QAM | 64-QAM | 3/4 |
| 548 | 4 | 4096-QAM | 1024-QAM | 1024-QAM | 64-QAM | 3/4 |
| 549 | 4 | 4096-QAM | 4096-QAM | 1024-QAM | 64-QAM | 3/4 |
| 550 | 4 | 4096-QAM | 4096-QAM | 4096-QAM | 64-QAM | 3/4 |
| 551 | 4 | 1024-QAM | 256-QAM | 256-QAM | 256-QAM | 3/4 |
| 552 | 4 | 4096-QAM | 256-QAM | 256-QAM | 256-QAM | 3/4 |
| 553 | 4 | 1024-QAM | 1024-QAM | 256-QAM | 256-QAM | 3/4 |
| 554 | 4 | 4096-QAM | 1024-QAM | 256-QAM | 256-QAM | 3/4 |
| 555 | 4 | 4096-QAM | 4096-QAM | 256-QAM | 256-QAM | 3/4 |
| 556 | 4 | 1024-QAM | 1024-QAM | 1024-QAM | 256-QAM | 3/4 |
| 557 | 4 | 4096-QAM | 1024-QAM | 1024-QAM | 256-QAM | 3/4 |
| 558 | 4 | 4096-QAM | 4096-QAM | 1024-QAM | 256-QAM | 3/4 |
| 559 | 4 | 4096-QAM | 4096-QAM | 4096-QAM | 256-QAM | 3/4 |
| 560 | 4 | 4096-QAM | 1024-QAM | 1024-QAM | 1024-QAM | 3/4 |
| 561 | 4 | 4096-QAM | 4096-QAM | 1024-QAM | 1024-QAM | 3/4 |
| 562 | 4 | 4096-QAM | 4096-QAM | 4096-QAM | 1024-QAM | 3/4 |
| 563 | 4 | **16-QAM** | **QPSK** | **QPSK** | **QPSK** | 5/6 |
| 564 | 4 | 64-QAM | **QPSK** | **QPSK** | **QPSK** | 5/6 |
| 565 | 4 | 256-QAM | **QPSK** | **QPSK** | **QPSK** | 5/6 |
| 566 | 4 | 1024-QAM | **QPSK** | **QPSK** | **QPSK** | 5/6 |
| 567 | 4 | 4096-QAM | **QPSK** | **QPSK** | **QPSK** | 5/6 |
| 568 | 4 | **16-QAM** | **16-QAM** | **QPSK** | **QPSK** | 5/6 |
| 569 | 4 | 64-QAM | **16-QAM** | **QPSK** | **QPSK** | 5/6 |
| 570 | 4 | 256-QAM | **16-QAM** | **QPSK** | **QPSK** | 5/6 |
| 571 | 4 | 1024-QAM | **16-QAM** | **QPSK** | **QPSK** | 5/6 |
| 572 | 4 | 4096-QAM | **16-QAM** | **QPSK** | **QPSK** | 5/6 |
| 573 | 4 | 64-QAM | 64-QAM | **QPSK** | **QPSK** | 5/6 |
| 574 | 4 | 256-QAM | 64-QAM | **QPSK** | **QPSK** | 5/6 |
| 575 | 4 | 1024-QAM | 64-QAM | **QPSK** | **QPSK** | 5/6 |
| 576 | 4 | 4096-QAM | 64-QAM | **QPSK** | **QPSK** | 5/6 |
| 577 | 4 | 256-QAM | 256-QAM | **QPSK** | **QPSK** | 5/6 |
| 578 | 4 | 1024-QAM | 256-QAM | **QPSK** | **QPSK** | 5/6 |
| 579 | 4 | 4096-QAM | 256-QAM | **QPSK** | **QPSK** | 5/6 |
| 580 | 4 | 1024-QAM | 1024-QAM | **QPSK** | **QPSK** | 5/6 |
| 581 | 4 | 4096-QAM | 1024-QAM | **QPSK** | **QPSK** | 5/6 |
| 582 | 4 | 4096-QAM | 4096-QAM | **QPSK** | **QPSK** | 5/6 |
| 583 | 4 | **16-QAM** | **16-QAM** | **16-QAM** | **QPSK** | 5/6 |
| 584 | 4 | 64-QAM | **16-QAM** | **16-QAM** | **QPSK** | 5/6 |
| 585 | 4 | 256-QAM | **16-QAM** | **16-QAM** | **QPSK** | 5/6 |
| 586 | 4 | 1024-QAM | **16-QAM** | **16-QAM** | **QPSK** | 5/6 |
| 587 | 4 | 4096-QAM | **16-QAM** | **16-QAM** | **QPSK** | 5/6 |
| 588 | 4 | 64-QAM | 64-QAM | **16-QAM** | **QPSK** | 5/6 |
| 589 | 4 | 256-QAM | 64-QAM | **16-QAM** | **QPSK** | 5/6 |
| 590 | 4 | 1024-QAM | 64-QAM | **16-QAM** | **QPSK** | 5/6 |
| 591 | 4 | 4096-QAM | 64-QAM | **16-QAM** | **QPSK** | 5/6 |
| 592 | 4 | 256-QAM | 256-QAM | **16-QAM** | **QPSK** | 5/6 |
| 593 | 4 | 1024-QAM | 256-QAM | **16-QAM** | **QPSK** | 5/6 |
| 594 | 4 | 4096-QAM | 256-QAM | **16-QAM** | **QPSK** | 5/6 |
| 595 | 4 | 1024-QAM | 1024-QAM | **16-QAM** | **QPSK** | 5/6 |
| 596 | 4 | 4096-QAM | 1024-QAM | **16-QAM** | **QPSK** | 5/6 |
| 597 | 4 | 4096-QAM | 4096-QAM | **16-QAM** | **QPSK** | 5/6 |
| 598 | 4 | 64-QAM | 64-QAM | 64-QAM | **QPSK** | 5/6 |
| 599 | 4 | 256-QAM | 64-QAM | 64-QAM | **QPSK** | 5/6 |
| 600 | 4 | 1024-QAM | 64-QAM | 64-QAM | **QPSK** | 5/6 |
| 601 | 4 | 4096-QAM | 64-QAM | 64-QAM | **QPSK** | 5/6 |
| 602 | 4 | 256-QAM | 256-QAM | 64-QAM | **QPSK** | 5/6 |
| 603 | 4 | 1024-QAM | 256-QAM | 64-QAM | **QPSK** | 5/6 |
| 604 | 4 | 4096-QAM | 256-QAM | 64-QAM | **QPSK** | 5/6 |
| 605 | 4 | 1024-QAM | 1024-QAM | 64-QAM | **QPSK** | 5/6 |
| 606 | 4 | 4096-QAM | 1024-QAM | 64-QAM | **QPSK** | 5/6 |
| 607 | 4 | 4096-QAM | 4096-QAM | 64-QAM | **QPSK** | 5/6 |
| 608 | 4 | 256-QAM | 256-QAM | 256-QAM | **QPSK** | 5/6 |
| 609 | 4 | 1024-QAM | 256-QAM | 256-QAM | **QPSK** | 5/6 |
| 610 | 4 | 4096-QAM | 256-QAM | 256-QAM | **QPSK** | 5/6 |
| 611 | 4 | 1024-QAM | 1024-QAM | 256-QAM | **QPSK** | 5/6 |
| 612 | 4 | 4096-QAM | 1024-QAM | 256-QAM | **QPSK** | 5/6 |
| 613 | 4 | 4096-QAM | 4096-QAM | 256-QAM | **QPSK** | 5/6 |
| 614 | 4 | 1024-QAM | 1024-QAM | 1024-QAM | **QPSK** | 5/6 |
| 615 | 4 | 4096-QAM | 1024-QAM | 1024-QAM | **QPSK** | 5/6 |
| 616 | 4 | 4096-QAM | 4096-QAM | 1024-QAM | **QPSK** | 5/6 |
| 617 | 4 | 4096-QAM | 4096-QAM | 4096-QAM | **QPSK** | 5/6 |
| 618 | 4 | 64-QAM | **16-QAM** | **16-QAM** | **16-QAM** | 5/6 |
| 619 | 4 | 256-QAM | **16-QAM** | **16-QAM** | **16-QAM** | 5/6 |
| 620 | 4 | 1024-QAM | **16-QAM** | **16-QAM** | **16-QAM** | 5/6 |
| 621 | 4 | 4096-QAM | **16-QAM** | **16-QAM** | **16-QAM** | 5/6 |
| 622 | 4 | 64-QAM | 64-QAM | **16-QAM** | **16-QAM** | 5/6 |
| 623 | 4 | 256-QAM | 64-QAM | **16-QAM** | **16-QAM** | 5/6 |
| 624 | 4 | 1024-QAM | 64-QAM | **16-QAM** | **16-QAM** | 5/6 |
| 625 | 4 | 4096-QAM | 64-QAM | **16-QAM** | **16-QAM** | 5/6 |
| 626 | 4 | 256-QAM | 256-QAM | **16-QAM** | **16-QAM** | 5/6 |
| 627 | 4 | 1024-QAM | 256-QAM | **16-QAM** | **16-QAM** | 5/6 |
| 628 | 4 | 4096-QAM | 256-QAM | **16-QAM** | **16-QAM** | 5/6 |
| 629 | 4 | 1024-QAM | 1024-QAM | **16-QAM** | **16-QAM** | 5/6 |
| 630 | 4 | 4096-QAM | 1024-QAM | **16-QAM** | **16-QAM** | 5/6 |
| 631 | 4 | 4096-QAM | 4096-QAM | **16-QAM** | **16-QAM** | 5/6 |
| 632 | 4 | 64-QAM | 64-QAM | 64-QAM | **16-QAM** | 5/6 |
| 633 | 4 | 256-QAM | 64-QAM | 64-QAM | **16-QAM** | 5/6 |
| 634 | 4 | 1024-QAM | 64-QAM | 64-QAM | **16-QAM** | 5/6 |
| 635 | 4 | 4096-QAM | 64-QAM | 64-QAM | **16-QAM** | 5/6 |
| 636 | 4 | 256-QAM | 256-QAM | 64-QAM | **16-QAM** | 5/6 |
| 637 | 4 | 1024-QAM | 256-QAM | 64-QAM | **16-QAM** | 5/6 |
| 638 | 4 | 4096-QAM | 256-QAM | 64-QAM | **16-QAM** | 5/6 |
| 639 | 4 | 1024-QAM | 1024-QAM | 64-QAM | **16-QAM** | 5/6 |
| 640 | 4 | 4096-QAM | 1024-QAM | 64-QAM | **16-QAM** | 5/6 |
| 641 | 4 | 4096-QAM | 4096-QAM | 64-QAM | **16-QAM** | 5/6 |
| 642 | 4 | 256-QAM | 256-QAM | 256-QAM | **16-QAM** | 5/6 |
| 643 | 4 | 1024-QAM | 256-QAM | 256-QAM | **16-QAM** | 5/6 |
| 644 | 4 | 4096-QAM | 256-QAM | 256-QAM | **16-QAM** | 5/6 |
| 645 | 4 | 1024-QAM | 1024-QAM | 256-QAM | **16-QAM** | 5/6 |
| 646 | 4 | 4096-QAM | 1024-QAM | 256-QAM | **16-QAM** | 5/6 |
| 647 | 4 | 4096-QAM | 4096-QAM | 256-QAM | **16-QAM** | 5/6 |
| 648 | 4 | 1024-QAM | 1024-QAM | 1024-QAM | **16-QAM** | 5/6 |
| 649 | 4 | 4096-QAM | 1024-QAM | 1024-QAM | **16-QAM** | 5/6 |
| 650 | 4 | 4096-QAM | 4096-QAM | 1024-QAM | **16-QAM** | 5/6 |
| 651 | 4 | 4096-QAM | 4096-QAM | 4096-QAM | **16-QAM** | 5/6 |
| 652 | 4 | 256-QAM | 64-QAM | 64-QAM | 64-QAM | 5/6 |
| 653 | 4 | 1024-QAM | 64-QAM | 64-QAM | 64-QAM | 5/6 |
| 654 | 4 | 4096-QAM | 64-QAM | 64-QAM | 64-QAM | 5/6 |
| 655 | 4 | 256-QAM | 256-QAM | 64-QAM | 64-QAM | 5/6 |
| 656 | 4 | 1024-QAM | 256-QAM | 64-QAM | 64-QAM | 5/6 |
| 657 | 4 | 4096-QAM | 256-QAM | 64-QAM | 64-QAM | 5/6 |
| 658 | 4 | 1024-QAM | 1024-QAM | 64-QAM | 64-QAM | 5/6 |
| 659 | 4 | 4096-QAM | 1024-QAM | 64-QAM | 64-QAM | 5/6 |
| 660 | 4 | 4096-QAM | 4096-QAM | 64-QAM | 64-QAM | 5/6 |
| 661 | 4 | 256-QAM | 256-QAM | 256-QAM | 64-QAM | 5/6 |
| 662 | 4 | 1024-QAM | 256-QAM | 256-QAM | 64-QAM | 5/6 |
| 663 | 4 | 4096-QAM | 256-QAM | 256-QAM | 64-QAM | 5/6 |
| 664 | 4 | 1024-QAM | 1024-QAM | 256-QAM | 64-QAM | 5/6 |
| 665 | 4 | 4096-QAM | 1024-QAM | 256-QAM | 64-QAM | 5/6 |
| 666 | 4 | 4096-QAM | 4096-QAM | 256-QAM | 64-QAM | 5/6 |
| 667 | 4 | 1024-QAM | 1024-QAM | 1024-QAM | 64-QAM | 5/6 |
| 668 | 4 | 4096-QAM | 1024-QAM | 1024-QAM | 64-QAM | 5/6 |
| 669 | 4 | 4096-QAM | 4096-QAM | 1024-QAM | 64-QAM | 5/6 |
| 670 | 4 | 4096-QAM | 4096-QAM | 4096-QAM | 64-QAM | 5/6 |
| 671 | 4 | 1024-QAM | 256-QAM | 256-QAM | 256-QAM | 5/6 |
| 672 | 4 | 4096-QAM | 256-QAM | 256-QAM | 256-QAM | 5/6 |
| 673 | 4 | 1024-QAM | 1024-QAM | 256-QAM | 256-QAM | 5/6 |
| 674 | 4 | 4096-QAM | 1024-QAM | 256-QAM | 256-QAM | 5/6 |
| 675 | 4 | 4096-QAM | 4096-QAM | 256-QAM | 256-QAM | 5/6 |
| 676 | 4 | 1024-QAM | 1024-QAM | 1024-QAM | 256-QAM | 5/6 |
| 677 | 4 | 4096-QAM | 1024-QAM | 1024-QAM | 256-QAM | 5/6 |
| 678 | 4 | 4096-QAM | 4096-QAM | 1024-QAM | 256-QAM | 5/6 |
| 679 | 4 | 4096-QAM | 4096-QAM | 4096-QAM | 256-QAM | 5/6 |
| 680 | 4 | 4096-QAM | 1024-QAM | 1024-QAM | 1024-QAM | 5/6 |
| 681 | 4 | 4096-QAM | 4096-QAM | 1024-QAM | 1024-QAM | 5/6 |
| 682 | 4 | 4096-QAM | 4096-QAM | 4096-QAM | 1024-QAM | 5/6 |
| 683 to END (for example, END=1027) | Reserved | | | | | |

It is uniformly noted herein that tables obtained by adding, deleting, transforming, or modifying the UMQM index tables (for example, Table 12 to Table 18) shown in this specification belong to UMQM index tables protected in this application.

In addition, there are the following methods for distinguishing whether a user information field corresponds to the EQM or the UEQM. One is to perform mode indication by using 1 bit or more than 1 bit. For example, the 1 bit (for example, an EQM/UEQM field) indicates whether the user information field corresponds to the EQM or the UEQM. The indication may be located in a common field, or may be located in the user information field. Further, different indication methods may be used for the EQM and the UEQM. For example, for the EQM, a method for indicating an MCS used by each spatial stream in an existing standard may be used, to simplify implementation complexity of the device. Under the EQM, a beamforming subfield indicates whether the second device performs beamforming. In an implementation, for the UEQM, because beamforming is already used by default, under the UEQM, the user information field may use the subfield to carry an additional required UEQM MCS field.

It should be noted that in addition to UEQM for different spatial streams, the foregoing manner may be further used for UEQM modulation of more than one RU or MRU allocated to one user, and each spatial stream may be replaced with a different RU or MRU. Because the RU or the MRU has a predetermined frequency domain order, entries in the table may be separately designed for different QAM orders. For example, entries corresponding to 16-QAM and QPSK indicate frequencies in ascending order, where a first RU uses 16-QAM, and a second RU uses QPSK; or entries corresponding to QPSK and 16-QAM indicate frequencies in ascending order, where a first RU uses QPSK, and a second RU uses 16-QAM.

The following describes, with reference to the accompanying drawings, a structure of a communication apparatus that can implement the modulation and coding scheme indication method provided in embodiments of this application.

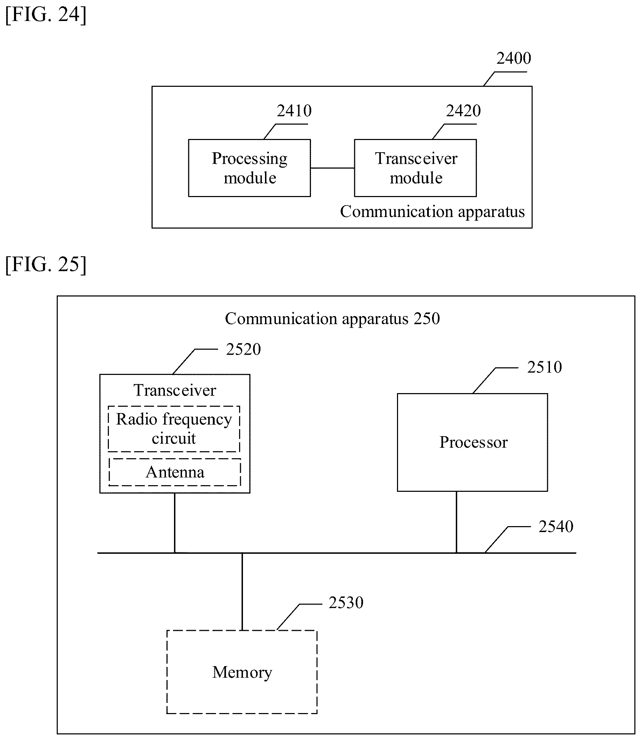

FIG. 24 is a diagram of a structure of a communication apparatus 2400 according to an embodiment of this application. The communication apparatus 2400 may correspondingly implement functions or steps implemented by the second device in the foregoing method embodiments, or may correspondingly implement functions or steps implemented by the first device in the foregoing method embodiments. The communication apparatus may include a processing module 2410 and a transceiver module 2420. Optionally, the communication apparatus may further include a storage unit. The storage unit may be configured to store instructions (code or a program) and/or data. The processing module 2410 and the transceiver module 2420 may be coupled to the storage unit. For example, the processing module 2410 may read the instructions (the code or the program) and/or the data in the storage unit, to implement a corresponding method. The foregoing modules may be disposed independently, or may be partially or completely integrated. For example, the transceiver module 2420 may include a sending module and a receiving module. The sending module may be a transmitter, and the receiving module may be a receiver. An entity corresponding to the transceiver module 2420 may be a transceiver, or may be a communication interface.

In some possible implementations, the communication apparatus 2400 can correspondingly implement behavior and functions of the second device in the foregoing method embodiments. For example, the communication apparatus 2400 may be the second device, or may be a component (for example, a chip or a circuit) used in the second device. For example, the transceiver module 2420 may be configured to perform all receiving or sending operations performed by the second device in the embodiments in FIG. 2 and FIG. 15, for example, step 202 in the embodiment shown in FIG. 2, step 1502 in the embodiment shown in FIG. 15, and/or another process used to support the technology described in this specification. The processing module 2410 is configured to perform all operations performed by the second device other than the receiving and sending operations in the embodiments shown in FIG. 2 and FIG. 15, for example, step 201 in the embodiment shown in FIG. 2 and step 1501 in the embodiment shown in FIG. 15.

In some possible implementations, the communication apparatus 2400 can correspondingly implement behavior and functions of the first device in the foregoing method embodiments. For example, the communication apparatus 2400 may be the first device, or may be a component (for example, a chip or a circuit) used in the first device. For example, the transceiver module 2420 may be configured to perform all receiving or sending operations performed by the first device in the embodiments in FIG. 2 and FIG. 15, for example, step 202 in the embodiment shown in FIG. 2, step 1502 in the embodiment shown in FIG. 15, and/or another process used to support the technology described in this specification. The processing module 2410 is configured to perform all operations performed by the first device other than the receiving and sending operations, for example, step 203 in the embodiment shown in FIG. 2 and step 1503 in the embodiment shown in FIG. 15.

FIG. 25 is a diagram of a structure of another communication apparatus 250 according to an embodiment of this application. The communication apparatus in FIG. 25 may be the first device, or may be the second device.

As shown in FIG. 25, the communication apparatus 250 includes at least one processor 2510 and a transceiver 2520.

In some embodiments of this application, the processor 2510 and the transceiver 2520 may be configured to perform functions, operations, or the like performed by the second device. For example, the transceiver 2520 performs all receiving or sending operations performed by the second device in the embodiments in FIG. 2 and FIG. 15. For example, the processor 2510 is configured to perform all operations performed by the second device other than the receiving and sending operations in the embodiments in FIG. 2 and FIG. 15.

In some embodiments of this application, the processor 2510 and the transceiver 2520 may be configured to perform functions, operations, or the like performed by the first device. For example, the transceiver 2520 performs all receiving or sending operations performed by the first device in embodiments in FIG. 2 and FIG. 15. The processor 2510 is configured to perform all operations performed by the first device other than the receiving and sending operations, for example, step 203 in the embodiment shown in FIG. 2 and step 1503 in the embodiment shown in FIG. 15.

The transceiver 2520 is configured to communicate with another device/apparatus through a transmission medium. The processor 2510 receives/sends data and/or signaling by using the transceiver 2520, and is configured to implement the methods in the foregoing method embodiments. The processor 2510 may implement functions of the processing module 2410, and the transceiver 2520 may implement functions of the transceiver module 2420.

Optionally, the transceiver 2520 may include a radio frequency circuit and an antenna. The radio frequency circuit is mainly configured to: perform conversion between a baseband signal and a radio frequency signal, and process the radio frequency signal. The antenna is mainly configured to receive/send a radio frequency signal in a form of an electromagnetic wave. An input/output apparatus, for example, a touchscreen, a display, or a keyboard, is mainly configured to: receive data input by a user and output data to the user.

Optionally, the communication apparatus 250 may further include at least one memory 2530, configured to store program instructions and/or data. The memory 2530 is coupled to the processor 2510. The coupling in embodiments of this application may be an indirect coupling or a communication connection between apparatuses, units, or modules in an electrical form, a mechanical form, or another form, and is used for information exchange between the apparatuses, the units, or the modules. The processor 2510 may operate with the memory 2530 collaboratively. The processor 2510 may execute the program instructions stored in the memory 2530. At least one of the memory 2510 may be included in the processor.

After the communication apparatus 250 is powered on, the processor 2510 may read a software program in the memory 2530, interpret and execute instructions of the software program, and process data of the software program. When data needs to be sent wirelessly, the processor 2510 performs baseband processing on the to-be-sent data, and then outputs a baseband signal to the radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 2510. The processor 2510 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 2520, the processor 2510, and the memory 2530 is not limited in embodiment of this application. In embodiments of this application, the memory 2530, the processor 2510, and the transceiver 2520 are connected through a bus 2540 in FIG. 25. The bus is represented by a bold line in FIG. 25, and a connection manner between other components is merely described as an example, and is not limited thereto. The bus may be classified into an address bus, a data bus, a control bus, and the like. For ease of representation, only one bold line is used for representation in FIG. 25, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

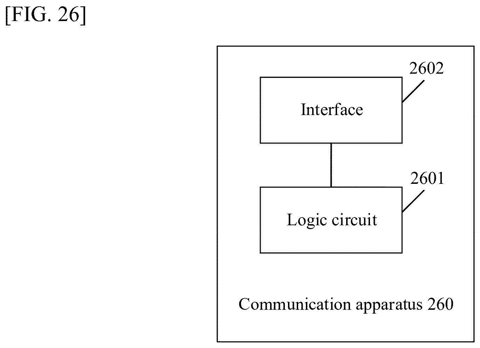

FIG. 26 is a diagram of a structure of another communication apparatus 260 according to an embodiment of this application. As shown in FIG. 26, the communication apparatus shown in FIG. 26 includes a logic circuit 2601 and an interface 2602. The processing module 2410 in FIG. 24 may be implemented by using the logic circuit 2601, and the transceiver module 2420 in FIG. 24 may be implemented by using the interface 2602. The logic circuit 2601 may be a chip, a processing circuit, an integrated circuit, a system on chip (system on chip, SoC), or the like. The interface 2602 may be a communication interface, an input/output interface, or the like. In this embodiment of this application, the logic circuit and the interface may alternatively be coupled to each other. A specific manner of connection between the logical circuit and the interface is not limited in embodiments of this application.

In some embodiments of this application, the logic circuit and the interface may be configured to perform functions, operations, or the like performed by the second device.

In some embodiments of this application, the logic circuit and the interface may be configured to perform functions, operations, or the like performed by the first device.

This application further provides a computer-readable storage medium. The computer-readable storage medium stores a computer program or instructions. When the computer program or instructions are run on a computer, the computer is enabled to perform the methods in the foregoing embodiments.

This application further provides a computer program product. The computer program product includes instructions or a computer program. When the instructions or computer program is run on a computer, the methods in the foregoing embodiments are performed.

This application further provides a communication system, including the first device and the second device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A modulation and coding scheme indication method, comprising:
generating a trigger frame, wherein the trigger frame is used to trigger a first device to send a physical layer protocol data unit PPDU, the trigger frame comprises a first field and a second field, the first field indicates a first modulation and coding scheme MCS group used by the PPDU sent by the first device, and the second field indicates a number of spatial streams corresponding to one or more MCSs in the first MCS group; and
sending the trigger frame.

2. A modulation and coding scheme indication method, comprising:
receiving a trigger frame, wherein the trigger frame is used to trigger a first device to send a physical layer protocol data unit PPDU, the trigger frame comprises a first field and a second field, the first field indicates a first modulation and coding scheme MCS group used by the PPDU sent by the first device, and the second field indicates a number of spatial streams corresponding to one or more MCSs in the first MCS group; and
sending the PPDU on a spatial stream of the first device, wherein indicated MCSs in the first MCS group are used on different spatial streams.

3. The method according to claim 1 or 2, wherein the second field indicates a spatial stream boundary corresponding to any MCS in the first MCS group.

4. The method according to claim 3, wherein the second field further indicates a total number of spatial streams corresponding to the first MCS group.

5. The method according to any one of claims 1 to 4, wherein a number of spatial streams that correspond to a same MCS and that are indicated by the second field is less than or equal to a first threshold, and the first threshold is a positive integer less than 8.

6. The method according to any one of claims 1 to 5, wherein when a value indicated by the second field is a first index, the second field indicates a number of spatial streams corresponding to one MCS in the first MCS group; or when a value indicated by the second field is a second index, the second field indicates a number of spatial streams corresponding to a plurality of MCSs in the first MCS group.

7. The method according to any one of claims 1 to 6, wherein the trigger frame further comprises a third field, and the third field indicates that a modulation scheme of the PPDU is unequal modulation or equal modulation.

8. The method according to any one of claims 1 to 7, wherein the trigger frame comprises a first user information field and a second user information field, the first user information field is associated with a first user, the second user information field is associated with a second user, the first user information field comprises the first field and the second field, the second user information field comprises a fourth field and a fifth field, the fourth field indicates a number of spatial streams of the second user, the fifth field indicates a same MCS used by all spatial streams of the second user, and a length of the first user information field is equal to a length of the second user information field.

9. A communication apparatus, comprising:
a processing module, configured to generate a trigger frame, wherein the trigger frame is used to trigger a first device to send a physical layer protocol data unit PPDU, the trigger frame comprises a first field and a second field, the first field indicates a first modulation and coding scheme MCS group used by the PPDU sent by the first device, and the second field indicates a number of spatial streams corresponding to one or more MCSs in the first MCS group; and
a transceiver module, configured to send the trigger frame.

10. A communication apparatus, comprising:
a transceiver module, configured to receive a trigger frame, wherein the trigger frame is used to trigger a first device to send a physical layer protocol data unit PPDU, the trigger frame comprises a first field and a second field, the first field indicates a first modulation and coding scheme MCS group used by the PPDU sent by the first device, and the second field indicates a number of spatial streams corresponding to one or more MCSs in the first MCS group; and
a processing module, configured to generate the PPDU, wherein
the transceiver module is further configured to send the PPDU on a spatial stream of the first device, wherein indicated MCSs in the first MCS group are used on different spatial streams.

11. The apparatus according to claim 9 or 10, wherein the second field indicates a spatial stream boundary corresponding to any MCS in the first MCS group.

12. The apparatus according to claim 11, wherein the second field further indicates a total number of spatial streams corresponding to the first MCS group.

13. The apparatus according to any one of claims 9 to 12, wherein a number of spatial streams that correspond to a same MCS and that are indicated by the second field is less than or equal to a first threshold, and the first threshold is a positive integer less than 8.

14. The apparatus according to any one of claims 9 to 13, wherein when a value indicated by the second field is a first index, the second field indicates a number of spatial streams corresponding to one MCS in the first MCS group; or when a value indicated by the second field is a second index, the second field indicates a number of spatial streams corresponding to a plurality of MCSs in the first MCS group.

15. The apparatus according to any one of claims 9 to 14, wherein the trigger frame further comprises a third field, and the third field indicates that a modulation scheme of the PPDU is unequal modulation or equal modulation.

16. The apparatus according to any one of claims 9 to 15, wherein the trigger frame comprises a first user information field and a second user information field, the first user information field is associated with a first user, the second user information field is associated with a second user, the first user information field comprises the first field and the second field, the second user information field comprises a fourth field and a fifth field, the fourth field indicates a number of spatial streams of the second user, the fifth field indicates a same MCS used by all spatial streams of the second user, and a length of the first user information field is equal to a length of the second user information field.

17. A communication apparatus, comprising a module configured to implement the method according to any one of claims 1 to 8.

18. A communication apparatus, comprising a processor, wherein the processor is coupled to a memory, the memory stores computer program instructions, and the processor is configured to execute the computer program instructions, so that the communication apparatus performs the method according to any one of claims 1 to 8.

19. A chip, comprising a processor and a communication interface, wherein the processor reads, through the communication interface, instructions stored in a memory, so that a communication apparatus comprising the chip performs the method according to any one of claims 1 to 8.

20. A computer-readable storage medium, wherein the computer-readable storage medium stores a computer program, the computer program comprises program instructions, and when the program instructions are executed, a computer is enabled to perform the method according to any one of claims 1 to 8.

21. A computer program product, wherein when the computer program product runs on a computer, the computer is enabled to perform the method according to any one of claims 1 to 8.
